# EUROPEAN PATENT APPLICATION

(11) **EP 4 224 294 A1**
(43) Date of publication of application: **09.08.2023**
(21) Application number: 21885168.1
(22) Date of filing: 26.10.2021
(51) Int. Cl.: G06F 3/0481, G06F 3/0483, G06F 3/0484, G06F 3/0488, G06F 3/14, H04W 88/02

(54) **CROSS-DEVICE CONTENT SHARING METHOD, ELECTRONIC DEVICE AND SYSTEM**

(30) Priority: 30.10.2020 CN 202011198306
(71) Applicant: Huawei Technologies Co., Ltd., Shenzhen, Guangdong 518129 (CN)
(72) Inventor: ZHOU, Xingchen, Shenzhen, Guangdong 518129 (CN); MENG, Dequan, Shenzhen, Guangdong 518129 (CN); DING, Ning, Shenzhen, Guangdong 518129 (CN); ZHANG, Li, Shenzhen, Guangdong 518129 (CN)
(74) Representative: Gill Jennings & Every LLP
(86) International application number: PCT/CN2021/126473
(87) International publication number: WO 2022/089441

(57) **Abstract**

Embodiments of this application provide a cross-device content sharing method, an electronic device, and a system, and relate to the field of terminal technologies, to simplify a search operation step, implement an efficient operation of data transmission of to-be-shared content between different devices and screens, and improve user experience. This solution is applied to a first electronic device with a gesture recognition capability, and includes: detecting a first gesture of a user on the first electronic device when a gesture monitoring function of the first electronic device is enabled; displaying a thumbnail of target content on a display in response to the first gesture, where the target content is content selected by the user on a second electronic device; and displaying, on the display, the target content received by the first electronic device from the second electronic device.

## Description

This application claims priority to Chinese Patent Application No. 202011198306.4, filed with the China National Intellectual Property Administration on October 30, 2020 and entitled "CROSS-DEVICE CONTENT SHARING METHOD, ELECTRONIC DEVICE, AND SYSTEM", which is incorporated herein by reference in its entirety.

### TECHNICAL FIELD

Embodiments of this application relate to the field of electronic device technologies, and in particular, to a cross-device content sharing method, an electronic device, and a system.

### BACKGROUND

With rapid development of an electronic device technology, for example, an electronic device is a mobile phone, functions of the mobile phone are increasingly diversified, and more application requirements of a user are met. However, because a screen of the mobile phone is small, it is difficult for the user to share a file such as a picture or a video with a friend when the user browses the file by using the mobile phone. In view of this, the file such as the picture or the video that is browsed by the user by using the mobile phone may be displayed on another electronic device (for example, a computer), to provide better browsing experience for the user. A screen size of the another electronic device is greater than a screen size of the mobile phone.

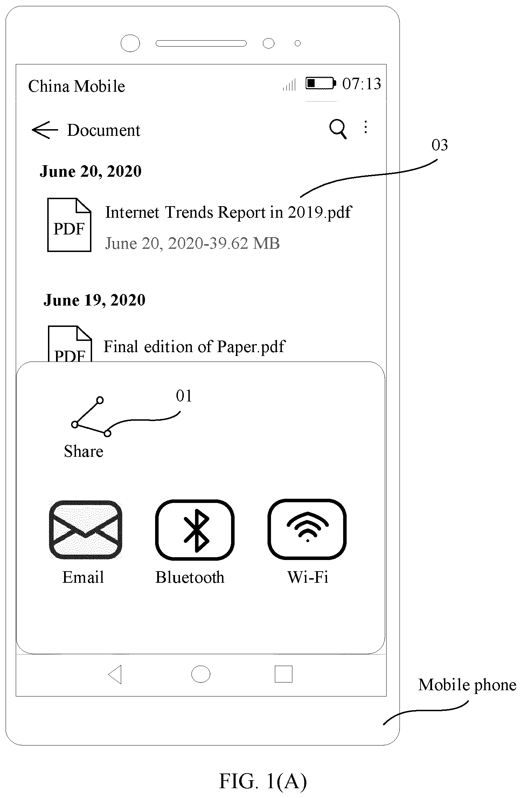

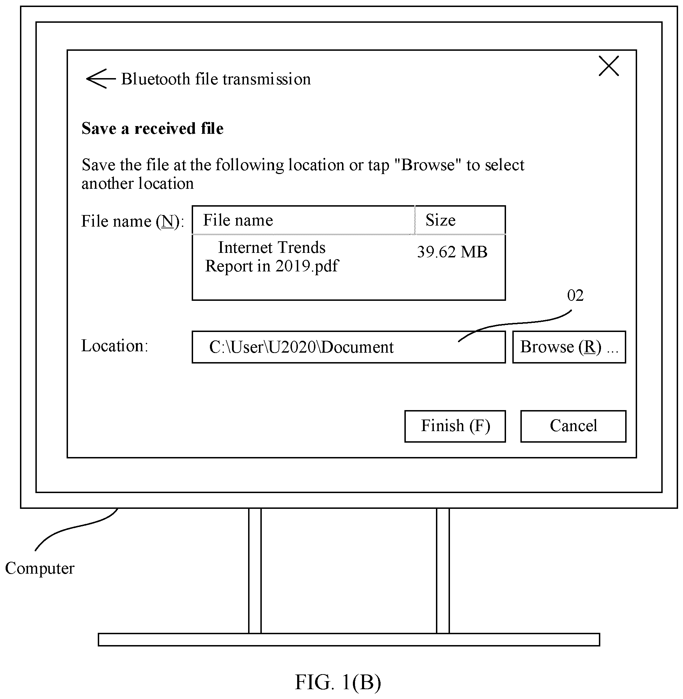

As shown in FIG. 1(A), the user may choose, by using a system-level sharing function 01 of the mobile phone, to establish a communication connection to the computer in a near field communication manner such as Bluetooth or Wi-Fi. Then, the user may select a PDF document 03 shown in FIG. 1(A) from the mobile phone. Then, in response to a sharing operation entered by the user for the PDF document 03, the mobile phone sends the PDF document 03 to the computer through the communication connection established between the mobile phone and the computer. As shown in FIG. 1(B), the computer receives the PDF document 03 from the mobile phone, and saves the PDF document 03 in a default location 02 of the computer. Therefore, if the user wants to display the PDF document 03 by using the computer, the computer needs to find the PDF document 03 from the default location 02 based on an operation entered by the user, and then the computer displays the PDF document 03 on the computer in response to a display operation entered by the user for the PDF document 03.

In the foregoing solution, when the PDF document 03 needs to be displayed on the computer, the user needs to perform an operation on the computer. When the user has a requirement, the user needs to perform a plurality of steps of operations to complete transmission. Consequently, use is inconvenient, and user experience is poor.

### SUMMARY

Embodiments of this application provide a cross-device content sharing method, an electronic device, and a system, to simplify a search operation step, implement an efficient operation of data transmission of to-be-shared content between different devices and screens, and improve user experience.

To achieve the foregoing objective, the following technical solutions are used in this application:
According to a first aspect, an embodiment of this application provides a cross-device content sharing method, applied to a first electronic device with a gesture recognition capability. The first electronic device and a second electronic device have a communication connection, and the method includes: When a gesture monitoring function of the first electronic device is enabled, the first electronic device detects a first gesture (for example, a release gesture in this embodiment of this application) triggered by a user on the first electronic device. In response to the first gesture, the first electronic device displays, on a display, a thumbnail of target content selected by the user on the second electronic device. The first electronic device displays, on the display, the target content received by the first electronic device from the second electronic device.

The communication connection is established between the first electronic device and the second electronic device before the user makes a second gesture on the second electronic device. Alternatively, the communication connection is established after the user selects to-be-shared content on the second electronic device by using the second gesture.

This embodiment of this application provides the cross-device content sharing method. In the method, if the user wants to display, on the first electronic device, the target content selected by the user on the second electronic device, the user may make the first gesture on the first electronic device. In response to the first gesture, the first electronic device may first display, on the display, the thumbnail of the target content selected by the user on the second electronic device. The thumbnail is first displayed, so that the user determines whether the target content displayed by the first electronic device is content that needs to be displayed by the user, and predetermines the target content that needs to be displayed. Then, the first electronic device may display, on the display, the target content received by the first electronic device from the second electronic device. In this solution, a capturing gesture made by the user on the second electronic device and the first gesture, namely, the release gesture, made by the user on the first electronic device may be discontinuous gestures. In other words, content selected by the user on the second electronic device by using the capturing gesture does not need to be immediately displayed on the first electronic device in a cross-device manner. When the user subsequently wants to display the target content on the first electronic device, the user may make the first gesture on the first electronic device, to trigger the first electronic device to first display the thumbnail of the target content on the display. In addition, the user does not need to search for the target content from a specified location in the first electronic device. Therefore, in this solution, a process in which the user controls the first electronic device to display the target content from the second electronic device can be simplified. In addition, in this solution, a user operation is natural and intuitive, and an explicit gesture operation may increase interest of the user in playing an electronic device.

In an embodiment of this application, that the first electronic device displays, on the display, the target content received by the first electronic device from the second electronic device includes: The first electronic device displays the target content on the display in full screen or in split screen. Split screen may be understood as that the first electronic device displays a plurality of display areas on the display of the first electronic device, and the target content is displayed in one of the display areas. Through display in split screen, both the target content and content originally displayed on the first electronic device may be displayed.

In an embodiment of this application, the first electronic device detects that the first gesture acting on the thumbnail is released; and the first electronic device displays the target content on the display immediately or after a preset time period. A process in which the user performs triggering again to display the target content may be omitted.

In an embodiment of this application, after the first gesture is released, the first electronic device detects a gesture operation performed on the thumbnail. The gesture operation is used to indicate to open target content corresponding to the thumbnail. The first electronic device displays the target content on the display. In this way, the target content does not need to be immediately displayed on the display of the first electronic device. Instead, when the user needs to display the target content, the target content is displayed in response to an operation performed by the user.

In an embodiment of this application, before the first electronic device displays, on the display, the target content received by the first electronic device from the second electronic device, the method provided in this embodiment of this application further includes: The first electronic device detects a first operation performed by the user on the thumbnail. The first operation is used to indicate to open the target content corresponding to the thumbnail. The first electronic device sends, to the second electronic device, a first request used to request the target content. The first electronic device receives the target content from the second electronic device. In this solution, the first electronic device may not receive the target content from the second electronic device before displaying the thumbnail, but requests the target content from the second electronic device after the user indicates to open the target content corresponding to the thumbnail.

In an embodiment of this application, before the first electronic device displays the thumbnail of the target content on the display, the method provided in this embodiment of this application may further include: The first electronic device obtains the thumbnail of the target content from the second electronic device in response to the first gesture. The first gesture is a first preset gesture (corresponding to a shortcut gesture in the following content), and the target content is content with a latest capturing time point in the second electronic device. Alternatively, the first gesture is a second preset gesture (corresponding to a selection gesture in the following content), and the target content is all or some of one or more pieces of content in the second electronic device. In this way, it is convenient for the user to trigger, by using different gestures, the second electronic device to provide different target content.

In an embodiment of this application, before the first electronic device displays the thumbnail of the target content on the display, the method provided in this embodiment of this application may further include: The first electronic device receives one or more pieces of content from the second electronic device. That the first electronic device displays a thumbnail of target content on a display in response to the first gesture includes: determining the target content from the one or more pieces of content in response to the first gesture. The first electronic device displays the thumbnail of the target content on the display. The determining the target content from the one or more pieces of content in response to the first gesture includes: The first electronic device uses content with a latest capturing time point in the one or more pieces of content as the target content if the first gesture is a first preset gesture. The first electronic device uses some or all of the one or more pieces of content as the target content if the first gesture is a second preset gesture.

In an embodiment of this application, before the first electronic device detects the first gesture of the user on the first electronic device, the method provided in this embodiment of this application further includes: The first electronic device receives a label of one or more pieces of content from the second electronic device. The one or more pieces of content include the target content. Correspondingly, after the first electronic device detects the first gesture and before the first electronic device displays the thumbnail of the target content on the display, the method provided in this embodiment of this application further includes: The first electronic device sends a second request to the second electronic device if the first gesture is a first preset gesture. The second request includes a label of the target content, and the target content is content with a latest capturing time point in the one or more pieces of content. The first electronic device receives the target content from the second electronic device. In this solution, the target content can be obtained from the second electronic device before the first electronic device displays the thumbnail. In this way, when no other data is transmitted between the first electronic device and the second electronic device, the communication connection between the first electronic device and the second electronic device may be disconnected, to save power of an electronic device.

In an embodiment of this application, before the first electronic device detects the first gesture of the user on the first electronic device, the method provided in this embodiment of this application further includes: The first electronic device receives a label of one or more pieces of content from the second electronic device. The one or more pieces of content include the target content. Correspondingly, before the first electronic device displays the thumbnail of the target content on the display, the method provided in this embodiment of this application further includes: The first electronic device displays the label of the one or more pieces of content on the display if the first gesture is a second preset gesture. The first electronic device receives a second operation entered by the user. The second operation is used to indicate content selected by the user from the one or more pieces of content. The first electronic device sends a third request to the second electronic device. The third request includes a label of the target content, and the target content is content selected by the user from the one or more pieces of content. The first electronic device receives the target content from the second electronic device. In this solution, before the first electronic device displays the thumbnail, the first electronic device can select, from the one or more pieces of content based on selection of the user, target content that needs to be displayed by the user.

In an embodiment of this application, before the first electronic device displays the thumbnail of the target content on the display, the method provided in this embodiment of this application further includes: The first electronic device sends a fourth request to the second electronic device in response to the first gesture. When the first gesture is a first preset gesture, the fourth request is used to request content with a latest capturing time point in the second electronic device, and when the second gesture is a second preset gesture, the fourth request is used to request content captured by the second electronic device. The first electronic device receives target content from the second electronic device. The target content is the content with a latest capturing time point in the second electronic device, or the target content is one or more pieces of content from the second electronic device. In this solution, corresponding content can be obtained from the second electronic device based on different gestures before the thumbnail is displayed.

In an embodiment of this application, before the first electronic device displays the thumbnail of the target content on the display, the method provided in this embodiment of this application further includes: When the second gesture is a second preset gesture, the first electronic device sends, to the second electronic device, a fifth request used to request a label of content captured by the second electronic device. The first electronic device receives a label of one or more pieces of content from the second electronic device. The first electronic device displays the label of the one or more pieces of content on the display. The first electronic device receives a third operation entered by the user. The third operation is used to indicate content selected by the user from the one or more pieces of content. The first electronic device sends a sixth request to the second electronic device. The sixth request includes a label of the target content, and the target content is the content selected by the user from the one or more pieces of content. The first electronic device receives the target content from the second electronic device.

In an embodiment of this application, that the first electronic device displays, on the display, the target content received by the first electronic device from the second electronic device includes: In response to a fourth operation performed by the user, the first electronic device controls the thumbnail to move to a first-side screen edge of the display on the display. The first operation is the first gesture or a first movement gesture entered by the user. When the thumbnail moves to a specified location on the first-side screen edge, the first electronic device displays a first display area and a second display area; and the first electronic device displays the target content in the second display area. In this solution, the target content can be displayed in split screen.

In an embodiment of this application, after the displaying a thumbnail of the target content on the display, the method provided in this embodiment of this application further includes: In response to a fifth operation performed by the user, the first electronic device controls the thumbnail to move to a second-side screen edge of the display on the display. The fifth operation is the first gesture or a second movement gesture entered by the user. The first electronic device adds the thumbnail to a playing queue card of the second electronic device when the thumbnail moves to a specified location on the second-side screen edge.

In an embodiment of this application, after the displaying a thumbnail of the target content on the display, the method provided in this embodiment of this application further includes: In response to a sixth operation performed by the user, the first electronic device controls the thumbnail to move to a third-side screen edge of the display on the display. When the thumbnail moves to a specified location on the third-side screen edge, the first electronic device cancels displaying the thumbnail on the display.

In an embodiment of this application, the displaying, on the display, the target content obtained by the first electronic device from the second electronic device includes: The first electronic device receives a virtual screen from the second electronic device. The target content is drawn on the virtual screen. The first electronic device displays the virtual screen on the display.

In an embodiment of this application, the method provided in this embodiment of this application further includes: Before or after detecting the first gesture entered by the user, the first electronic device establishes a communication connection to the second electronic device.

In an embodiment of this application, before the first electronic device establishes a communication connection to the second electronic device, the method provided in this embodiment of this application further includes: The first electronic device receives a broadcast message from one or more electronic devices. A broadcast message of at least one of the one or more electronic devices includes a first field, and the first field is used to indicate that to-be-shared content exists in the electronic device. The first electronic device determines the second electronic device from the at least one electronic device in response to a seventh operation performed by the user.

In an embodiment of this application, a moment at which the first electronic device enables the gesture monitoring function of the first electronic device is earlier than or equal to a moment at which the first electronic device establishes a communication connection to the second electronic device.

In an embodiment of this application, the first electronic device enables the gesture monitoring function of the first electronic device based on a notification message from the second electronic device. The notification message is used to indicate to enable the gesture monitoring function of the first electronic device.

According to a second aspect, an embodiment of this application provides a cross-device content sharing method, applied to a second electronic device. The second electronic device has a touch capability or a gesture recognition capability, and the method provided in this embodiment of this application includes: The second electronic device displays a first interface. When a gesture monitoring function of the second electronic device is enabled, the second electronic device detects a second gesture triggered by a user in the first interface of the second electronic device. The second electronic device determines, in response to the second gesture, first content selected by using the second gesture. When there is a communication connection between the first electronic device and the second electronic device, the second electronic device provides target content in one or more pieces of content or an address of the target content to the first electronic device. The address of the target content is used to obtain the target content from a server, and the one or more pieces of content include at least the first content.

In an embodiment of this application, the target content may be all or some of the one or more pieces of content. For example, the target content is content with a latest capturing time point in the second electronic device. The target content may be the first content. For example, if the first content is the content with a latest capturing time point in the second electronic device, the first content is the target content, or the target content is different from the first content. For example, the user needs to display content with a latest capturing time point in the one or more pieces of content on the first electronic device, but the first content is not the content with a latest capturing time point. In this case, the first content and the target content are not same content.

In an embodiment of this application, before the second electronic device provides the target content in the one or more pieces of content to the first electronic device, the method provided in this embodiment of this application further includes: The second electronic device caches information about the one or more pieces of content, where the information about the content includes a name of the content or an address of the content; or the second electronic device marks a state of the one or more pieces of content as a first state, where the first state indicates that the content is to-be-shared content.

In an embodiment of this application, after the second electronic device determines, in response to the second gesture, the first content selected by using the second gesture, if no communication connection is established between the first electronic device and the second electronic device, the method provided in this embodiment of this application may further include: The second electronic device sends a broadcast message. The broadcast message includes a first field, and the first field is used to indicate that to-be-shared content exists in the second electronic device.

In an embodiment of this application, before the second electronic device provides the target content in the one or more pieces of content to a first electronic device that is communicatively connected to the second electronic device, the method provided in this embodiment of this application may further include: The second electronic device receives a first request sent by the second electronic device. The first request is used to request the target content.

In an embodiment of this application, before the second electronic device provides the target content in the one or more pieces of content to a first electronic device that is communicatively connected to the second electronic device, the method provided in this embodiment of this application may further include: The second electronic device sends a label of the one or more pieces of content to the first electronic device. The second electronic device receives a second request or a third request from the first electronic device. The second request includes a label of the target content, and the target content is the content with a latest capturing time point in the one or more pieces of content; and the third request includes the label of the target content, and the target content is all or some of the one or more pieces of content. Correspondingly, the target content is the content with a latest capturing time point in the one or more pieces of content.

In an embodiment of this application, before the second electronic device provides the target content in the one or more pieces of content to a first electronic device that is communicatively connected to the second electronic device, the method provided in this embodiment of this application may further include: The second electronic device receives a fourth request from the first electronic device. The fourth request is used to request content with a latest capturing time point in the second electronic device, or the fourth request is used to request content captured by the second electronic device.

In an embodiment of this application, before the second electronic device provides the target content in the one or more pieces of content to a first electronic device that is communicatively connected to the second electronic device, the method provided in this embodiment of this application may further include: The second electronic device receives a fifth request from the first electronic device. The fifth request is used to request a label of the content captured by the second electronic device. The second electronic device sends the label of the one or more pieces of content to the first electronic device. The second electronic device receives a sixth request from the first electronic device. The sixth request includes the label of the target content.

In an embodiment of this application, there are a plurality of first electronic devices, the second electronic device and the plurality of first electronic devices belong to a same group, and the one or more pieces of content are visible to an electronic device in the group.

In an embodiment of this application, the method provided in this embodiment of this application further includes: The second electronic device determines a life cycle of the one or more pieces of content. When a life cycle of any one piece of content in the one or more pieces of content expires, the second electronic device deletes an identifier of the any one piece of content from a data sending queue corresponding to the any one piece of content.

In an embodiment of this application, the method provided in this embodiment of this application further includes: The second electronic device receives a cancellation operation from the user. In response to the cancellation operation, the second electronic device cancels content selected from the one or more pieces of content by using the cancellation operation.

In an embodiment of this application, before the second electronic device provides the target content in the one or more pieces of content to a first electronic device that is communicatively connected to the second electronic device, the method includes: The second electronic device provides a virtual screen to the first electronic device. The target content is drawn on the virtual screen.

In an embodiment of this application, when the gesture monitoring function is enabled, before the second electronic device detects the second gesture entered by the user in the first interface of the second electronic device, the method provided in this embodiment of this application further includes: The second electronic device establishes a communication connection to the second electronic device, and enables a gesture monitoring function of the first electronic device.

In an embodiment of this application, before the second electronic device provides the target content in the one or more pieces of content to the first electronic device, the method provided in this embodiment of this application further includes: The second electronic device sends a notification message to the first electronic device. The notification message is used to indicate the first electronic device to enable a gesture monitoring function of the first electronic device.

In an embodiment of this application, after the determining, in response to the second gesture, first content selected by using the second gesture, the method provided in this embodiment of this application further includes: The second electronic device establishes a communication connection to the first electronic device.

According to another aspect, an embodiment of this application provides a cross-device content sharing apparatus. The apparatus is included in an electronic device, and the apparatus has a function of implementing a behavior of the electronic device in any method in the first aspect and the possible implementations. The function may be implemented by hardware, or may be implemented by hardware executing corresponding software. The hardware or the software includes at least one module or unit corresponding to the foregoing function, for example, a sending module or unit, a receiving module or unit, an establishment module or unit, a display module or unit, or a storage module or unit.

According to another aspect, an embodiment of this application provides a cross-device content sharing apparatus. The apparatus is included in an electronic device, and the apparatus has a function of implementing a behavior of the electronic device in any method in the second aspect and the possible implementations. The function may be implemented by hardware, or may be implemented by hardware executing corresponding software. The hardware or the software includes at least one module or unit corresponding to the foregoing function, for example, a sending module or unit, a receiving module or unit, an establishment module or unit, a display module or unit, or a storage module or unit.

According to still another aspect, an embodiment of this application provides an electronic device, including a display, at least one processor, and at least one memory. The at least one memory is coupled to the at least one processor, the display is configured to display information, the at least one memory is configured to store computer program code, the computer program code includes computer instructions, and when the at least one processor executes the computer instructions, the electronic device is enabled to perform the cross-device content sharing method in any possible implementation of the first aspect.

According to still another aspect, an embodiment of this application provides an electronic device, including a display, at least one processor, and at least one memory. The at least one memory is coupled to the at least one processor, the display is configured to display information, the at least one memory is configured to store computer program code, the computer program code includes computer instructions, and when the at least one processor executes the computer instructions, the electronic device is enabled to perform the cross-device content sharing method in any possible implementation of the second aspect.

According to another aspect, an embodiment of this application provides a computer-readable storage medium, including computer instructions. When the computer instructions are run on an electronic device, the electronic device is enabled to perform the cross-device content sharing method in any possible implementation of the first aspect.

According to another aspect, an embodiment of this application provides a computer-readable storage medium, including computer instructions. When the computer instructions are run on an electronic device, the electronic device is enabled to perform the cross-device content sharing method in any possible implementation of the second aspect.

According to still another aspect, an embodiment of this application provides a computer program product. When the computer program product is run on a computer, the computer is enabled to perform the cross-device content sharing method in any possible implementation of the first aspect.

According to still another aspect, an embodiment of this application provides a computer program product. When the computer program product is run on a computer, the computer is enabled to perform the cross-device content sharing method in any possible implementation of the second aspect.

### BRIEF DESCRIPTION OF DRAWINGS

FIG. 1(A) and FIG. 1(B) are a schematic diagram of cross-device content sharing in the conventional technology according to an embodiment of this application;
FIG. 2A to FIG. 2C are a schematic diagram of cross-device content sharing in another conventional technology according to an embodiment of this application;
FIG. 3 is a schematic diagram of a hardware structure of an electronic device according to an embodiment of this application;
FIG. 4A and FIG. 4B are a schematic diagram of a software structure of an electronic device according to an embodiment of this application;
FIG. 5a to FIG. 5c are a schematic diagram of a cross-device content sharing system according to an embodiment of this application;
FIG. 6(a) to FIG. 6(f) are a schematic diagram of a capturing gesture according to an embodiment of this application;
FIG. 7A is a schematic diagram of an application scenario in which a picture is captured by using a capturing gesture according to an embodiment of this application;
FIG. 7B is a schematic diagram of an application scenario in which a text is captured by using a capturing gesture according to an embodiment of this application;
FIG. 7C is a schematic diagram of another application scenario in which a text is captured by using a capturing gesture according to an embodiment of this application;
FIG. 7D(a) and FIG. 7D(b) are a schematic diagram of another application scenario in which a screenshot is obtained by using a capturing gesture according to an embodiment of this application;
FIG. 7E(a) and FIG. 7E(b) are a schematic diagram of another application scenario in which an application window is obtained by using a capturing gesture according to an embodiment of this application;
FIG. 8 is a schematic diagram of a release gesture according to an embodiment of this application;
FIG. 9A to FIG. 9F are a schematic diagram in which a gesture monitoring function is enabled according to an embodiment of this application;
FIG. 10A to FIG. 10D each are a diagram of an interface that is of a mobile phone and in which a capturing gesture exists according to an embodiment of this application;
FIG. 11(A) and FIG. 11(B) are a diagram of an interface in which a user sets a capturing gesture according to an embodiment of this application;
FIG. 12A and FIG. 12B-1 and FIG. 12B-2 each are a schematic flowchart of a cross-device content sharing method between a mobile phone and a large-screen device according to an embodiment of this application;
FIG. 13A to FIG. 13E are a schematic diagram of an interface according to an embodiment of this application;
FIG. 14A and FIG. 14B are a schematic diagram of another interface according to an embodiment of this application;
FIG. 15(A) and FIG. 15(B) are a schematic diagram in which a document is displayed on a mobile phone according to an embodiment of this application;
FIG. 16(A) and FIG. 16(B) are a schematic diagram in which a web page is displayed on a mobile phone according to an embodiment of this application;
FIG. 17A is a schematic diagram in which a video is displayed on a mobile phone according to an embodiment of this application;
FIG. 17B is a schematic diagram in which a thumbnail of a video is displayed on a large-screen device according to an embodiment of this application;
FIG. 17C is a schematic diagram in which a video is displayed on a large-screen device according to an embodiment of this application;
FIG. 17D is a schematic diagram in which a video is displayed in split screen on a large-screen device according to an embodiment of this application;
FIG. 17E is a schematic diagram in which online audio is displayed on a mobile phone according to an embodiment of this application;
FIG. 17F is a schematic diagram in which a thumbnail of online audio is displayed on a large-screen device according to an embodiment of this application;
FIG. 17G is a schematic diagram of a scenario in which audio is cast to a large-screen device for display according to an embodiment of this application;
FIG. 18 is a schematic diagram of a data sending queue according to an embodiment of this application;
FIG. 19A-1 and FIG. 19A-2 to FIG. 19C each are a schematic flowchart of another cross-device content sharing method between a mobile phone and a large-screen device according to an embodiment of this application;

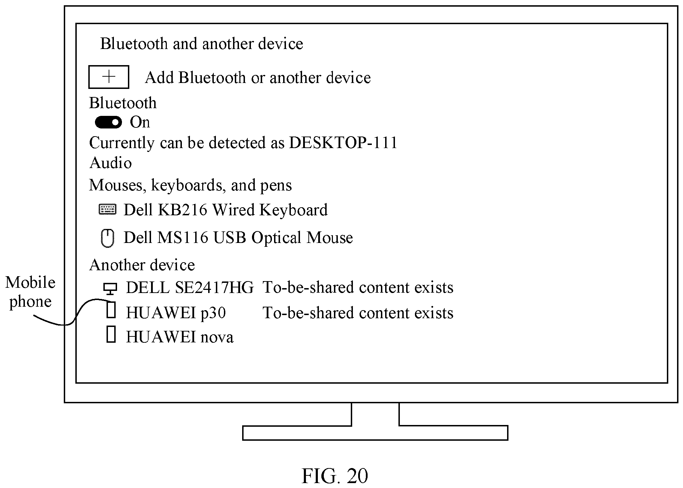

FIG. 20 is a schematic diagram in which a large-screen device finds a mobile phone having to-be-shared content according to an embodiment of this application;

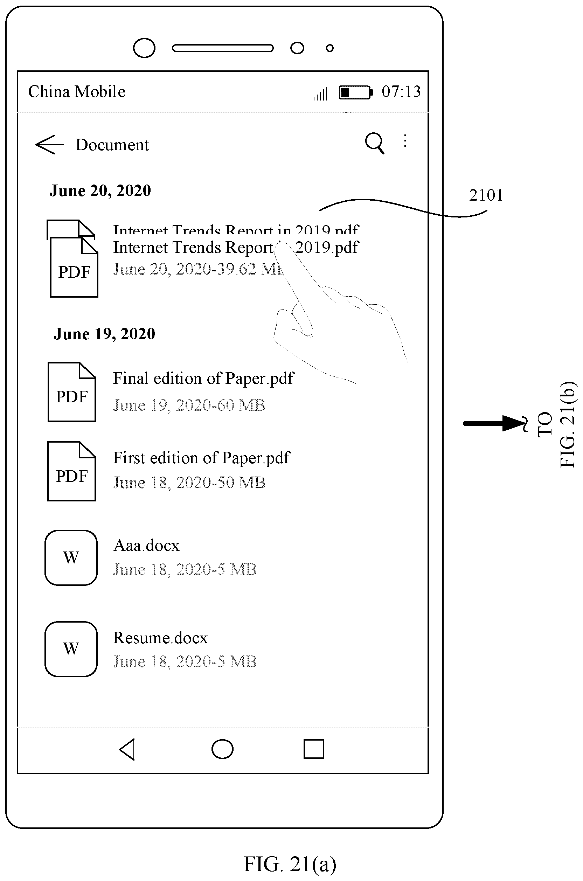

FIG. 21(a) to FIG. 21(e) are a schematic diagram of a scenario in which a document is shared by a mobile phone with a large-screen device according to an embodiment of this application;

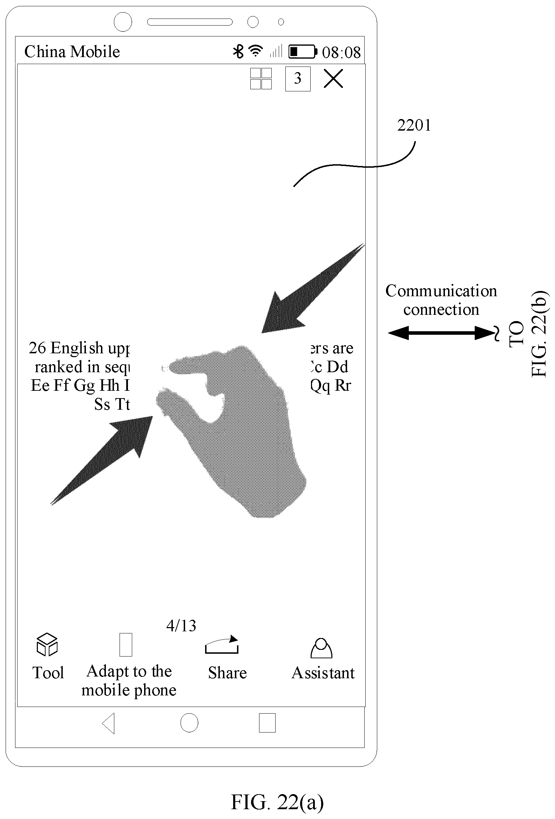

FIG. 22(a) to FIG. 22(c) are a schematic diagram of another scenario in which a document is shared by a mobile phone with a large-screen device according to an embodiment of this application;

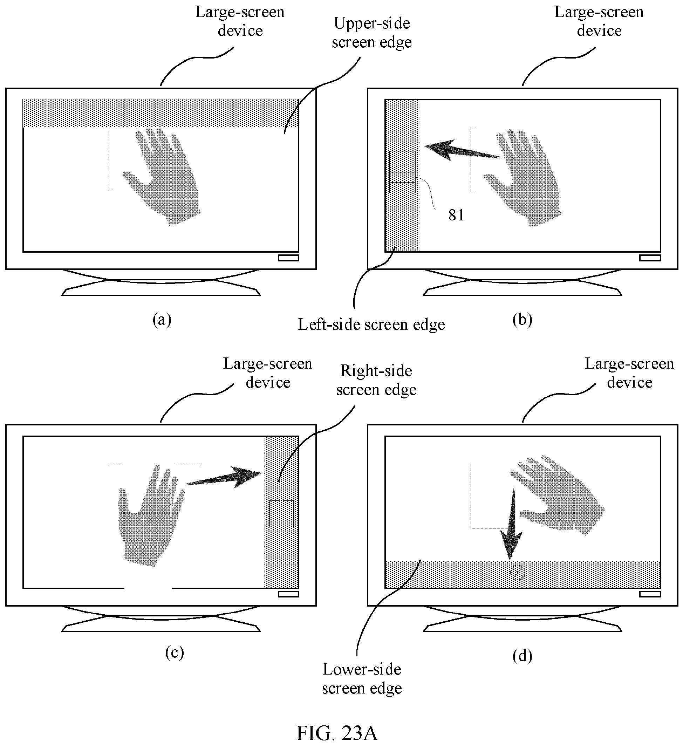

FIG. 23A shows a gesture for controlling content to move according to an embodiment of this application;

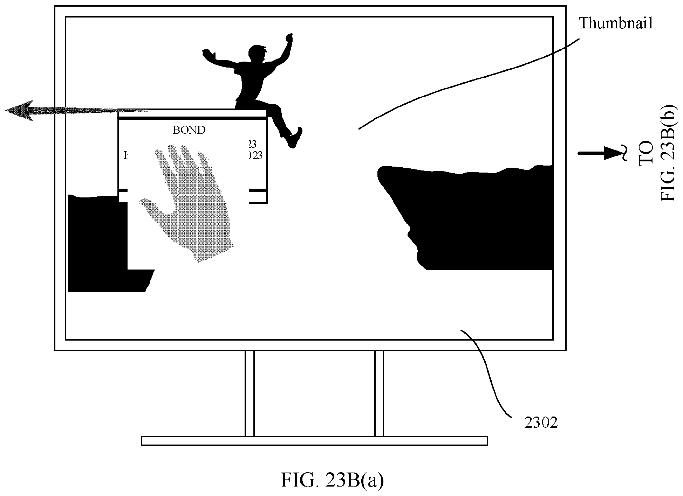

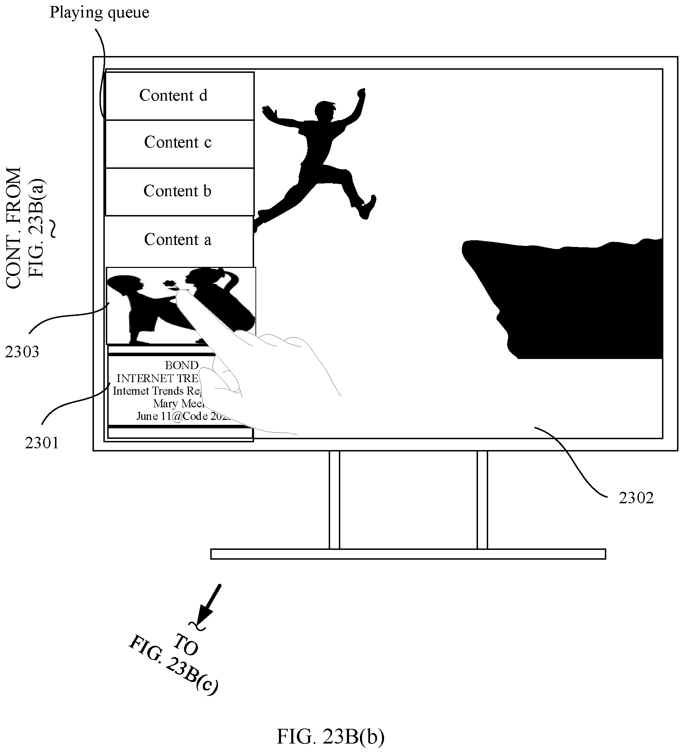

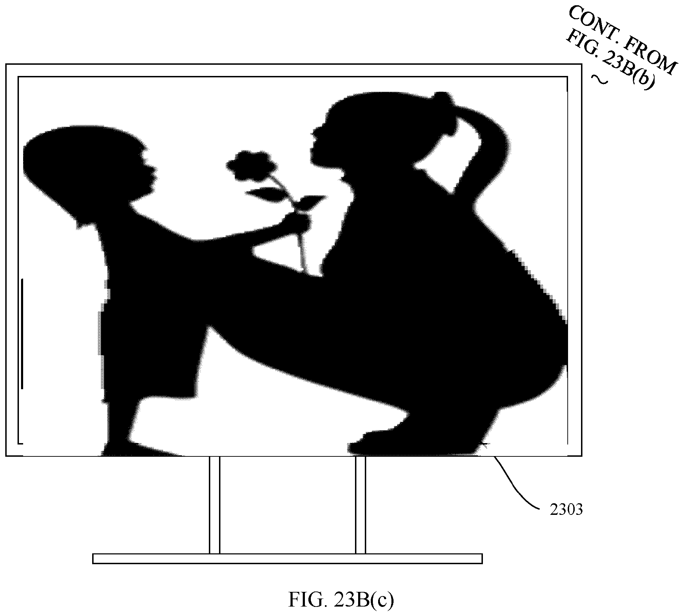

FIG. 23B(a) to FIG. 23B(c) are a diagram of an interface according to an embodiment of this application;

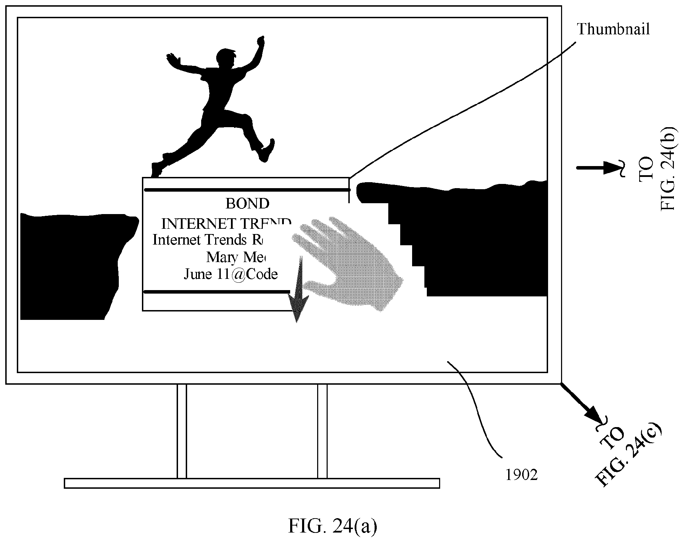

FIG. 24(a) to FIG. 24(c) are another diagram of an interface according to an embodiment of this application;

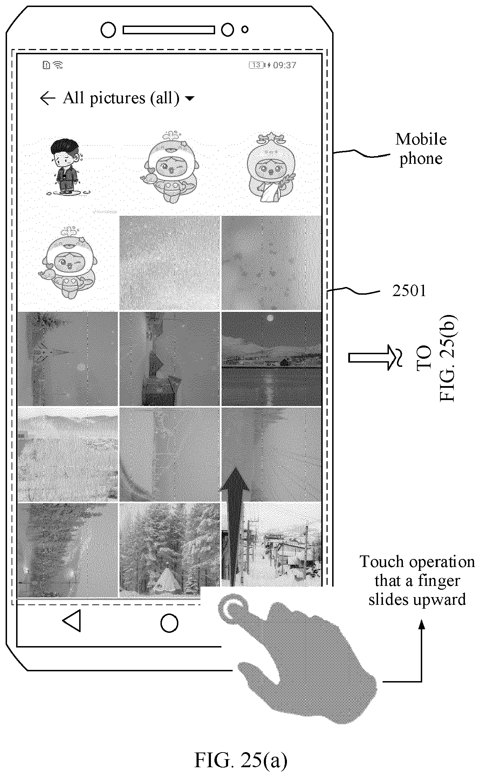

FIG. 25(a) to FIG. 25(c) are still another diagram of an interface according to an embodiment of this application;

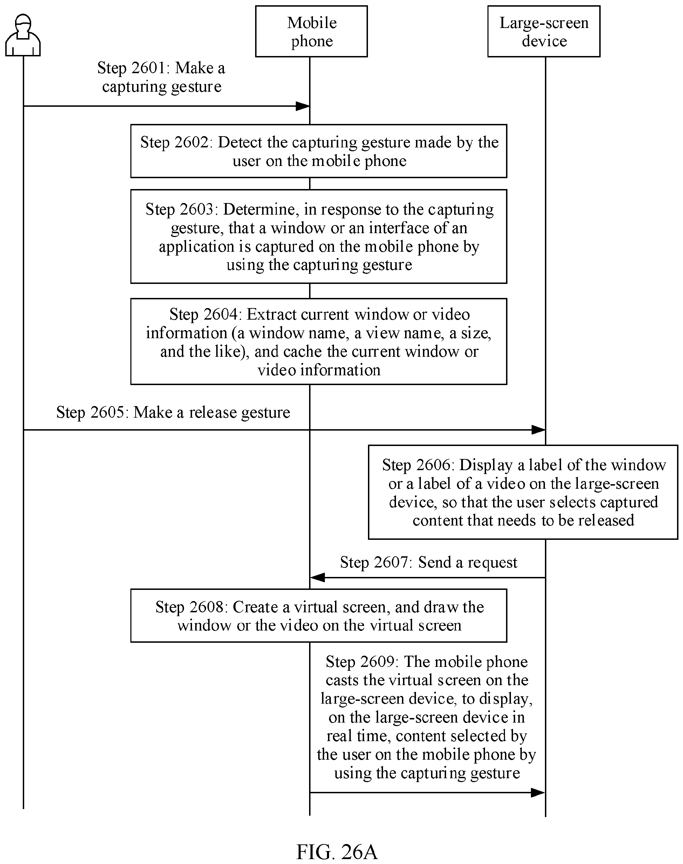

FIG. 26A is a schematic flowchart of another cross-device content sharing method according to an embodiment of this application;

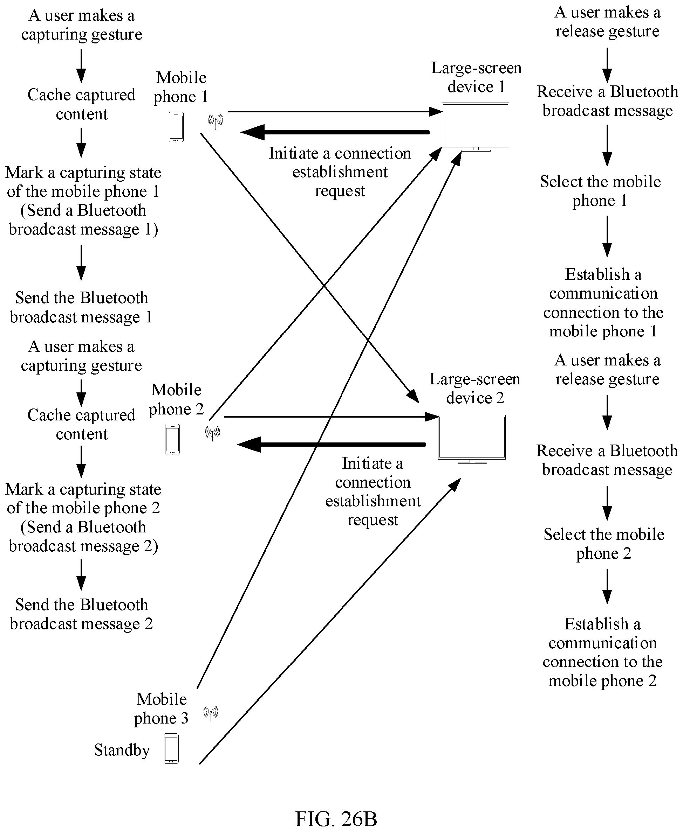

FIG. 26B is a schematic diagram of another multi-device networking according to an embodiment of this application;

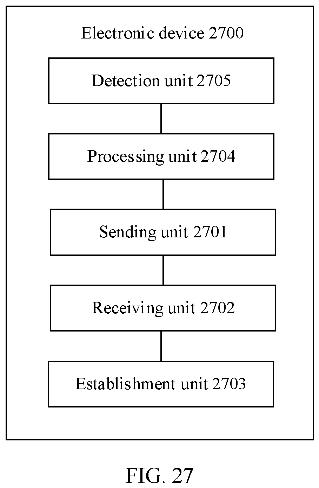

FIG. 27 is a schematic diagram of a structure of an electronic device according to an embodiment of this application; and

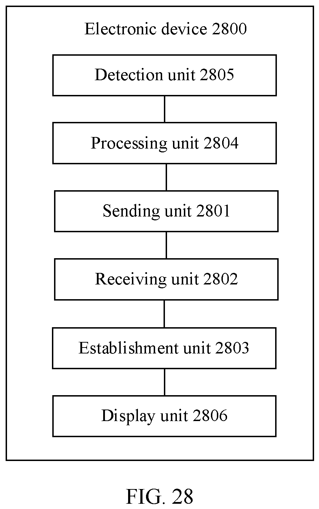

FIG. 28 is a schematic diagram of a structure of another electronic device according to an embodiment of this application.

### DESCRIPTION OF EMBODIMENTS

To clearly describe the technical solutions in embodiments of this application, words such as "first" and "second" are used in embodiments of this application to distinguish between same items or similar items that have basically a same function or purpose. For example, a first electronic device and a second electronic device are merely intended to distinguish between different electronic devices, and are not intended to limit a sequence thereof. A person skilled in the art may understand that the words such as "first" and "second" do not limit a quantity or an execution sequence, and the words such as "first" and "second" do not indicate a definite difference.

It should be noted that in this application, the word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

In this application, "at least one" means one or more, and "a plurality of" means two or more. A term "and/or" describes an association relationship between associated objects and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c. Herein, a, b, and c may be singular or plural.

Before embodiments of this application are described, related terms in embodiments of this application are first explained as follows:
(1) In a casting technology, when different electronic devices (for example, a smartphone, a smart tablet computer, a computer, and a television) are connected in a wired manner or in a wireless manner, content of one or more electronic devices is delivered to another electronic device for display. For example, the content of the electronic device may be a video, audio, a picture, a text, or an application window. In the casting technology, same content may be shared on the different electronic devices, to enrich multimedia life of a user.

With development of the electronic device, the electronic device may provide richer and more colorful services. For example, to obtain better visual experience, the user may cast, by using the casting technology, content to a source electronic device (which may also be referred to as a casting source end) on a display or a display medium of a target electronic device (which may also be referred to as a casting destination end) for display. For example, the casting source end may be a mobile phone, or a tablet computer. The casting destination end may be a personal computer, a smart television (smart TV), or a projector.

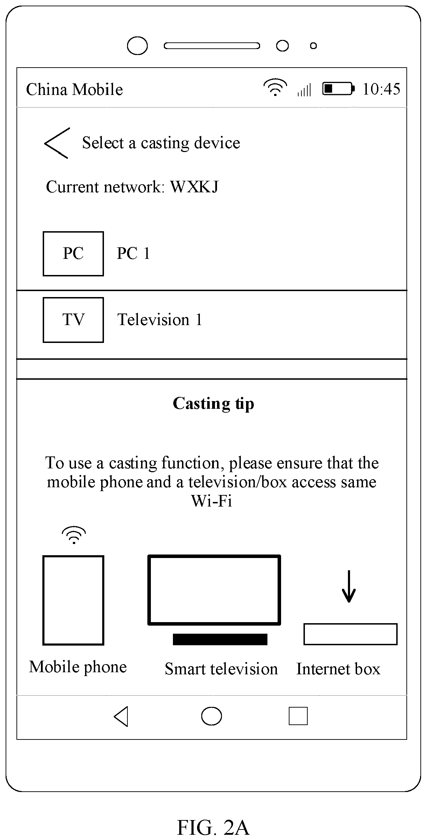

Currently, in the conventional technology, an interaction manner or a triggering entrance of delivering content in a source electronic device from the source electronic device to a target electronic device in a wireless manner mainly includes manners shown in FIG. 1(A) and FIG. 1(B) and FIG. 2A to FIG. 2C.

Manner 1: As shown in FIG. 1(A) and FIG. 1(B), after establishing a communication connection between a mobile phone and a computer in a near field manner such as Bluetooth or Wi-Fi by using a system-level sharing function 01 (for example, a near field manner such as Bluetooth or Wi-Fi shown in FIG. 1(A)) in the mobile phone, the user sends a target file (for example, a PDF document 03) in the mobile phone to the computer.

Manner 2: As shown in FIG. 2A, for example, the source electronic device is a mobile phone, and the target electronic device is a television. A mobile phone and a television that are connected to a same Wi-Fi network transmit data based on a casting protocol. For example, a user may tap a system-level casting control (a drop-down center or a casting selection button in Settings) or a casting control embedded in an application on the mobile phone. After detecting a tap operation performed by the user, the mobile phone starts to search the Wi-Fi network, to find whether a casting broadcast service exists in the Wi-Fi network. After the mobile phone finds a casting broadcast service of the television, the mobile phone sends a video address to the television. After receiving the video address, the television obtains the video from the video address and plays the video, so that content displayed on a screen of the mobile phone is displayed on the television in a mirroring manner.

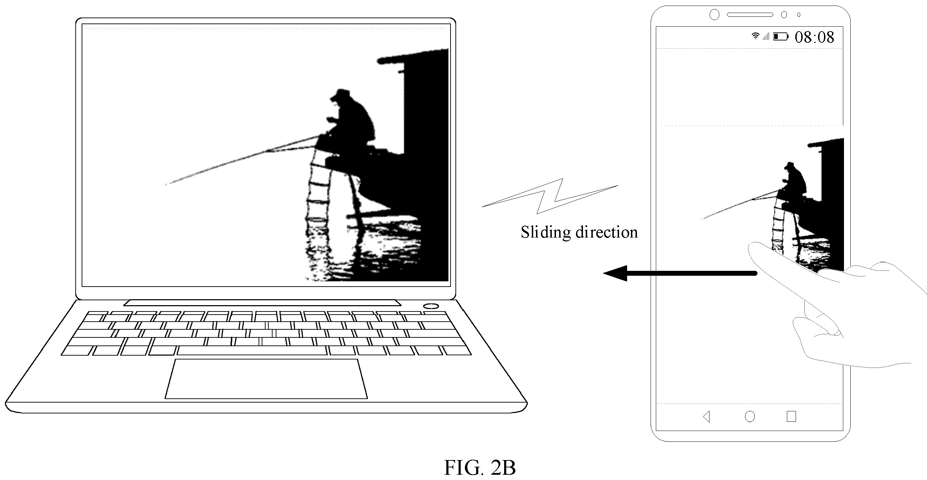

Manner 3: As shown in FIG. 2B, for example, the source electronic device is a mobile phone, and the target electronic device is a multimedia touchscreen (for example, a notebook computer). Currently, a file may be transmitted between the notebook computer and the mobile phone by using a gesture interaction manner of a mid-air screen swipe. Before a user makes a mid-air screen swipe gesture, the user first establishes a wired or wireless connection between the mobile phone and the notebook computer. Subsequently, the user interacts with a screen of the mobile phone by performing a "swipe" action, and the mobile phone may swipe, in a wired or wireless manner by making a swipe gesture, a picture, a video, a document, or the like displayed on the mobile phone to one or more other large-screen receiving devices (for example, the notebook computer).

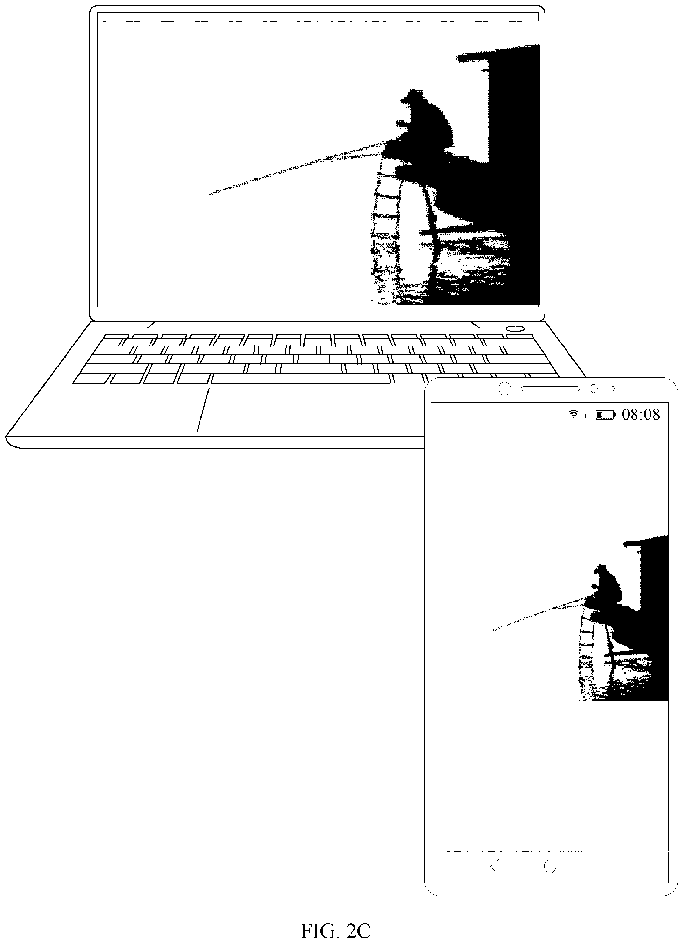

Manner 4: As shown in FIG. 2C, for example, the source electronic device is a mobile phone with a near field communication (Near Field Communication, NFC) function, and the target electronic device is a notebook computer with an NFC function. Before file transmission, an NFC communication connection is established between the mobile phone and the notebook computer by using "One hop". When a user opens a picture, a file, or a video in the mobile phone, the user still uses "One hop". When an NFC area of the mobile phone touches the notebook computer, the picture, the file, or the video in the mobile phone may be viewed on the notebook computer in a case of a slight touch.

However, in Manner 1, after the target electronic device receives the target file shared by the mobile phone by using the system-level sharing function, the target file is stored at a default location in the target electronic device. If the user needs to open the target file, the user needs to perform an operation on the target electronic device. In this way, when the user has a requirement, a plurality of steps of operations need to be performed to complete transmission and open the file on a target electronic device side, causing use inconvenience to the user.

In Manner 2, an interaction manner performed through delivery is mainly used for mirroring of content displayed on the mobile phone, and cross-device distribution cannot be performed for specific content or a specific window.

In Manner 3 and Manner 4, a communication connection needs to be first established between the target electronic device and the source electronic device before the target electronic device and the source electronic device transmit content. In addition, in a delivery manner of "One hop", the source electronic device and the target electronic device further need to have an NFC function. In a mid-air screen swipe manner, a content capturing action of the source electronic device and a content release action of the target electronic device are continuous (in other words, delivered content is immediately displayed on the target electronic device after the source electronic device makes a gesture). In addition, because content delivered in Manner 3 is immediately opened on the target electronic device in full screen, the target electronic device does not support to display the delivered content in another form, for example, in split screen based on a requirement of the user.

To display content in a source electronic device on a target electronic device, an embodiment of this application provides a cross-device content sharing method. In the method, a user may make a capturing gesture on the source electronic device, to select one or more pieces of content on the source electronic device. Subsequently, if the user wants to display target content in the one or more pieces of content on the target electronic device, the user may make a release gesture on the target electronic device. The target electronic device first displays a thumbnail of the target content on a display in response to the release gesture. The thumbnail is first displayed, so that the user can determine whether the target content is content that the user expects to display. In addition, in this solution, the capturing gesture and the release gesture may be discontinuous gestures. In other words, the one or more pieces of content selected by the user on the source electronic device by using the capturing gesture does not need to be immediately displayed on the target electronic device in a cross-device manner. When the user subsequently wants to display the target content on the target electronic device, the user makes the release gesture on the target electronic device, to trigger the target electronic device to display the target content on the display of the target electronic device. In this solution, if the target content is subsequently displayed, the thumbnail may be tapped, to trigger the source electronic device to display the target content. Therefore, the user does not need to search for the target content from a specified location in the target electronic device. In this solution, a process in which the user controls the target electronic device to display the target content from the source electronic device can be simplified. In this solution, the user does not need to establish a communication connection between the target electronic device and the source electronic device before selecting to-be-shared content on the source electronic device, and may establish a communication connection and perform data transmission between the target electronic device and the source electronic device after the capturing gesture and the release gesture. A user operation is natural and intuitive, and the capturing gesture and the release gesture may increase interest of the user in playing an electronic device.

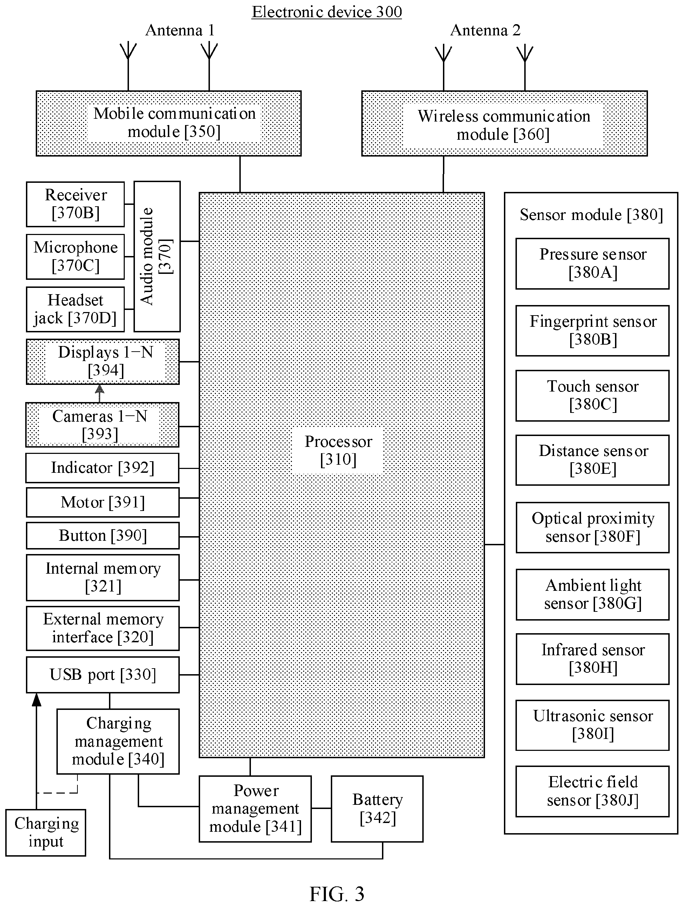

For example, FIG. 3 is a schematic diagram of a structure of an electronic device 300. The electronic device 300 may include a processor 310, an external memory interface 320, an internal memory 321, a universal serial bus (universal serial bus, USB) port 330, a charging management module 340, a power management module 341, a battery 342, an antenna 1, an antenna 2, a mobile communication module 350, a wireless communication module 360, an audio module 370, a receiver 370B, a microphone 370C, a headset jack 370D, a sensor module 380, a button 390, a motor 391, an indicator 392, a camera 393, a display 394, a subscriber identification module (subscriber identification module, SIM) card interface 395, and the like. The sensor module 380 may include a pressure sensor 380A, a fingerprint sensor 380B, a touch sensor 380C, a magnetic sensor 380D, a distance sensor 380E, an optical proximity sensor 380F, an ambient light sensor 380G, an infrared sensor 380H, an ultrasonic sensor 380I, an electric field sensor 380J, and the like.

It may be understood that the structure shown in this embodiment of this application does not constitute a specific limitation on the electronic device 300. In some other embodiments of this application, the electronic device 300 may include more or fewer components than those shown in the figure, or some components may be combined, or some components may be split, or different component arrangements may be used. The components shown in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 300. The controller may generate an operation control signal based on an instruction operation code and a time sequence signal, to complete control of instruction reading and instruction execution.

A memory may be further disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor 310 may directly invoke the instructions or the data from the memory. This avoids repeated access and reduces a waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL). In some embodiments, the processor 310 may include a plurality of groups of I2C buses. The processor 310 may be coupled to the touch sensor 380K, a charger, a flash, the camera 393, and the like through different I2C bus interfaces. For example, the processor 310 may be coupled to the touch sensor 380K through the I2C interface, so that the processor 310 communicates with the touch sensor 380K through the I2C bus interface, to implement a touch function of the electronic device 300.

The I2S interface may be configured to perform audio communication. In some embodiments, the processor 310 may include a plurality of groups of I2S buses. The processor 310 may be coupled to the audio module 370 through the I2S bus, to implement communication between the processor 310 and the audio module 370. In some embodiments, the audio module 370 may transmit an audio signal to the wireless communication module 360 through the I2S interface, to implement a function of answering a call by using a Bluetooth headset.

The PCM interface may also be used to perform audio communication, and sample, quantize, and code an analog signal. In some embodiments, the audio module 370 may be coupled to the wireless communication module 360 through the PCM bus interface.

In some embodiments, the audio module 370 may alternatively transmit an audio signal to the wireless communication module 360 through the PCM interface, to implement a function of answering a call by using a Bluetooth headset. Both the I2S interface and the PCM interface may be used for audio communication.

The UART interface is a universal serial data bus, and is used for asynchronous communication. The bus may be a two-way communication bus. The UART interface converts to-be-transmitted data between serial communication and parallel communication.

In some embodiments, the UART interface is usually configured to connect the processor 310 and the wireless communication module 360. For example, the processor 310 communicates with a Bluetooth module in the wireless communication module 360 through the UART interface, to implement a Bluetooth function. In some embodiments, the audio module 370 may transmit an audio signal to the wireless communication module 360 through the UART interface, to implement a function of playing music by using a Bluetooth headset.

The MIPI interface may be configured to connect the processor 310 and a peripheral component such as the display 394 or the camera 393. The MIPI interface includes a camera serial interface (camera serial interface, CSI), a display serial interface (display serial interface, DSI), and the like. In some embodiments, the processor 310 communicates with the camera 393 through the CSI interface, to implement a photographing function of the electronic device 300. The processor 310 communicates with the display 394 through the DSI interface, to implement a display function of the electronic device 300.

The GPIO interface may be configured by software. The GPIO interface may be configured as a control signal or a data signal. In some embodiments, the GPIO interface may be configured to connect the processor 310 and the camera 393, the display 394, the wireless communication module 360, the audio module 370, the sensor module 380, and the like. The GPIO interface may alternatively be configured as an I2C interface, an I2S interface, a UART interface, an MIPI interface, or the like.

The USB port 330 is an interface that conforms to a USB standard specification, and may be specifically a mini USB port, a micro USB port, a USB Type C port, or the like. The USB port 330 may be configured to be connected to the charger to charge the electronic device 300, or may be configured to transmit data between the electronic device 300 and a peripheral device, or may be configured to be connected to a headset, to play audio by using the headset. The interface may be further configured to be connected to another electronic device, for example, an AR device.

It can be understood that an interface connection relationship between modules illustrated in this embodiment of this application is merely an example for description, and does not constitute a limitation on the structure of the electronic device 300. In some other embodiments of this application, different interface connection manners in the foregoing embodiments or a combination of a plurality of interface connection manners may alternatively be used for the electronic device 300.

The charging management module 340 is configured to receive a charging input from the charger. The charger may be a wireless charger or a wired charger. In some embodiments of wired charging, the charging management module 340 may receive a charging input from a wired charger through the USB port 330. In some embodiments of wireless charging, the charging management module 340 may receive a wireless charging input through a wireless charging coil of the electronic device 300. The charging management module 340 may further supply power to the electronic device by using the power management module 341 while charging the battery 342.

The power management module 341 is configured to be connected to the battery 342, the charging management module 340, and the processor 310. The power management module 341 receives an input from the battery 342 and/or the charging management module 340, and supplies power to the processor 310, the internal memory 321, an external memory, the display 394, the camera 393, the wireless communication module 360, and the like. The power management module 341 may be further configured to monitor parameters such as a battery capacity, a battery cycle count, and a battery health status (electric leakage or impedance).

In some other embodiments, the power management module 341 may alternatively be disposed in the processor 310. In some other embodiments, the power management module 341 and the charging management module 340 may alternatively be disposed in a same device.

A wireless communication function of the electronic device 300 may be implemented through the antenna 1, the antenna 2, the mobile communication module 350, the wireless communication module 360, the modem processor, the baseband processor, and the like.

The antenna 1 and the antenna 2 are configured to transmit and receive an electromagnetic wave signal. Each antenna in the electronic device 300 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 350 may provide a wireless communication solution that is applied to the electronic device 300 and that includes 2G/3G/4G/5G. The mobile communication module 350 may include at least one filter, a switch, a power amplifier, a low noise amplifier (low noise amplifier, LNA), and the like. The mobile communication module 350 may receive an electromagnetic wave through the antenna 1, perform processing such as filtering or amplification on the received electromagnetic wave, and transmit a processed electromagnetic wave to the modem processor for demodulation. The mobile communication module 350 may further amplify a signal modulated by the modem processor, and convert an amplified signal into an electromagnetic wave for radiation through the antenna 1.

In some embodiments, at least some functional modules in the mobile communication module 350 may be disposed in the processor 310. In some embodiments, at least some functional modules in the mobile communication module 350 may be disposed in a same device as at least some modules in the processor 310.

The modem processor may include a modulator and a demodulator. The modulator is configured to modulate a to-be-sent low-frequency baseband signal into a medium/high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the receiver 370B, and the like), or displays an image or a video on the display 394. In some embodiments, the modem processor may be an independent component. In some other embodiments, the modem processor may be independent of the processor 310, and is disposed in a same device as the mobile communication module 350 or another functional module.

The wireless communication module 360 may provide a wireless communication solution that is applied to the electronic device 300 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 360 may be one or more components integrating at least one communication processing module. The wireless communication module 360 receives an electromagnetic wave through the antenna 2, performs frequency modulation and filtering processing on the electromagnetic wave signal, and sends a processed signal to the processor 310. The wireless communication module 360 may further receive a to-be-sent signal from the processor 310, perform frequency modulation and amplification on the signal, and convert the signal into an electromagnetic wave for radiation through the antenna 2. In this embodiment of this application, a source electronic device and a target electronic device may establish a communication connection by using respective wireless communication modules 360.

In some embodiments, in the electronic device 300, the antenna 1 and the mobile communication module 350 are coupled, and the antenna 2 and the wireless communication module 360 are coupled, so that the electronic device 300 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The electronic device 300 implements a display function by using the GPU, the display 394, the application processor, and the like. The GPU is a microprocessor for image processing, and is connected to the display 394 and the application processor. The GPU is configured to: perform mathematical and geometric computation, and render an image. The processor 310 may include one or more GPUs, and execute a program instruction to generate or change display information.

The display 394 is configured to display an image, a video, and the like. The display 394 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 300 may include one or N displays 394, where N is a positive integer greater than 1. For example, the display 394 in this embodiment of this application may be configured to: display a thumbnail of target content, and display the target content.

The electronic device 300 may implement a photographing function by using the ISP, the camera 393, the video codec, the GPU, the display 394, the application processor, and the like.

The ISP is configured to process data fed back by the camera 393. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and complexion of the image. The ISP may further optimize parameters such as exposure and a color temperature of a photographing scenario. In some embodiments, the ISP may be disposed in the camera 393.

The camera 393 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV In some embodiments, the electronic device 300 may include one or N cameras 393, where N is a positive integer greater than 1. For example, in this embodiment of this application, if a first gesture or a second gesture made by the user is a mid-air gesture, whether the user enters a mid-air gesture may be determined by using the camera.

The digital signal processor is configured to process a digital signal, and may process another digital signal in addition to the digital image signal. For example, when the electronic device 300 selects a frequency, the digital signal processor is configured to perform Fourier transform on frequency energy.

The video codec is configured to compress or decompress a digital video. The electronic device 300 may support one or more video codecs. Therefore, the electronic device 300 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information based on a structure of a biological neural network, for example, based on a transfer mode between human brain neurons; and may further continuously perform self-learning. The NPU may be used to implement applications such as intelligent cognition of the electronic device 300, for example, image recognition, facial recognition, voice recognition, and text understanding.

In this embodiment of this application, the NPU or another processor may be configured to perform operations such as face detection, face tracking, face feature extraction, and image clustering on a face image in a video stored in the electronic device 300, perform operations such as face detection and face feature extraction on a face image in a picture stored in the electronic device 300, and perform, based on facial features of the picture and a clustering result of the face image in the video, clustering on the picture stored in the electronic device 300.

The external memory interface 320 may be configured to be connected to an external storage card, for example, a micro SD card, to extend a storage capability of the electronic device 300. The external storage card communicates with the processor 310 through the external memory interface 320, to implement a data storage function. For example, files such as music and videos are stored in the external storage card.

The internal memory 321 may be configured to store computer-executable program code, and the computer-executable program code includes instructions. The processor 310 runs the instructions stored in the internal memory 321, to execute various function applications and data processing of the electronic device 300. The internal memory 321 may include a program storage area and a data storage area. The program storage area may store an operating system, an application required by at least one function (for example, a voice playing function or an image playing function), and the like. The data storage area may store data (for example, audio data and a phone book) and the like created when the electronic device 300 is used.

In addition, the internal memory 321 may include a high-speed random access memory, and may further include a nonvolatile memory, for example, at least one magnetic disk storage device, a flash memory device, or a universal flash storage (universal flash storage, UFS).

The electronic device 300 may implement an audio function, for example, music playing or recording, by using the audio module 370, the receiver 370B, the microphone 370C, the headset jack 370D, the application processor, and the like.

The audio module 370 is configured to convert digital audio information into an analog audio signal for output, and is further configured to convert an analog audio input into a digital audio signal. The audio module 370 may be further configured to code and decode an audio signal. In some embodiments, the audio module 370 may be disposed in the processor 310, or some functional modules in the audio module 370 are disposed in the processor 310.

The receiver 370B, also referred to as an "earpiece", is configured to convert an audio electrical signal into a sound signal. When a call is answered or voice information is received by using the electronic device 300, the receiver 370B may be put close to a human ear to listen to a voice.

The microphone 370C, also referred to as a "mike" or a "mic", is configured to convert a sound signal into an electrical signal. When making a call or sending voice information, the user may make a sound near the microphone 370C through the mouth of the user, to enter a sound signal to the microphone 370C. At least one microphone 370C may be disposed in the electronic device 300. In some other embodiments, two microphones 370C may be disposed in the electronic device 300, to collect a sound signal and implement a noise reduction function. In some other embodiments, three, four, or more microphones 370C may alternatively be disposed in the electronic device 300, to collect a sound signal, implement noise reduction, identify a sound source, implement a directional recording function, and the like.

The headset jack 370D is configured to be connected to a wired headset. The headset jack 370D may be a USB port 330, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 380A is configured to sense a pressure signal, and may convert the pressure signal into an electrical signal. In some embodiments, the pressure sensor 380A may be disposed on the display 394. There are a plurality of types of pressure sensors 380A such as a resistive pressure sensor, an inductive pressure sensor, and a capacitive pressure sensor. The capacitive pressure sensor may include at least two parallel plates made of conductive materials. When force is applied to the pressure sensor 380A, capacitance between electrodes changes. The electronic device determines pressure intensity based on a capacitance change. When a touch operation is performed on the display 394, the electronic device detects intensity of the touch operation through the pressure sensor 380A. The electronic device may also calculate a touch location based on a detection signal of the pressure sensor 380A. In some embodiments, touch operations that are performed at a same touch location but have different touch operation intensity may correspond to different operation instructions. For example, when a touch operation whose touch operation intensity is less than a first pressure threshold is performed on an image or a file, it indicates that the image or the file is selected, and the electronic device 300 executes an instruction indicating that the image or the file is selected. When a touch operation whose touch operation intensity is greater than or equal to the first pressure threshold is performed on an application window, and the touch operation moves on the display, an instruction for dragging the application window is executed. For example, when a touch operation whose touch operation intensity is less than a first pressure threshold is performed a Messaging application icon, an instruction for viewing an SMS message is executed. When a touch operation whose touch operation intensity is greater than or equal to the first pressure threshold is performed on the Messaging application icon, an instruction for newly creating an SMS message is executed.

The fingerprint sensor 380B is configured to collect a fingerprint. The terminal device may use a feature of the collected fingerprint to implement fingerprint-based unlocking, application lock access, fingerprint-based photographing, fingerprint-based call answering, and the like.

The touch sensor 380C is also referred to as a "touch device". The touch sensor 380C may be disposed on the display 394, and the touch sensor 380C and the display 394 form a touchscreen, which is also referred to as a "touchscreen". The touch sensor 380C is configured to detect a touch operation performed on or near the touch sensor 380C. The touch sensor may transfer the detected touch operation to the application processor, to determine a type of a touch event. A visual output related to the touch operation may be provided on the display 394. In some other embodiments, the touch sensor 380C may also be disposed on a surface of the electronic device at a location different from that of the display 394.

The distance sensor 380E is configured to measure a distance. The electronic device 300 may measure the distance in an infrared manner or a laser manner. In some embodiments, in a photographing scenario, the electronic device 300 may measure a distance by using the distance sensor 380E, to implement quick focusing.

The optical proximity sensor 380F may include, for example, a light-emitting diode (Light-Emitting Diode, LED) and an optical detector, for example, a photodiode. The light-emitting diode may be an infrared light-emitting diode. The electronic device 300 emits infrared light by using the light-emitting diode. The terminal device detects infrared reflected light from a nearby object by using the photodiode. When sufficient reflected light is detected, the terminal device may determine that there is an object near the terminal device. When insufficient reflected light is detected, the terminal device may determine that there is no object near the terminal device. The terminal device may detect, by using the optical proximity sensor 380F, that the user holds the terminal device close to an ear to make a call, to automatically perform screen-off for power saving. The optical proximity sensor 380F may also be used in a smart cover mode or a pocket mode to automatically perform screen unlocking or locking.

The ambient light sensor 380G is configured to sense ambient light brightness. The electronic device 300 may adaptively adjust brightness of the display 394 based on the sensed ambient light brightness. The ambient light sensor 380G may also be configured to automatically adjust white balance during photographing. The ambient light sensor 380G may further cooperate with the optical proximity sensor 380F to detect whether the electronic device 300 is in a pocket, to avoid an accidental touch.

The infrared sensor 380H, the ultrasonic sensor 380I, the electric field sensor 380J, and the like are configured to assist the electronic device 300 in identifying the mid-air gesture.

The button 390 includes a power button, a volume button, and the like. The button 390 may be a mechanical button, or may be a touch button. The electronic device 300 may receive a key input, and generate a key signal input related to a user setting and function control of the electronic device 300.

The motor 391 may generate a vibration prompt. The motor 391 may be configured to provide an incoming call vibration prompt and a touch vibration feedback. For example, touch operations performed on different applications (for example, photographing or audio playing) may correspond to different vibration feedback effects. The motor 391 may also correspond to different vibration feedback effects for touch operations performed on different areas of the display 394. Different application scenarios (for example, a time reminder, receiving information, an alarm clock, and a game) may also correspond to different vibration feedback effects. A touch vibration feedback effect may be further customized.

The indicator 392 may be an indicator light, and may be configured to indicate a charging status and a power change, or may be configured to indicate a message, a missed call, a notification, and the like.

The SIM card interface 395 is configured to be connected to a SIM card. The SIM card may be inserted into the SIM card interface 395 or detached from the SIM card interface 395, to implement contact with or separation from the electronic device 300. The electronic device 300 may support one or N SIM card interfaces, where N is a positive integer greater than 1. The SIM card interface 395 may support a nano-SIM card, a micro-SIM card, a SIM card, and the like. A plurality of cards may be simultaneously inserted into a same SIM card interface 395. The plurality of cards may be of a same type or different types. The SIM card interface 395 is compatible with different types of SIM cards. The SIM card interface 395 is also compatible with an external memory card. The electronic device 300 interacts with a network through the SIM card, to implement functions such as calling and data communication. In some embodiments, an eSIM, namely, an embedded SIM card, is used for the electronic device 300. The eSIM card may be embedded in the electronic device 300, and cannot be separated from the electronic device 300.

It should be understood that, as an electronic device, a mobile phone and a large-screen device may include all of the foregoing hardware structures, or include some of the foregoing hardware structures, or include more other hardware structures that are not listed above. This is not limited in the embodiments of this application.

It should be further understood that, as an electronic device, a software system such as a layered architecture, a HarmonyOS (HarmonyOS) architecture, an event-driven architecture, a microcore architecture, a microservice architecture, or a cloud architecture may be used for the mobile phone and the large-screen device.

The foregoing describes possible hardware structures of the mobile phone and the large-screen device. The following provides descriptions by using an example in which the mobile phone and the large-screen device include an Android^{®} system of a layered architecture.

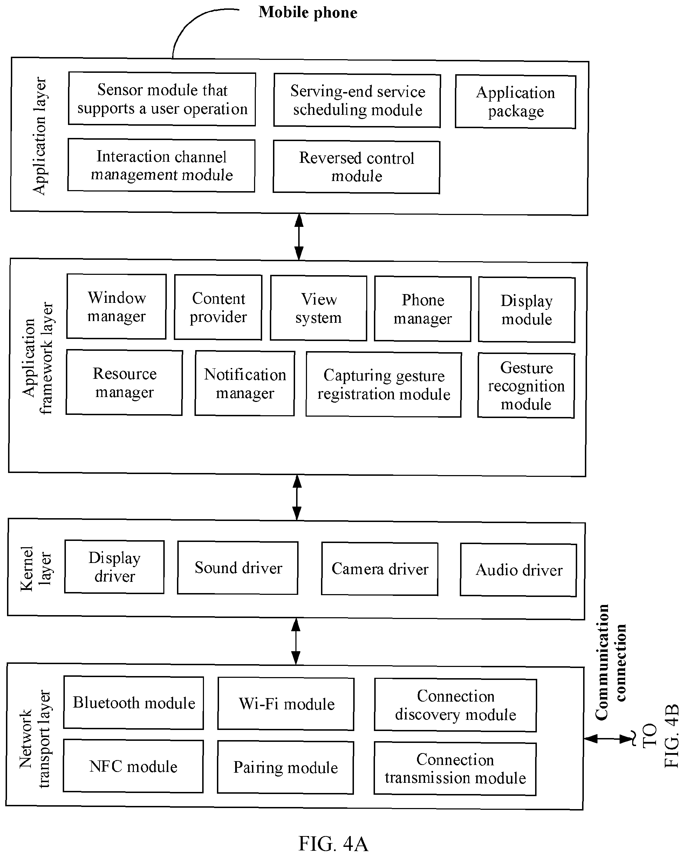

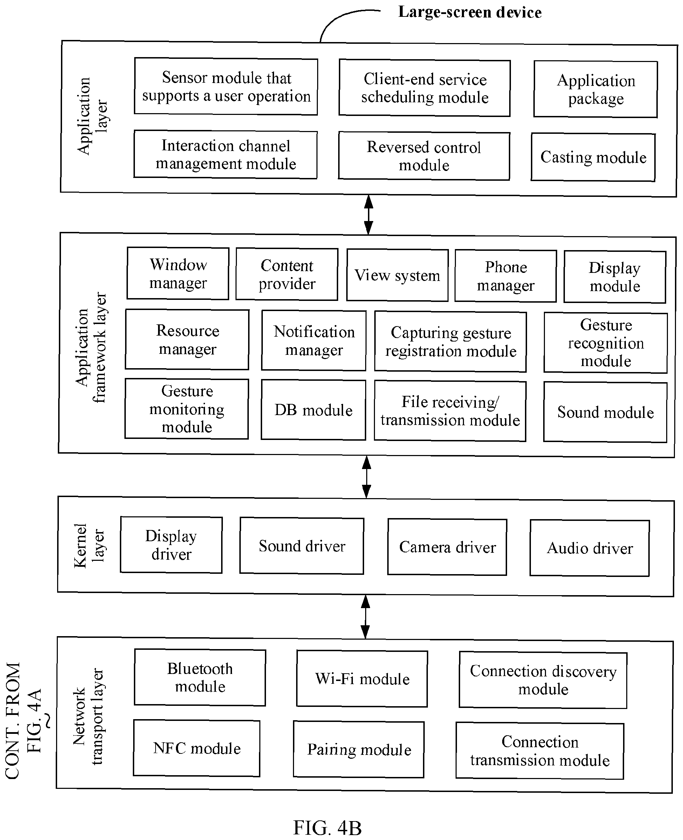

FIG. 4A and FIG. 4B are a block diagram of an example software structure according to an embodiment of this application. In a layered architecture, software is divided into several layers, and each layer has a clear role and task. The layers communicate with each other through a software interface. In some embodiments, an Android^{®} system is divided into four layers: an application layer, an application framework layer, a kernel layer, a network transport layer, and the like from top to bottom.

The application layer may include a series of application packages.

As shown in FIG. 4A and FIG. 4B, an application layer of a mobile phone may include a sensor module that supports a user operation, a serving-end service scheduling module, and an interaction channel management module. The sensor module may sense a touch operation performed by a user on the mobile phone, transfer the touch operation and an operation event to another layer, and perform a response operation. The serving-end service scheduling module is configured to manage service scheduling on a mobile phone side, including registering a listener, processing a scenario of a capturing gesture, identifying an identity of a large-screen device, managing a connection, managing a data life cycle of captured content, and the like. The interaction channel management module is configured to manage a message and data exchange channel between the mobile phone and the large-screen device.

The application layer of the mobile phone may further include a reversed control module, so that after the mobile phone and the large-screen device establish a communication connection, if the mobile phone receives content shared by the large-screen device, the user can operate the content on the mobile phone, and the large-screen device makes a corresponding response in response to the operation performed by the user on the mobile phone.

An application package at the application layer of the mobile phone may include an application (application, APP) such as Music, Gallery, Settings, Email, Memo, Spots and Health, Bluetooth, and WLAN.

An application layer of the large-screen device may include a sensor module that supports a user operation, a client-end service scheduling module, a casting module, and an interaction channel management module. The client-end service scheduling module is configured to manage service scheduling of the large-screen device, including: registering a listener, processing a scenario of a release gesture, identifying an identity of a mobile phone, managing a connection, managing a life cycle of to-be-shared content obtained from the mobile phone, and the like. The connection management of the large-screen device may be used to control communication with the mobile phone. For example, the large-screen device is controlled to establish a Bluetooth channel with the mobile phone by using a Bluetooth module at a network transport layer, to implement communication between the large-screen device and the mobile phone. The casting module is configured to cast, to the large-screen device, content displayed on the mobile phone. The interaction channel management module is configured to manage a message and data exchange channel between the mobile phone and the large-screen device.

The application layer of the large-screen device may further include a reversed control module, so that after the mobile phone and the large-screen device establish a communication connection, if the large-screen device receives the to-be-shared content from the mobile phone, the user can operate the content on the large-screen device, and the mobile phone makes a corresponding response in response to the operation performed by the user on the large-screen device.

For an application package at the application layer of the large-screen device, refer to the application package at the application layer of the mobile phone. Details are not described herein again.

The application framework layer provides an application programming interface (application programming interface, API) and a programming framework for an application at the application layer. The application framework layer may include some predefined functions.

The application framework layer of each of the mobile phone and the large-screen device may include a window manager, a content provider, a view system, a phone manager, a resource manager, a notification manager, and the like.

The window manager is configured to manage a window program. The window manager may obtain a size of a display, and determine whether there is a status bar, a lock screen, a screen capture, or the like.

The content provider is configured to store and obtain data, so that the data can be accessed by an application. The data may include a video, an image, audio, a made call, an answered call, a browsing history and bookmark, a phonebook, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the mobile phone, for example, management of a call status (including answering, declining, or the like). The large-screen device may have a phone manager, or may not have a phone manager. This is not limited in this embodiment of this application.

The resource manager provides various resources such as a localized character string, an icon, a picture, a layout file, and a video file for an application.

As shown in FIG. 4A and FIG. 4B, the application framework layer of the mobile phone may further include a capturing gesture registration module, a gesture recognition module, a gesture monitoring module, a database (Database, DB) module, a file transmission module, a display module, a sound module, and a WMS (Window Manager Service) service.

The WMS service is used to manage all windows of the mobile phone, including creating, deleting, and modifying a window, and manage a size, a level, and a focus location of the window. The application adds or deletes a window in Activity. Functions of addView() and removeView() in a WindowManager class are called to complete a specific implementation. Then, a related method in a ViewRoot class is called, and a related method in the WMS is called through IPC to complete an addition and deletion process. After it is recognized that the user needs to register a release gesture in the mobile phone, a release gesture may be created in the WMS. Correspondingly, after recognizing that the user needs to register a release/capturing gesture in the large-screen device, the large-screen device may create a release/capturing gesture in a WMS of the large-screen device.

The capturing gesture registration module is configured to be responsible for registering a first gesture on the mobile phone by the user. The gesture recognition module is configured to recognize, after the user makes a gesture on the mobile phone, whether the gesture is a first gesture, and is configured to: accurately capture content (a text, a picture, a file, or the like) that needs to be captured by the user, and call back an application layer service interface to perform service processing. The gesture monitoring module is configured to monitor whether the user makes the first gesture on the mobile phone. The DB module is configured to store to-be-shared content, for example, a text, a file, a picture, or an application, that is captured by the user from the mobile phone by using the capturing gesture. The file transmission module is configured to transmit the to-be-shared content to the large-screen device. The display module of the mobile phone is configured to display various content on the mobile phone, and the sound module of the mobile phone is configured to output a sound. For example, when the mobile phone receives a communication connection establishment request from the large-screen device, the mobile phone may provide a voice prompt.

As shown in FIG. 4A and FIG. 4B, the application framework layer of the large-screen device may further include a release gesture registration module, a gesture recognition module, a gesture monitoring module, a database (Database, DB) module, a file receiving/transmission module, a display module, and a sound module.

The release gesture registration module is configured to be responsible for registering a release gesture on the large-screen device by the user. The gesture recognition module is configured to: recognize, after the user makes a gesture on the mobile phone, whether the gesture is a release gesture, and call back an application layer service interface to perform service processing. The gesture monitoring module is configured to monitor whether the user makes the release gesture on the mobile phone. The DB module is configured to store to-be-shared content, for example, a text, a file, a picture, or an application, that is obtained by the user from the mobile phone by using the release gesture. The sound module of the large-screen device is configured to output a sound. For example, when the large-screen device receives a communication connection establishment request from the mobile phone or receives the to-be-shared content from the mobile phone, the large-screen device may provide a voice prompt. The display module of the large-screen device is configured to display the to-be-shared content or a thumbnail of the to-be-shared content. The file receiving/transmission module is configured to: receive the to-be-shared content sent by the mobile phone to the large-screen device, or send a request for the to-be-shared content to the mobile phone.

The kernel layer is a layer between hardware and software.

As shown in FIG. 4A and FIG. 4B, a kernel layer of each of the mobile phone and the large-screen device include at least a display driver, a sound driver, a transmission driver, a camera driver, an audio driver, and the like. Different drivers at the kernel layer are configured to invoke a hardware device of each of the mobile phone and the large-screen device, to perform a corresponding operation. For example, the display driver is configured to support interface display of the mobile phone, the audio driver is configured to support audio playing of the mobile phone, and the transmission driver is configured to support the mobile phone to transmit the to-be-shared content to the large-screen device. Details are not described herein again.

The network transport layer may be used for communication, data transmission, and the like between different devices, and includes, for example, a pairing authentication module and a connection discovery module. A communication connection is established between the mobile phone and the large-screen device, and data, a message, an instruction, or the like is transmitted through the communication connection. Details are not described herein again.

A connection discovery module of the mobile phone or the large-screen device is configured to find a device to which a communication connection may be established.

A pairing authentication module of the mobile phone or the large-screen device is configured to authenticate, in a communication connection establishment process, a device that requests to establish a connection. A connection transmission module is configured to: transmit to-be-shared content to the large-screen device by the mobile phone, or receive to-be-shared content from the mobile phone by the large-screen device.

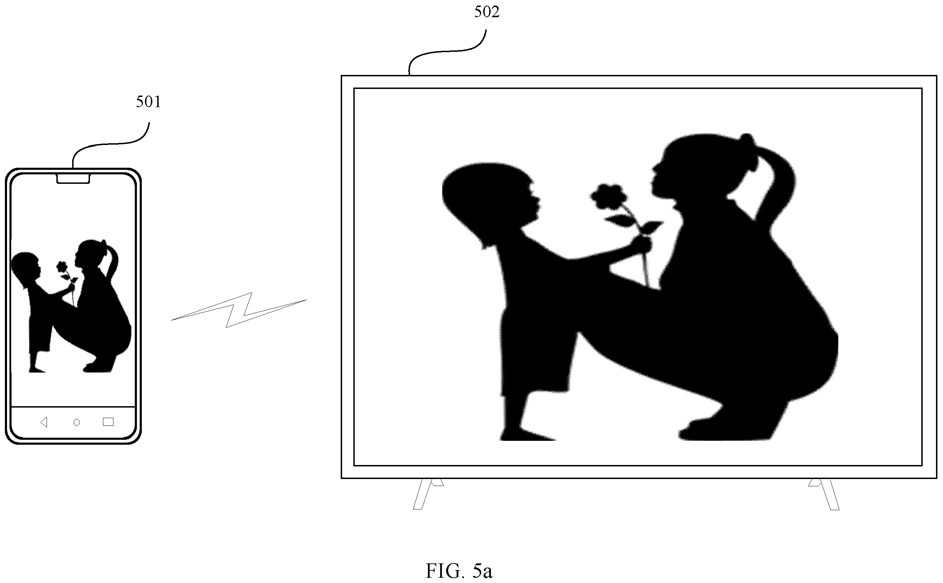

FIG. 5a to FIG. 5c each is an example schematic diagram of an application scenario according to an embodiment of this application.

As shown in FIG. 5a, an application scenario includes an electronic device 501 and an electronic device 502. A quantity of electronic devices 501 and a quantity of electronic devices 502 each may be 1, 2, 3, 5, 10, or the like. In FIG. 5a, an example in which there is one electronic device 501 and one electronic device 502 is used for description.

In this embodiment of this application, when either electronic device (for example, the electronic device 501) in the electronic device 501 and the electronic device 502 needs to deliver content on the electronic device to another electronic device (for example, the electronic device 502), a communication connection between the electronic device 501 and the electronic device 502 may be first established. However, the communication connection may be established with the electronic device 502 before a user makes, on the electronic device 501, a capturing gesture used to determine to-be-shared content, or the communication connection may be established with the electronic device 502 after a user makes, on the electronic device 501, a capturing gesture used to determine to-be-shared content. This is not limited in this embodiment of this application. In other words, it only needs to be ensured that a communication connection is established between the electronic device 501 and the electronic device 502 before the to-be-shared content is transmitted, and it is not required that a communication connection between the electronic device 501 and the electronic device 502 needs to be established before the user makes, on the electronic device 501, the capturing gesture used to determine the to-be-shared content.

In an example, the electronic device 501 may establish a communication connection to one or more electronic devices (for example, the electronic device 502) by using a wireless communication technology. The communication connection may be a physical connection or a virtual connection. The physical connection is a physical link-based connection. The virtual connection does not need to be established based on a physical link. Compared with the physical connection, the virtual connection can be used to save power of the electronic device 501 and power of the electronic device 502, and prolong use duration of the electronic device 501 and use duration of the electronic device 502. For example, the wireless communication technology may be Bluetooth (bluetooth, BT), or may be conventional Bluetooth or Bluetooth low energy (Bluetooth Low Energy, BLE) Bluetooth, a wireless local area network (wireless local area network, WLAN) (for example, a wireless fidelity (wireless fidelity, Wi-Fi) network), a Zigbee Zigbee connection, frequency modulation (frequency modulation, FM), a near field communication (near field communication, NFC) technology, an infrared (infrared, IR) technology, a general 2.4G/5G frequency band wireless communication technology, or the like. A wireless connection is a connection established by using the wireless communication technology. A type of the wireless communication technology is not specifically limited in this embodiment of this application.

Certainly, the electronic device 501 may alternatively establish a connection to the electronic device 502 by using a wired communication technology. A wired communication connection may be a communication connection established based on a universal serial bus (Universal Serial Bus, USB) protocol, a high definition multimedia interface (High Definition Multimedia Interface, HDMI) protocol, a general-purpose interface bus (General-Purpose Interface Bus, GPIB) protocol, an Ethernet protocol, or the like. A specific communication connection manner between the electronic device 501 and the electronic device 502 is not particularly limited in this embodiment of this application.

For example, if the electronic device 501 and the electronic device 502 each have NFC, the electronic device 501 and the electronic device 502 may be automatically paired after NFC sensing areas of the electronic device 501 and the electronic device 502 are in contact, and the electronic device 501 and the electronic device 502 may establish a communication connection after being paired.

For ease of understanding, in this embodiment of this application, an example in which the communication connection between the electronic device 501 and the electronic device 502 is a Bluetooth connection is used for description subsequently.

In the scenario shown in FIG. 5a, one of the electronic device 501 and the electronic device 502 may be used as a source electronic device, and the other electronic device may be used as a target electronic device.

In this embodiment of this application, the source electronic device and the target electronic device are relative concepts. For example, when to-be-shared content exists in the electronic device 501, the electronic device 501 may be used as the source electronic device. If the to-be-shared content needs to be displayed on the electronic device 502, the electronic device 502 may be considered as the target electronic device.

For example, the electronic device 501 is a mobile phone, and the electronic device 502 is a television. In this case, the user may choose to display a video, a file, a picture, or the like on the mobile phone by using the television, in other words, implement casting. For example, if to-be-shared content exists in the electronic device 502, the electronic device 502 may be considered as the source electronic device; and if the to-be-shared content exists in the electronic device 502, an electronic device 501 that receives and displays the to-be-shared content may be used as the target electronic device. For example, the electronic device 501 is a mobile phone, and the electronic device 502 is a PC. In this case, to-be-shared content in the PC may be cast to the mobile phone for display.

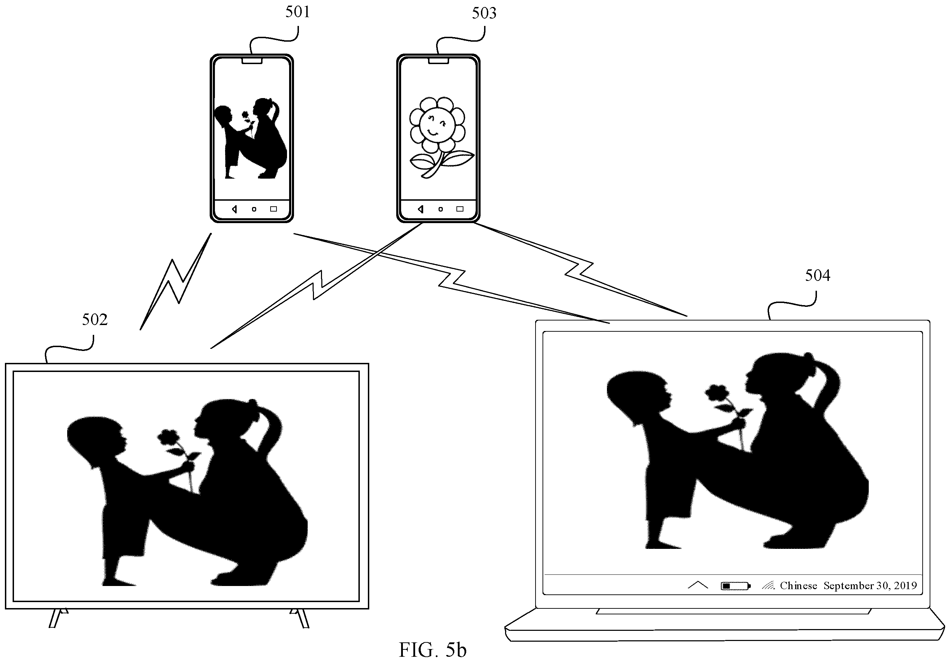

A difference between FIG. 5b and FIG. 5a lies in that: In FIG. 5a, the electronic device 501 may display, on the electronic device 502, content 1 selected by the user on the electronic device 501, in other words, perform casting display on the electronic device 502. In FIG. 5b, an electronic device 504 and an electronic device 503 are further included. If content 2 selected by the user on the electronic device 503 by using a capturing gesture also exists in the electronic device 503, the electronic device 502 may not only obtain the content 1 from the electronic device 501, but also obtain the content 2 from the electronic device 503. In addition, the electronic device 501 may not only share, with the electronic device 502, the content 1 selected by the user on the electronic device 501, but also share the content 1 with the electronic device 504. In other words, a many-to-many scenario is supported. To be specific, a plurality of electronic devices (for example, the electronic device 501 and the electronic device 503) are networked to capture and release data, which is similar to a data sharing behavior. To be specific, content selected by the user on a same electronic device 501 can be sent to a plurality of different electronic devices, and can be displayed on the plurality of different electronic devices. For example, if the user makes a release gesture on the electronic device 502, the electronic device 502 may obtain the content 1 from the electronic device 501 when the electronic device 502 and the electronic device 501 have a communication connection. For example, if the user makes the release gesture on the electronic device 502 again, the electronic device 502 may obtain the content 2 from the electronic device 503 when the electronic device 502 and the electronic device 503 have a communication connection. In this way, content is selected on different electronic devices for a plurality of times by using the capturing gesture, and then different content is obtained on different electronic devices by using the release gesture.

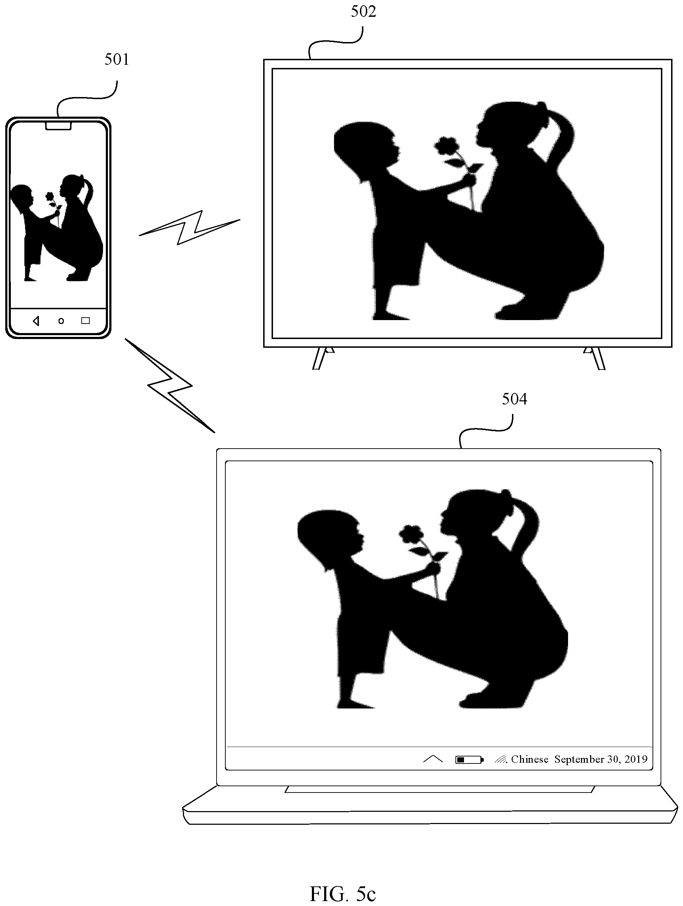

A difference between FIG. 5c and FIG. 5a lies in that, when the user separately makes the release gesture on the electronic device 502 and the electronic device 504, if both the electronic device 502 and the electronic device 504 establish a connection to the electronic device 502, the electronic device 502 or the electronic device 504 may separately obtain, from the electronic device 501, the content 1 selected by the user on the electronic device 501, and display, on the electronic device 502 or the electronic device 504, the content 1 selected by the user on the electronic device 501.

For example, if the user makes the release gesture on the electronic device 502, the electronic device 502 obtains the content 1 from the electronic device 501, and displays the content 1. Then, if the user makes the release gesture on the electronic device 504, the electronic device 504 obtains the content 1 from the electronic device 501, and displays the content 1.

In a scenario in FIG. 5c, the content 1 obtained by the user on one electronic device 501 by using the capturing gesture may be displayed on different electronic devices. That is, a one-to-many scenario is implemented. In addition, it should be noted that, for the content 1 selected by the user on the electronic device 501 by using the capturing gesture, in a life cycle of the content 1, the user may make the release gesture on the electronic device 504 for a plurality of times, to display same content on the electronic device 504 for a plurality of times. For example, if the to-be-shared content selected by the user on the electronic device 501 by using the capturing gesture is a picture 1, and a life cycle of the picture 1 is 24 hours, the user may make the release gesture on the electronic device 504 at a first moment within the 24 hours, to obtain the picture 1 from the electronic device 501, and display the picture 1 on the electronic device 504. Subsequently, the user may make the release gesture on the electronic device 504 again at a second moment within the 24 hours, to obtain the picture 1 from the electronic device 501, and display the picture 1 on the electronic device 504.

Various embodiments disclosed in embodiments of this application may be applied to an electronic device that has a touch function or that is a non-touchscreen electronic device but supports a gesture recognition capability (an electronic device with a gesture sensor such as a camera, an infrared sensor, a radar sensor, an ultrasonic sensor, or an electric field sensor). In some embodiments, the electronic device may be a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. A system supported by the electronic device includes an Android system, an iOS system, a Windows system, a Mac system, and a Linux system. The electronic device may alternatively be, for example, a laptop computer (Laptop) having a touch-sensitive surface (for example, a touch panel). It should be further understood that, in some other embodiments, the electronic device may alternatively be a desktop computer with a touch-sensitive surface (for example, a touch panel).

Device types of the electronic device 501 and the electronic device 502 are not specifically limited in this embodiment of this application. In some other embodiments, the electronic device 501 and the electronic device 502 may be different types of electronic devices. For example, the electronic device 501 is a mobile phone, and the electronic device 502 is a computer with a gesture recognition capability (as shown in FIG. 5a to FIG. 5c). In some other embodiments, the electronic device 501 and the electronic device 502 may be a same type of electronic devices. For example, the electronic device 501 and the electronic device 502 each are a mobile phone. This is not limited in this embodiment of this application.

The scenarios shown in FIG. 5a to FIG. 5c may be, for example, a conference scenario. In this case, the electronic device 501 may be considered as the source electronic device, and the electronic device 502 may be considered as the target electronic device. For example, the application scenario may alternatively be a smart home scenario. The source electronic device may send target content in the to-be-shared content to the target electronic device through a wired connection or a wireless connection, for example, send an element such as a picture (a screenshot of an application window or a screenshot of a screen), a text, a video, a file, or a window. After receiving the to-be-shared content sent by the source electronic device, the target electronic device may display the target content.

A cross-device content sharing method provided in embodiments of this application is specifically described below with reference to the accompanying drawings by using an example in which the source electronic device is a mobile phone with a touchscreen or a gesture recognition capability, and a target electronic device is an electronic device (briefly referred to as a large-screen device below) with a large screen and a gesture recognition capability or a touchscreen.

Because the mobile phone and the large-screen device have a touchscreen or a gesture recognition capability, the mobile phone or the large-screen device may select the to-be-shared content on the mobile phone or the large-screen device based on a control instruction generated based on the capturing gesture entered by the user. In addition, the large-screen device or the mobile phone may obtain to-be-shared content from a device with the to-be-shared content based on the release gesture entered by the user, and display the to-be-shared content.

An example in which the user captures the to-be-shared content on the mobile phone by using the capturing gesture, and triggers the large-screen device to display the to-be-shared content on a display by using the release gesture is used below.

Before the cross-device content sharing method provided in embodiments of this application is described in detail, gesture operations, that is, the capturing gesture and the release gesture, in embodiments of this application are first described.

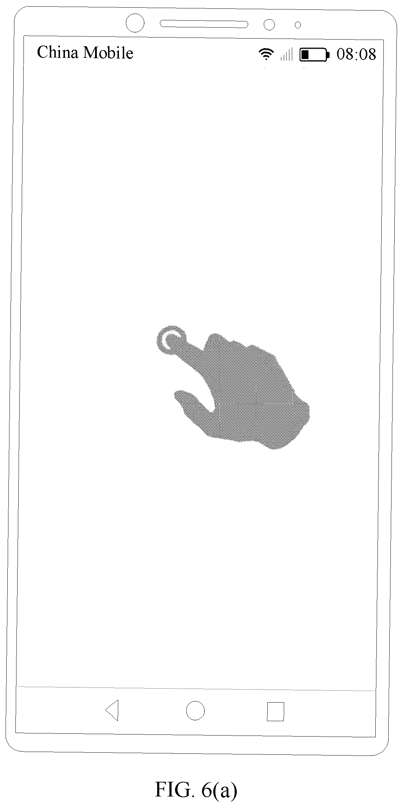

FIG. 6(a) to FIG. 6(f) show an example of a capturing gesture according to an embodiment of this application.

In an example, the capturing gesture is a touch and hold gesture shown in FIG. 6(a). A user touches and holds content a displayed in a first interface of a mobile phone, to indicate that the content a is to-be-shared content selected by the user by using a capturing gesture.

The touch and hold gesture may be a single-finger touch and hold gesture or a multi-finger touch and hold gesture. The touch and hold gesture may be applied to a case in which the user captures a single piece of content on the mobile phone as to-be-shared content. Certainly, the multi-finger touch and hold gesture may be applied to a case in which the user captures a plurality of pieces of content on the mobile phone as to-be-shared content.

In some embodiments, a detection policy 1 may be further configured on the mobile phone, and may be used to reduce a false detection event of the touch and hold gesture.

For example, in the detection policy 1, when a single finger or a plurality of fingers of the user are in contact with the mobile phone, and the mobile phone detects that pressure generated on the mobile phone by using the single finger or the plurality of fingers is greater than or equal to a preset pressure value 1, the mobile phone may determine that the user triggers a single-finger gesture or a multi-finger gesture. However, when the mobile phone detects that pressure generated on a large-screen device by using a single finger or a plurality of fingers is less than the preset pressure value 1, the mobile phone may consider that the user does not trigger the single-finger gesture or the multi-finger gesture. The preset pressure value 1 may be set based on a requirement. This is not limited in this embodiment of this application.

In another detection policy, when a single finger or a plurality of fingers of the user are in contact with the mobile phone, if a time period for which the single finger or the plurality of fingers of the user are in contact with the mobile phone and the large-screen device exceeds a preset time threshold (for example, 5 seconds), the mobile phone may determine that the user triggers a single-finger gesture or a multi-finger gesture. However, when the single finger or the plurality of fingers of the user are in contact with the mobile phone, if a time period for which the single finger or the plurality of fingers of the user are in contact with the mobile phone is less than the preset time threshold (for example, 5 seconds), the mobile phone may determine that the user does not trigger the single-finger gesture or the multi-finger gesture.

The user may select a single piece of content (for example, an image, a document, audio, or a video) on the mobile phone or a large-screen device by using a touch and hold gesture shown in FIG. 6(a) or a multi-finger touch and hold gesture.

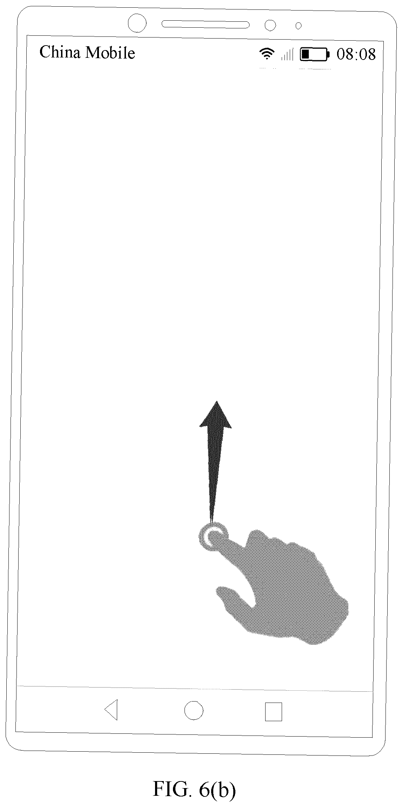

For another example, the capturing gesture is a gesture, shown in FIG. 6(b), of performing touching and holding and sliding upward from the bottom of a screen or the middle of a screen. For another example, the capturing gesture may be an operation that the user performs touching and holding and slides upward from the bottom of a screen of the mobile phone by using a single finger or performs touching and holding and slides downward from the top of a screen of the mobile phone by using a single finger.

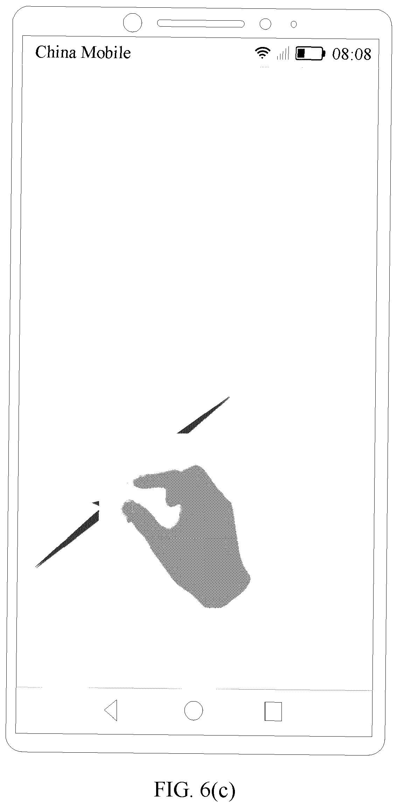

For another example, as shown in FIG. 6(c), the capturing gesture may be an operation that the user performs pinching on a screen by using a plurality of fingers, or the capturing gesture is an operation that the user performs pinching on a screen by using two fingers. Certainly, the capturing gesture is merely an example. In an actual process, another operation may alternatively be used as the capturing gesture.

The user may select a plurality of pieces of content on the mobile phone or the large-screen device by using the capturing gesture shown in FIG. 6(c).

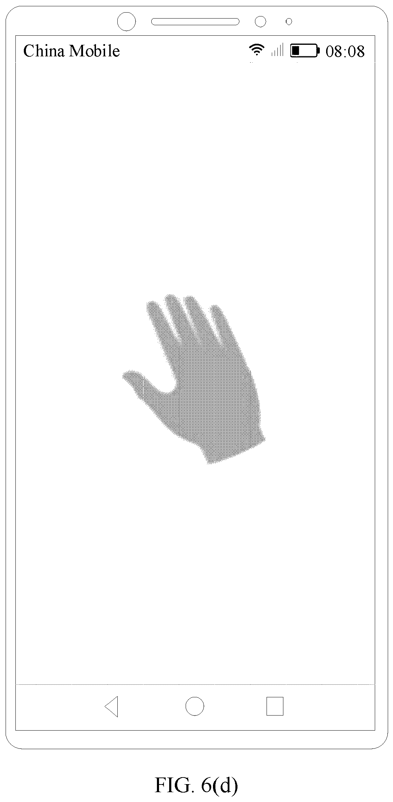

For another example, the capturing gesture is a palm press gesture (which may also be referred to as a palm press operation or a palm touch and hold operation). The user indicates, by using a palm touch and hold operation shown in FIG. 6(d), that content is to-be-shared content captured by the user by using the capturing gesture. For example, the capturing gesture may be an operation that the user sliding downward from the top of a screen.

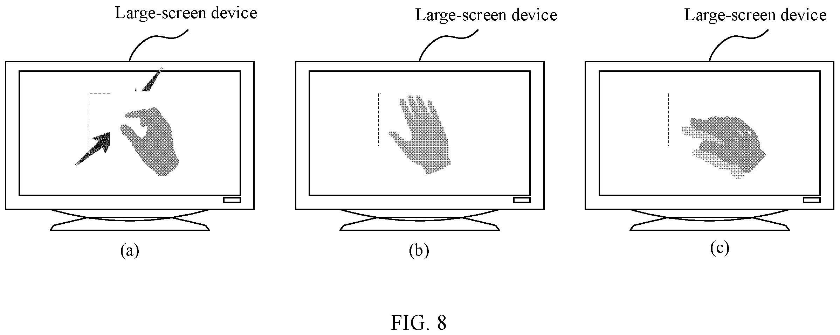

For a process in which the mobile phone determines that the user triggers the palm press gesture, refer to the following description shown in (a) in FIG. 8. Details are not described herein in this embodiment of this application.

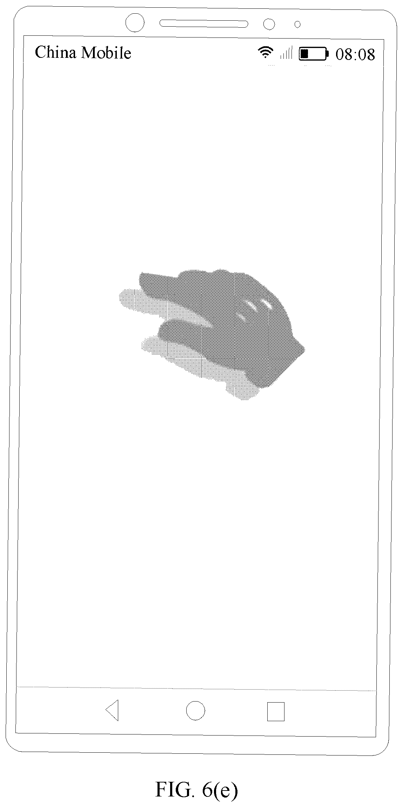

For another example, the capturing gesture is a mid-air gesture shown in FIG. 6(e). To be specific, the user captures content on the mobile phone by using the mid-air gesture.

For a process in which the mobile phone determines that the user triggers the mid-air gesture, refer to the following description shown in (b) in FIG. 8. Details are not described herein in this embodiment of this application.

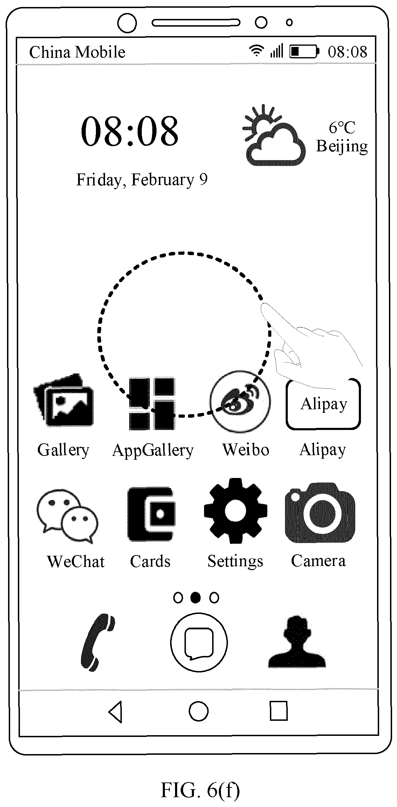

For another example, the capturing gesture may be an operation that the user draws a preset track on the screen of the mobile phone, for example, an operation that the user draws a circle track shown in FIG. 6(f).

The user may select the to-be-shared content from the mobile phone by using various gestures shown in FIG. 6(a) to FIG. 6(f). However, different to-be-shared content may be obtained by using different gestures. For example, the user may select one or more pictures, applications, images, and documents (for example, a Word document, a PDF document, a PPT document, a TXT document, or an EXCEL document) from the mobile phone or select a text from a page or a document, by using the capturing gestures shown in FIG. 6(a) and FIG. 6(f).

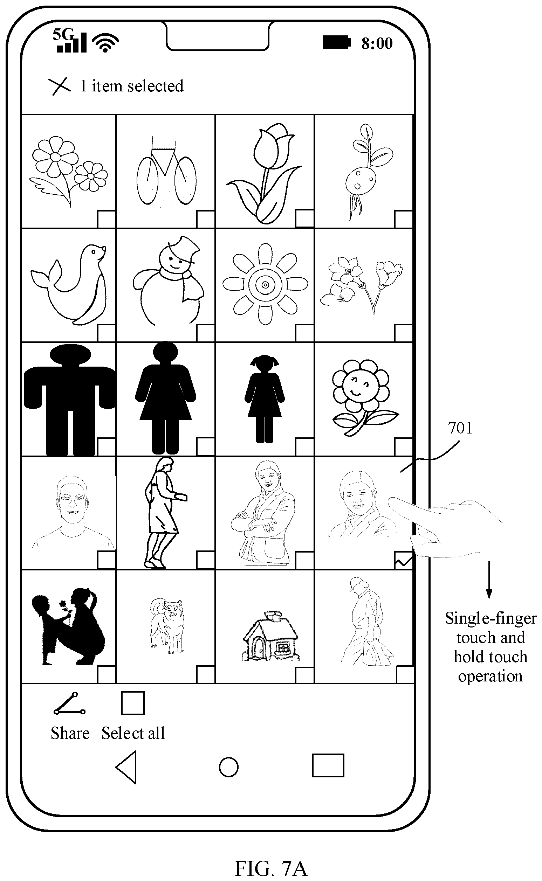

For example, as shown in FIG. 7A, if the user touches and holds a picture 701, the mobile phone determines that the to-be-shared content selected by the user is the picture 701.

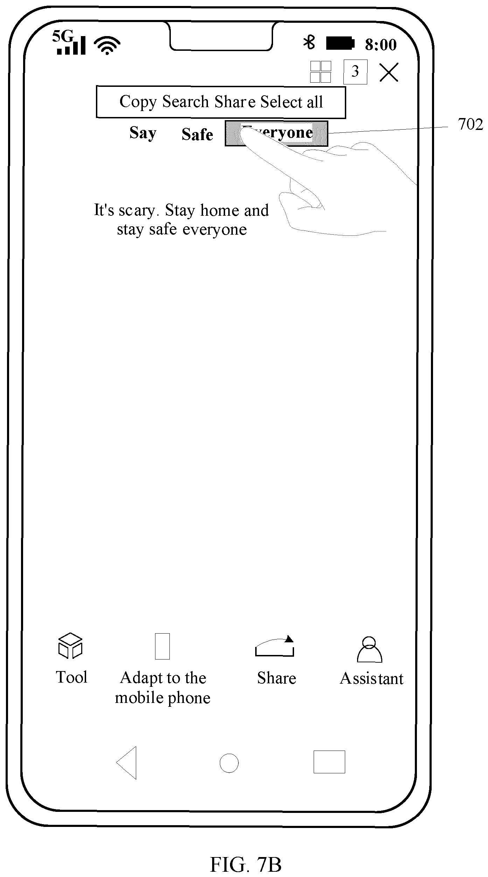

For another example, as shown in FIG. 7B, if the user touches and holds a partial area of a document displayed on the mobile phone, the mobile phone may first prompt a text of a part pressed by a finger of the user, for example, a word "Everyone" 702. As shown in FIG. 7B, the mobile phone may not only display the text of the part pressed by the finger of the user, but also display an option menu (for example, Search, Share, Copy, and Select all). The user may tap the menu "Share". In response to a tap operation performed by the user, the mobile phone determines that "Everyone" 702 is the to-be-shared content selected by the user.

The user may select one or more pieces of content from the mobile phone as to-be-shared content by using the capturing gesture shown in FIG. 6(c).

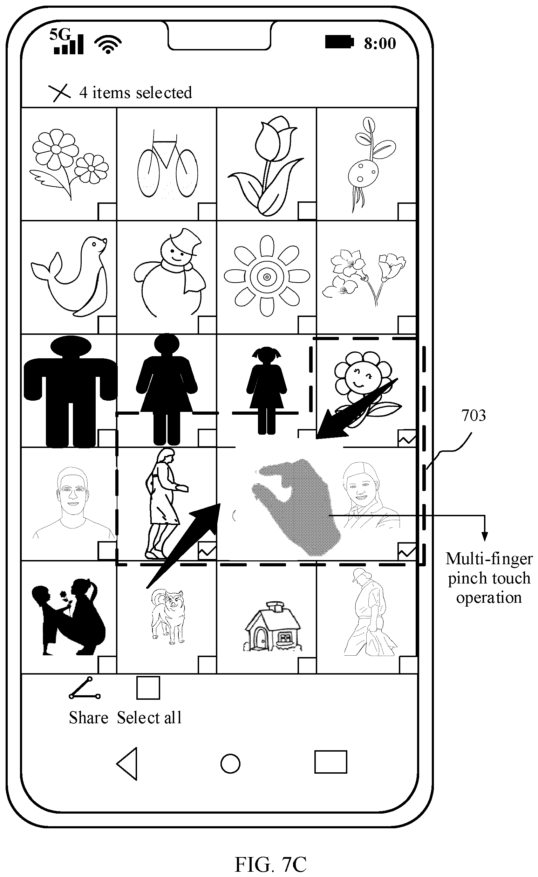

For example, the user taps a Gallery app displayed on the mobile phone, and the mobile phone displays 16 images in FIG. 7C in the first interface. If the user makes a pinch gesture in FIG. 6(c) in the first interface, the mobile phone may determine to use four images in a curve 703 in FIG. 7C as a plurality of pieces of to-be-shared content selected by the user.

The user may drag and drop an application window on the mobile phone or the large-screen device by using the gestures shown in FIG. 6(b) to FIG. 6(e), to use, as to-be-shared content, the application window selected by using the gesture. The application window may be a window corresponding to any application running on the mobile phone or the large-screen device. For example, the application may be WeChat, Gallery, Mobile phone manager, or Sports and Health.

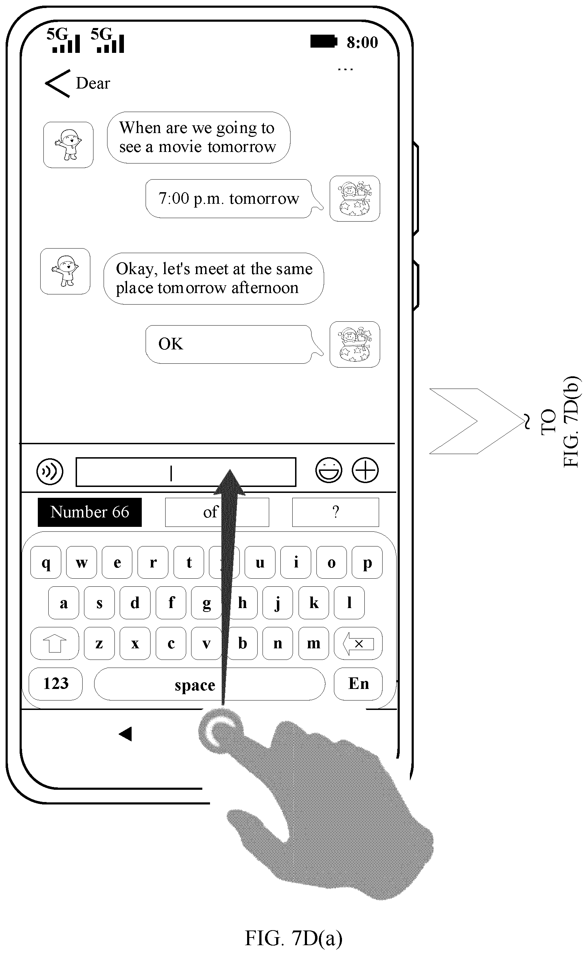

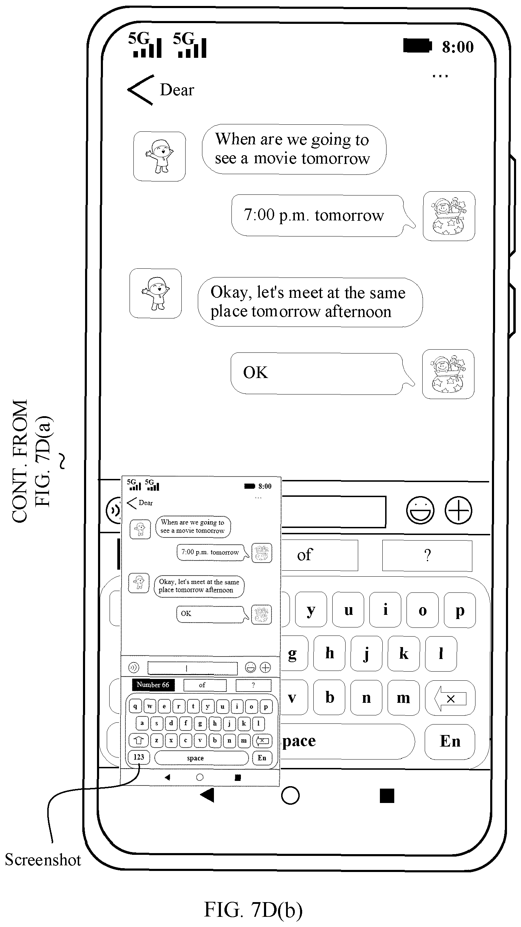

For example, as shown in FIG. 7D(a), the mobile phone displays a dialog window of the WeChat application, and the user makes the capturing gesture in FIG. 6(b) in the dialog window of the WeChat application. In this case, as shown in FIG. 7D(b), the mobile phone determines that a screenshot is the to-be-shared content selected by the user.

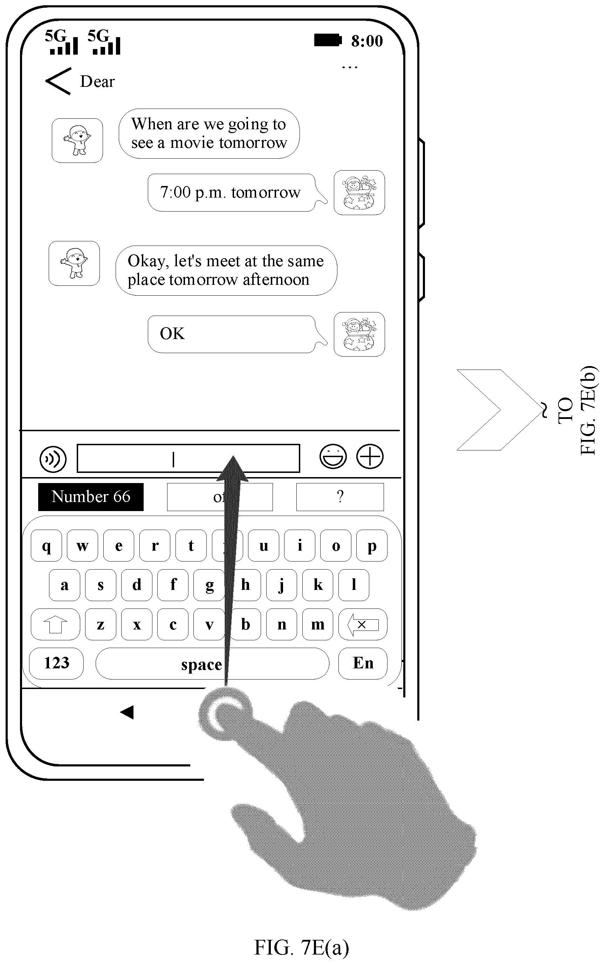

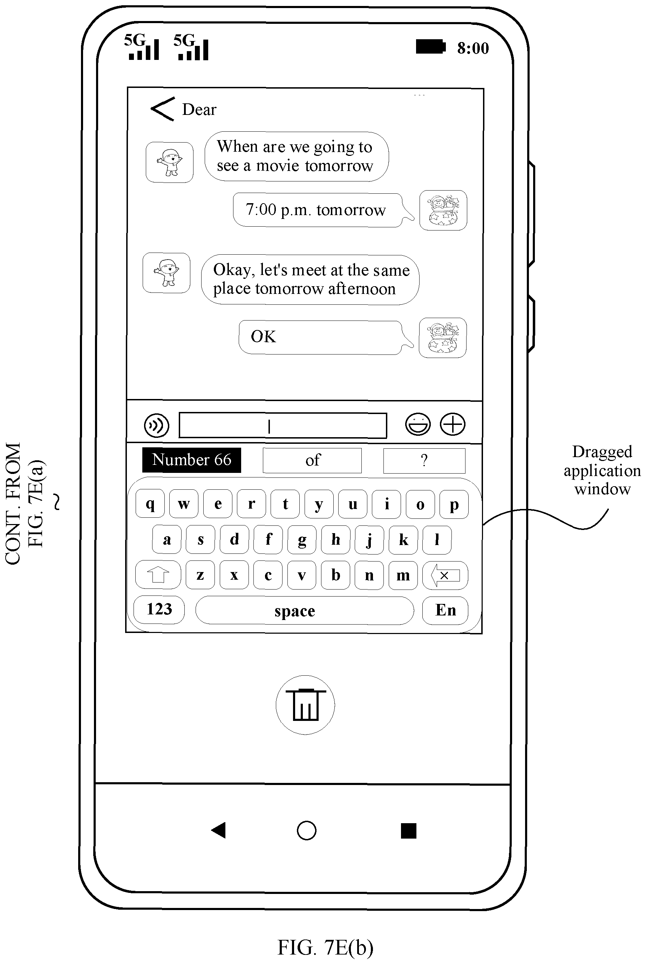

For another example, as shown in FIG. 7D(a), the mobile phone displays a dialog window of the WeChat application, and the user makes the capturing gesture in FIG. 6(b) in the dialog window of the WeChat application. In this case, as shown in FIG. 7E(b), if the mobile phone drags the dialog window of the application in response to the capturing gesture of the user, the mobile phone determines that the dragged dialog window of the application is the to-be-shared content selected by the user.

It should be noted that, when the user makes the capturing gesture in the dialog window of the WeChat application, the mobile phone may prompt the user with information indicating whether the capturing gesture is to obtain a screenshot or to drag the application window. If the user chooses to obtain a screenshot, the mobile phone performs an operation shown in FIG. 7E(a). If the user chooses to drag the application window, the mobile phone performs an operation shown in FIG. 7E(b).

It should be noted that a thumbnail of the application window is a picture obtained after the screenshot shown in FIG. 7D(b) is scaled down based on a preset proportion.

Certainly, the user may also drag the application window in a manner such as the mid-air gesture or the palm press gesture.

Table 1 shows categories of to-be-shared content corresponding to different types of capturing gestures.

**Table 1**

| Capturing gesture | To-be-shared content |
|---|---|
| Single-user or multi-user touch and hold | Select a single file (a picture, a document, audio, a video, a web page link, or a text) |
| Operation of drawing a circle track shown in FIG. 6(f) | Obtaining a text from a document or a web page |
| Pinch operation/gesture | Select a plurality of files |
| Palm press gesture or mid-air gesture | Application window or an opened file |

FIG. 8 is an example of a release gesture according to an embodiment of this application.

In an example, the release gesture is a multi-finger pinch operation/gesture shown in (a) in FIG. 8.

In an example, the release gesture is a palm press gesture shown in (b) in FIG. 8 (for example, a user presses a target object by using 3D touch). Compared with a finger, a part of a palm in contact with a touchscreen has a larger size. A plurality of sampling points including a fingertip and a palm edge are in contact with the touchscreen, and all the plurality of sampling points form a sensing signal on the touchscreen. Therefore, when detecting a palm press gesture made by the user on a large-screen device, the large-screen device may determine that the user triggers the large-screen device to obtain to-be-shared content from a mobile phone.

In some embodiments, a palm press detection policy may be further configured on the large-screen device, and may be used to reduce a false detection event of the palm press gesture.

For example, in a detection policy, when a palm of the user is in contact with the large-screen device, and the large-screen device detects that pressure generated by the palm on the large-screen device is greater than or equal to a preset pressure value, the large-screen device may determine that the user triggers the palm press gesture. However, when the large-screen device detects that the pressure generated by the palm on the large-screen device is less than the preset pressure value, the large-screen device may consider that the user does not trigger the palm press gesture. The preset pressure value may be set based on a requirement. This is not limited in this embodiment of this application.

In another detection policy, when a palm of the user is in contact with the large-screen device, if a time period for which the palm of the user is in contact with the large-screen device exceeds a preset time threshold (for example, 5 seconds), the large-screen device may determine that the user triggers the palm press gesture. However, when the palm of the user is in contact with the large-screen device, if the time period for which the palm of the user is in contact with the large-screen device is less than the preset time threshold (for example, 5 seconds), the large-screen device may determine that the user does not trigger the palm press gesture.

In another example, the release gesture is a mid-air gesture shown in (c) in FIG. 8. The mid-air gesture is a gesture made by the user without being in contact with an electronic device.

In some embodiments, if the large-screen device detects a hand of the user, and determines that the hand of the user is not in contact with the large-screen device, the large-screen device may determine that the user triggers the mid-air gesture.

In some embodiments, a detection policy may be further configured on the large-screen device, and may be used to reduce a false detection event of the mid-air gesture. For example, in a detection policy, when the hand is not in contact with the large-screen device and a distance between the hand and the large-screen device is less than or equal to a preset value 1 (for example, 20 cm), the large-screen device may determine that the user triggers the mid-air gesture. However, when the distance between the hand and the large-screen device is greater than the preset value 1, the large-screen device may consider that the user does not trigger the mid-air gesture.

For another example, in another detection policy, when the hand is not in contact with the large-screen device and a size of the hand detected by the large-screen device is greater than or equal to a preset value 2 (for example, 9 cm), the large-screen device may determine that the user triggers the mid-air gesture; and when the size of the detected hand is less than the preset value 2, the large-screen device may consider that the user does not trigger the mid-air gesture.
1. How to enable a gesture monitoring function (which may also be referred to as a gesture monitoring service).

In a possible embodiment, a first gesture and a second gesture in an embodiment of this application are different gestures. A capturing gesture may be any gesture shown in FIG. 8, and a release gesture may be a gesture shown in FIG. 6(a) to FIG. 6(f). This is not limited in this embodiment of this application.

In this embodiment of this application, before a user makes the capturing gesture on a mobile phone, a gesture monitoring function of the mobile phone needs to be enabled. In other words, the mobile phone needs to enable the gesture monitoring function of the mobile phone.

When the gesture monitoring function of the mobile phone is enabled, if the mobile phone serves as a source electronic device and provides to-be-shared content to a target electronic device, the capturing gesture may also trigger the mobile phone to enter a content sharing mode (which may also be referred to as a casting mode), so that the mobile phone determines, in response to the capturing gesture of the user, the to-be-shared content selected on the mobile phone by using the capturing gesture. If the mobile phone serves as a destination electronic device and receives to-be-shared content from a source electronic device, when the gesture monitoring function of the mobile phone is enabled, the mobile phone may enter a content display mode when detecting a release gesture of the user. In other words, the mobile phone displays, on the mobile phone in response to the release gesture of the user, a thumbnail of the to-be-shared content provided by the source electronic device.

In this embodiment of this application, when the gesture monitoring function of the mobile phone is disabled, even if the mobile phone detects the capturing gesture of the user, the mobile phone may not respond to the capturing gesture entered by the user. In this way, a case in which the content sharing mode is entered due to wrong triggering can be avoided.

In an embodiment of this application, when the gesture monitoring function of the mobile phone is disabled, if the mobile phone detects the capturing gesture or the release gesture entered by the user, the mobile phone may further prompt the user with information indicating whether to enable the gesture monitoring function. After the prompt, if the mobile phone does not detect an operation that the user indicates to enable the gesture monitoring function, the mobile phone considers by default that the user does not enable the gesture monitoring function. In this way, wrong triggering can be avoided. After the prompt, the mobile phone enables the gesture monitoring function if the mobile phone detects the operation that the user indicates to enable the gesture monitoring function.

In this embodiment of this application, the operation that the user indicates to enable the gesture monitoring function may be a voice instruction of the user, an operation that the user presses a physical button on the mobile phone, a touch operation performed by the user on a touchscreen, an operation that the user shakes the mobile phone, the user, or the like.

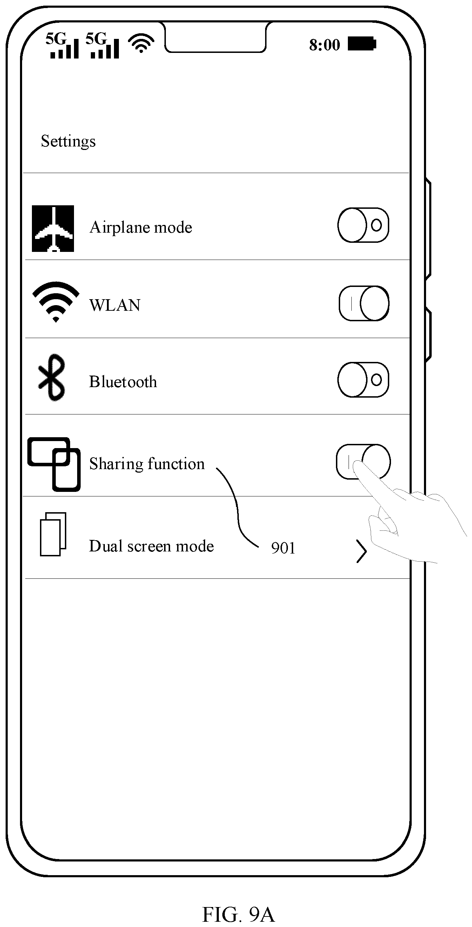

For example, as shown in FIG. 9A, the user may tap a sharing function 901 in a setting interface of the mobile phone, and the mobile phone enables the gesture monitoring function of the mobile phone in response to an operation that the user taps the sharing function 901.

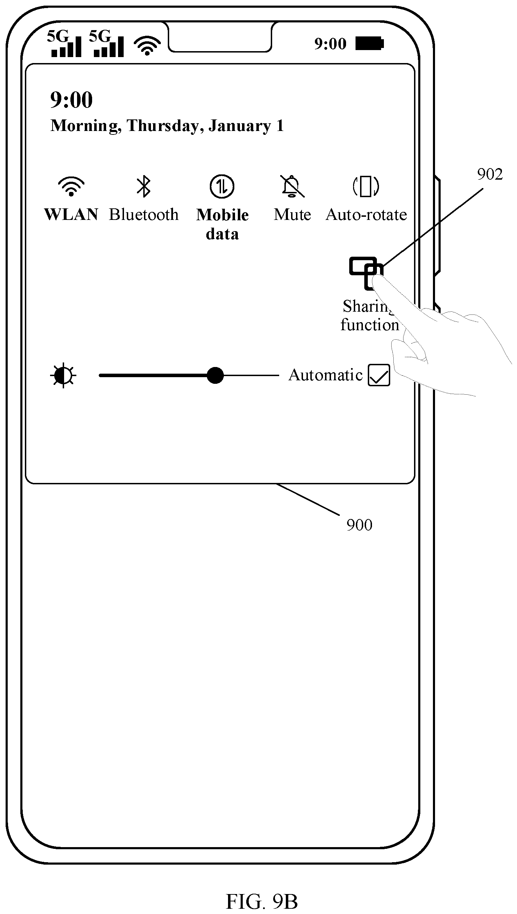

For another example, in another implementation, the mobile phone may further provide a shortcut option. For example, as shown in FIG. 9B, a sharing function control 902 may be provided in a notification bar 900, and the user may tap the sharing function control 902. The mobile phone enables the gesture monitoring function of the mobile phone in response to an operation that the user taps the sharing function control 902.

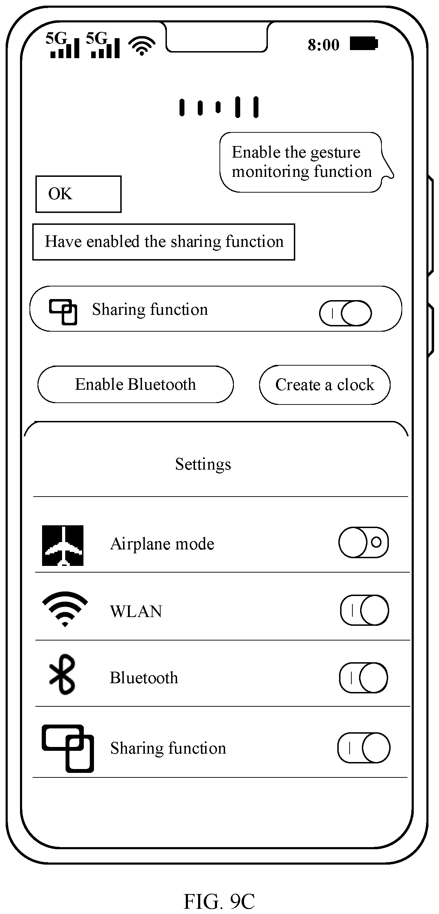

For another example, as shown in FIG. 9C, the user may enable the gesture monitoring function by entering a voice instruction. For example, if the mobile phone detects that the user indicates, by using a voice, to enable the gesture monitoring function, the mobile phone enables the sharing function in response to the voice instruction of the user, to enable the gesture monitoring function of the mobile phone. This is not particularly limited in this embodiment.

Certainly, in still another example, the user may further operate a specific gesture on the mobile phone, to trigger the mobile phone to enable the gesture monitoring function. The specific gesture is used to trigger the mobile phone to enable the gesture monitoring function. For example, the user may trigger the mobile phone to enable the gesture monitoring function in a plurality of manners such as entering a double-tap operation, entering a knuckle double-tap operation, entering a knuckle tap operation and drawing a circle on the mobile phone.

In some embodiments, the mobile phone enables the gesture monitoring function by default, and the capturing gesture or the release gesture of the user may be detected when a touchscreen of the mobile phone is in a screen-on state or a screen-off state.

For example, a low-power processor in the mobile phone may support the mobile phone in the screen-off state to continuously use a detection component such as a camera, a touchscreen, an infrared sensor, or an ultrasonic sensor to detect whether the mid-air gesture is triggered. For example, the low-power processor may be a sensor hub sensor hub.

In some other embodiments, the mobile phone disables the gesture monitoring function by default in the screen-off state, and enables the gesture monitoring function by default when the touchscreen is in the screen-on state. In the screen-off state, the mobile phone enables the gesture monitoring function only after detecting an operation that the user indicates to enable the gesture monitoring function. If the mobile phone is in the screen-off state, the user may not want to operate the mobile phone currently, and the mobile phone enables the gesture monitoring function after detecting the operation that the user indicates to enable the gesture monitoring function, to avoid a wrong operation and improve operation accuracy.

For example, in a technical solution, in the screen-on state, if the touchscreen is unlocked currently, the mobile phone automatically enables the gesture monitoring function, to avoid a wrong operation caused by detecting the capturing gesture when the touchscreen is not unlocked.

For example, in a technical solution, in the screen-on state, if the touchscreen is not unlocked currently, the mobile phone continues to keep the gesture monitoring function disabled. Although the touchscreen is in the screen-on state, but the touchscreen is not unlocked, it indicates that the user may temporarily use the mobile phone only to view a time point, and the like, and does not want to browse content in the mobile phone. Therefore, the mobile phone continues to keep the gesture monitoring function disabled, to avoid the wrong operation caused by detecting the capturing gesture when the touchscreen is not unlocked.

For example, in a technical solution, even if the gesture monitoring function is enabled, but the touchscreen is not unlocked, if the mobile phone detects the capturing gesture of the user, the mobile phone may not respond to the capturing gesture. If the touchscreen is not unlocked, it indicates that the user temporarily does not want to use the mobile phone. Therefore, a response operation is not performed when the capturing gesture of the user is detected, to prevent content in the mobile phone from being disclosed due to a wrong operation.

For example, in another technical solution, if the touchscreen is on, regardless of whether the touchscreen is unlocked, the mobile phone automatically enables the gesture monitoring function. Because the touchscreen is usually lit up after a light-up operation of the user is detected, and usually, the user lights up the touchscreen to use the mobile phone or the user is paying attention to the mobile phone, the mobile phone may also detect the capturing gesture actively sent by the user, to directly operate the mobile phone by using the capturing gesture, and reduce an operation that the user unlocks the touchscreen.

In some other embodiments, the mobile phone disables the gesture monitoring function by default, and enables the gesture monitoring function of the mobile phone only after detecting an operation that the user indicates to enable the gesture monitoring function.

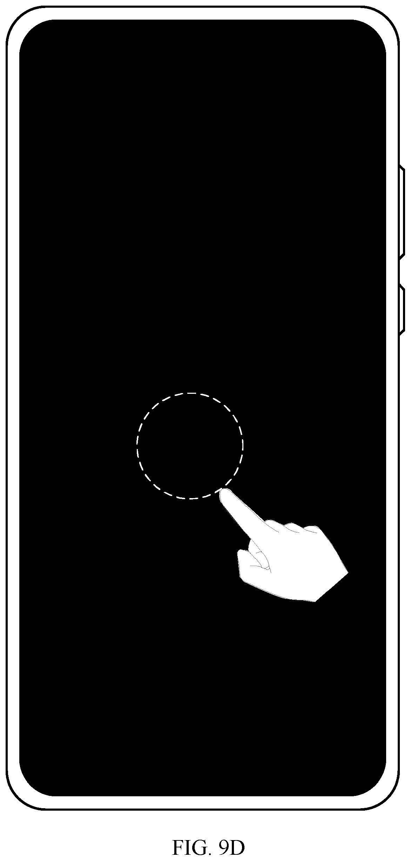

For example, in the screen-off state, the touchscreen of the mobile phone does not display content, but a touch function of the touchscreen is enabled. When a finger of the user slides on the touchscreen, the touchscreen starts to display content, and the displayed content is a sliding gesture track of the user on the touchscreen. Refer to FIG. 9D. After detecting an operation that the user draws a circle track on the touchscreen, the mobile phone displays the track, and enables a gesture monitoring function. Alternatively, in the screen-off state, after detecting an operation that the user draws a "z" track on the touchscreen, the mobile phone displays the track, and enables the gesture monitoring function.

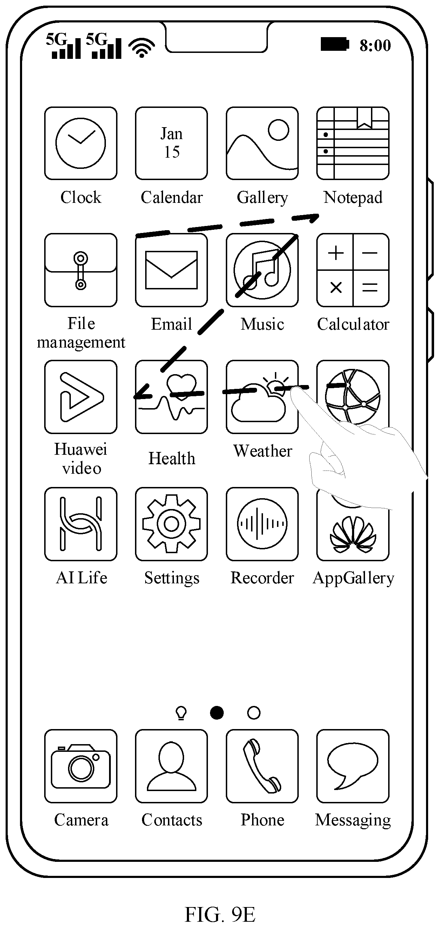

For another example, referring to FIG. 9E, in the screen-on state, after detecting an operation that the user draws a "z" track on the touchscreen by using a knuckle, the mobile phone enables the gesture monitoring function.

In some other embodiments, the mobile phone enables the gesture monitoring function in the screen-on state by default, and after the mobile phone switches to the screen-off state, prompts the user with information indicating whether to continue to enable the gesture monitoring function. The mobile phone continues to enable the gesture monitoring function after detecting an operation that the user indicates to enable the gesture monitoring function.

In some other embodiments, when a communication connection is established between the mobile phone and a large-screen device, the mobile phone automatically enables the gesture monitoring function. In most cases, the user may establish a communication connection between the mobile phone and the large-screen device to transmit content on one device to another device. Therefore, when a communication connection is established between the mobile phone and the large-screen device, if the gesture monitoring function of the mobile phone is not enabled, the mobile phone may automatically enable the gesture monitoring function. If a gesture monitoring function of the large-screen device is not enabled, the large-screen device may also automatically enable the gesture monitoring function of the large-screen device, to reduce an operation that the user enables the gesture monitoring function.

In some other embodiments, when a communication connection is established between the mobile phone and a large-screen device, the mobile phone prompts the user with information indicating whether to enable the gesture monitoring function. The mobile phone enables the gesture monitoring function only after detecting an operation that the user indicates to enable the gesture monitoring function. For example, the large-screen device is a computer. If a communication connection is established between the mobile phone and the computer in a wired manner, the mobile phone may be charged by establishing a communication connection to the computer. Alternatively, in order that the user stores content in the mobile phone in the computer or stores a file in the computer in the mobile phone, the mobile phone is used to prompt the user with information indicating whether to enable the gesture monitoring function, to avoid wrong triggering.

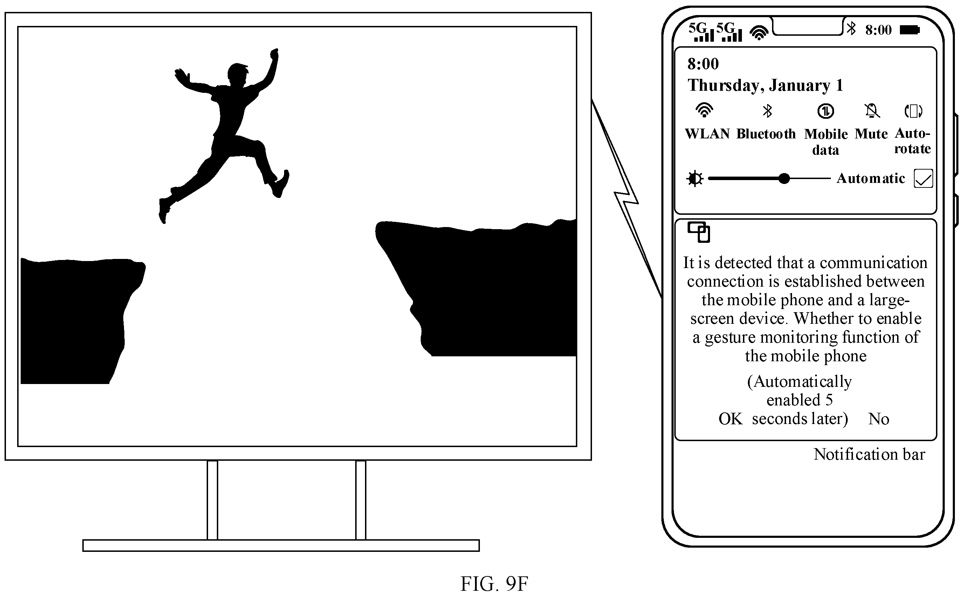

In some other embodiments, when a communication connection is established between the mobile phone and the large-screen device, the mobile phone may receive a broadcast message from the large-screen device. The broadcast message is used to indicate the mobile phone to enable the gesture monitoring function of the mobile phone. In this case, the mobile phone may enable the gesture monitoring function of the mobile phone based on the broadcast message. Certainly, after the mobile phone receives the broadcast message, the mobile phone may pop up a notification bar shown in FIG. 9F, to prompt the user with information indicating whether to enable the gesture monitoring function of the mobile phone. If the user agrees to enable the gesture monitoring function, the mobile phone enables the gesture monitoring function of the mobile phone. In addition, optionally, time information may be further displayed in the notification bar shown in FIG. 9F, and the time information is used to prompt information indicating that the mobile phone automatically enables the gesture monitoring function of the mobile phone after a preset time period (for example, 5 seconds).

In this embodiment of this application, before the user makes the capturing gesture or the release gesture on the large-screen device, the gesture monitoring function (which may also be referred to as a gesture monitoring service) of the large-screen device needs to be enabled. In other words, the large-screen device needs to enable the gesture monitoring function of the mobile phone.

The foregoing describes a process in which the mobile phone enables the gesture monitoring function of the mobile phone. In an actual process, the user may also enable the gesture monitoring function of the large-screen device in the foregoing described manner of enabling the gesture monitoring function of the mobile phone. This is not limited in this embodiment of this application.

In another example, the gesture monitoring service of the large-screen device may be enabled when being triggered by the communication connection established between the mobile phone and the large-screen device. To be specific, when a communication connection is successfully established between the mobile phone and the large-screen device, the large-screen device displays a prompt box to prompt the user with information indicating whether to enable the gesture monitoring service of the large-screen device. If the user agrees to enable the gesture monitoring service of the large-screen device, the large-screen device enables the gesture monitoring function of the large-screen device. Specifically, when a communication connection is successfully established between the mobile phone and the large-screen device, and the large-screen device determines that the communication connection is established to share the to-be-shared content in the mobile phone with the large-screen device, the large-screen device pops up the prompt box.

In still another example, after a communication connection is established between the mobile phone and the large-screen device, if the mobile phone has cached one or more pieces of to-be-shared content, the mobile phone may send a notification message to the large-screen device. The notification message is used to indicate the large-screen device to enable the gesture monitoring function of the large-screen device. In response to the notification message, the large-screen device automatically enables the gesture monitoring function of the large-screen device. Alternatively, after receiving the notification message, the large-screen device pops up a prompt interface, to prompt the user to enable the gesture monitoring function of the large-screen device. The large-screen device enables the gesture monitoring function of the large-screen device only when the user agrees.

In an embodiment of this application, when the user determines that the to-be-shared content in the mobile phone has been shared with the large-screen device, the user may indicate the mobile phone or the large-screen device to disable the gesture monitoring function. Alternatively, when the gesture monitoring function is enabled, if the mobile phone or the large-screen device determines that no release gesture or capturing gesture of the user is detected within a preset time period (for example, 10 minutes), the mobile phone automatically disables the gesture monitoring function of the mobile phone, or the large-screen device automatically disables the gesture monitoring function of the large-screen device. In this way, power of the mobile phone or the computer can be prevented from being consumed when the gesture monitoring function is enabled.

In still another embodiment of this application, if the mobile phone has a communication connection to a large-screen device, when the mobile phone determines that the communication connection to the large-screen device is disconnected, the mobile phone disables the gesture monitoring function of the mobile phone. For example, if the mobile phone and the large-screen device access a same Wi-Fi network, and a communication connection is established between the mobile phone and the large-screen device, when the mobile phone leaves the Wi-Fi network and is located outside a coverage area of the Wi-Fi network, the mobile phone determines that the communication connection between the mobile phone and the large-screen device is disconnected, and the mobile phone disables the gesture monitoring function of the mobile phone. Similarly, if the large-screen device determines that the communication connection between the large-screen device and the mobile phone is disconnected, the large-screen device disables the gesture monitoring function of the large-screen device, to avoid a case in which the user forgets to disable the gesture monitoring function due to negligence.

In still another embodiment of this application, if the mobile phone has a communication connection to two or more large-screen devices, when the mobile phone determines that the communication connection to all the large-screen devices is disconnected, the mobile phone disables the gesture monitoring function of the mobile phone. For example, the mobile phone and a large-screen device 1 access a same Wi-Fi network, and a communication connection is established between the mobile phone and the large-screen device 1 by using the Wi-Fi network. In addition, the mobile phone further establishes a communication connection to a large-screen device 2 by using Bluetooth. If the communication connection between the mobile phone and the large-screen device 1 is first disconnected, the mobile phone may not disable the gesture monitoring function of the mobile phone. After the communication connection between the mobile phone and the large-screen device 2 is also disconnected, the mobile phone may disable the gesture monitoring function of the mobile phone.

In yet another embodiment of this application, when the mobile phone determines that the communication connection between the mobile phone and the large-screen device is disconnected, the mobile phone displays prompt information. The prompt information is used to remind the user of whether to disable the gesture monitoring function of the mobile phone. The mobile phone may determine, based on an indication of the user, whether to disable the gesture monitoring function of the mobile phone. For example, if the user agrees to disable the gesture monitoring function, the mobile phone disables the gesture monitoring function of the mobile phone. In an actual operation process, although the communication connection between the mobile phone and the large-screen device is disconnected, not every disconnection of the communication connection is a normal disconnection, and the communication connection may also be disconnected due to another reason (for example, the Wi-Fi network temporarily disappears due to a power failure), the user expects to still share content with the large-screen device after the Wi-Fi network is restored. Therefore, if the mobile phone blindly disables the gesture monitoring function of the mobile phone, operation inconvenience may be caused to the user. Therefore, if the gesture monitoring function is disabled after the user agrees, it indicates that the user temporarily does not select the to-be-shared content on the mobile phone by using a gesture.

The mobile phone or the large-screen device may remind, in the following manner, the user of whether to disable the gesture monitoring function, for example, by using a voice prompt, a vibration prompt, or prompt information displayed on the mobile phone or the large-screen device. This is not limited in this embodiment of this application.

In another embodiment of this application, when the large-screen device determines that the communication connection between the large-screen device and the mobile phone is disconnected, the large-screen device displays prompt information, to remind the user of whether to disable the gesture monitoring function of the large-screen device. If the user agrees to disable the gesture monitoring function of the large-screen device, the large-screen device disables the gesture monitoring function of the mobile phone.

In an optional example, when determining that no release gesture or capturing gesture of the user is detected within a preset time period (for example, 10 minutes), the mobile phone or the large-screen device first prompts the user with information indicating whether to disable the gesture monitoring function of the mobile phone or the gesture monitoring function of the large-screen device. When the user agrees to disable the gesture monitoring function of the mobile phone or the gesture monitoring function of the large-screen device, the mobile phone or the large-screen device performs an operation of disabling respective gesture monitoring function.

In an embodiment of this application, when the gesture monitoring function of the mobile phone or the large-screen device is enabled, the mobile phone or the large-screen device may detect a gesture of the user by using a detection component such as a camera, a touchscreen, an infrared sensor, or an ultrasonic sensor. For example, the mobile phone may detect the capturing gesture of the user. The large-screen device may detect the release gesture of the user.

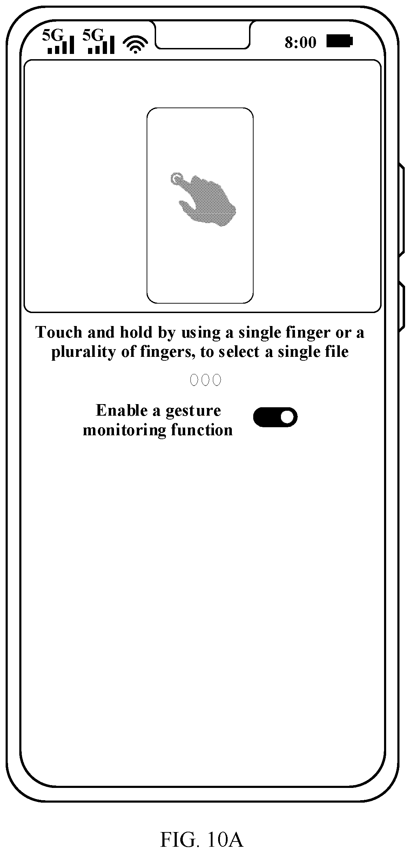

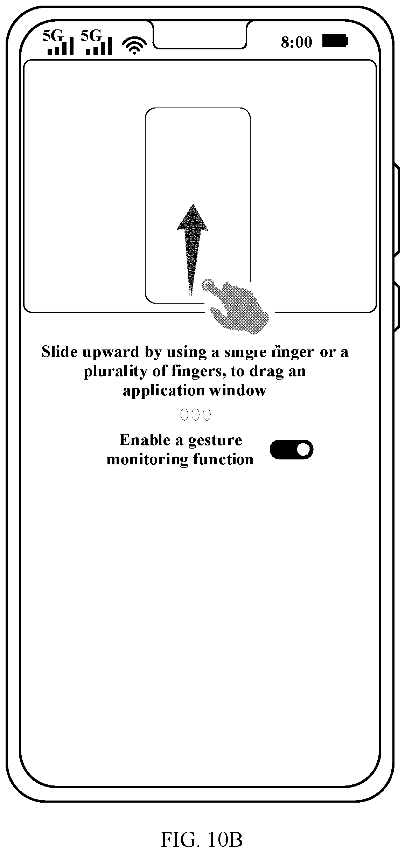

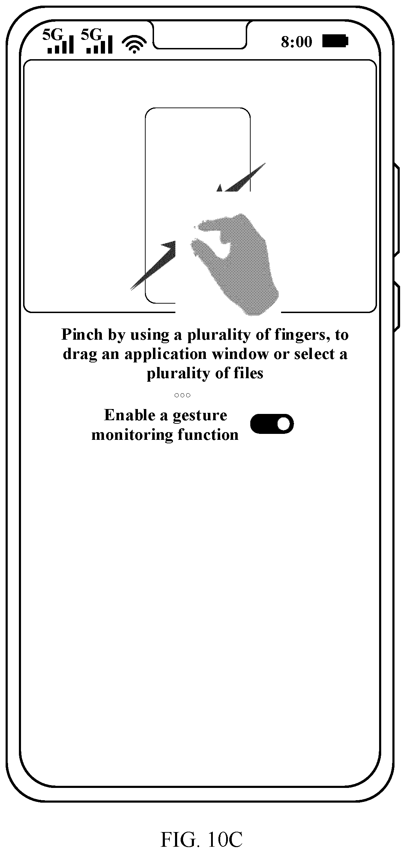

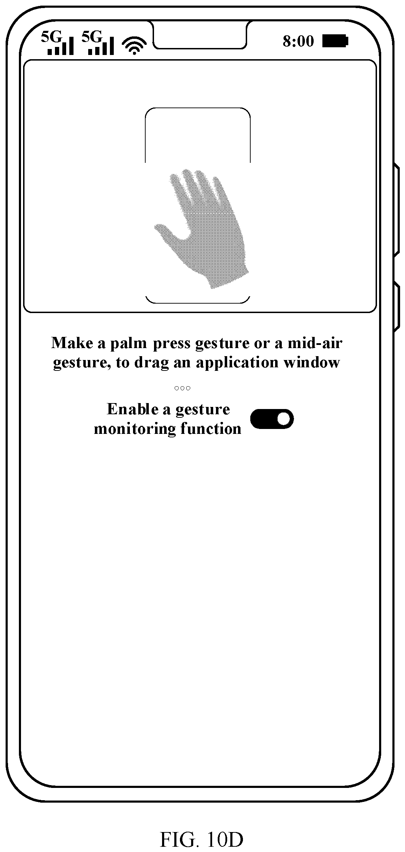

In an embodiment of this application, the release gesture and the capturing gesture are set in the mobile phone and the large-screen device by default. In other words, the release gesture and the capturing gesture are set before the mobile phone is delivered from a factory. This is not limited in this embodiment of this application. As shown in FIG. 10A to FIG. 10D, each capturing gesture is set in the mobile phone by default.

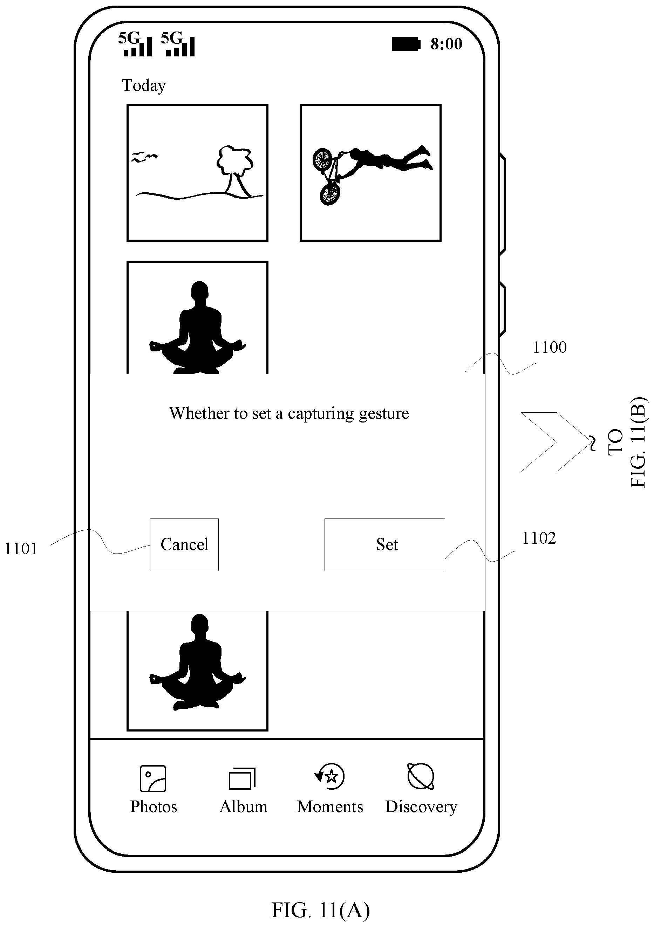

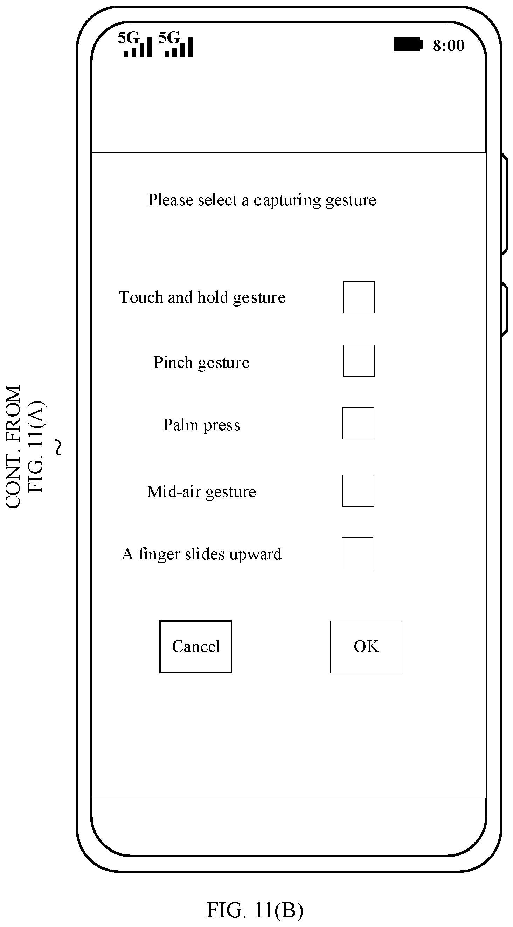

In an embodiment of this application, before the user captures the to-be-shared content in a method provided in this embodiment of this application for a first time to share the content, as shown in FIG. 11(A), the mobile phone may further display prompt information 1100, to indicate the user to set the capturing gesture. The user may tap a control 1102 shown in FIG. 11(A), to enter a gesture setting interface shown in FIG. 11(B). After the mobile phone enters the gesture setting interface, the user may select one of a plurality of capturing gestures prestored in the mobile phone. It may be understood that, if the user taps a control 1101 in an interface shown in FIG. 11(A), the user subsequently selects the to-be-shared content on the mobile phone by using the capturing gesture set in the mobile phone by default.

In an embodiment of this application, to avoid a wrong operation, if the mobile phone detects that a capturing gesture entered by the user matches a preset capturing gesture prestored in the mobile phone, the mobile phone determines, in response to the capturing gesture, to-be-shared content selected by using the capturing gesture.

In an embodiment of this application, to avoid a wrong operation, if the large-screen device detects that a release gesture entered by the user matches a preset release gesture prestored in the large-screen device, the large-screen device displays the to-be-shared content or a thumbnail of the to-be-shared content in response to the release gesture. This is not limited in this embodiment of this application.

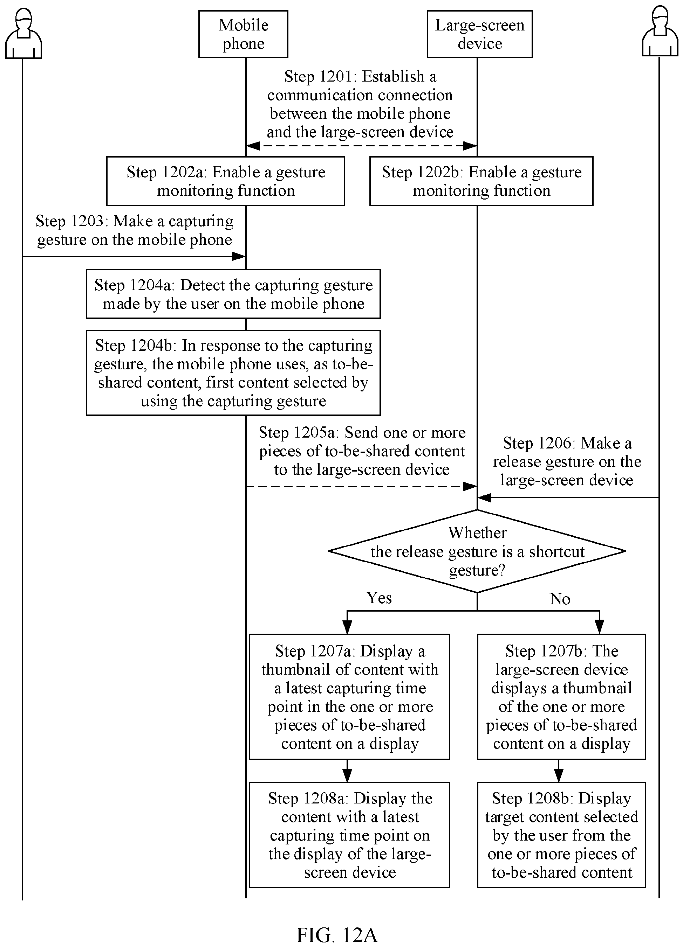

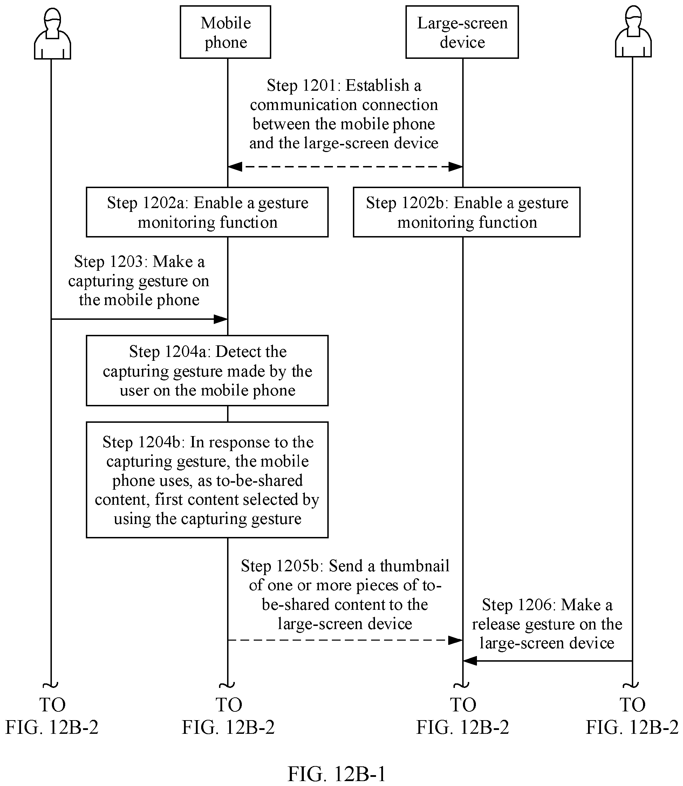

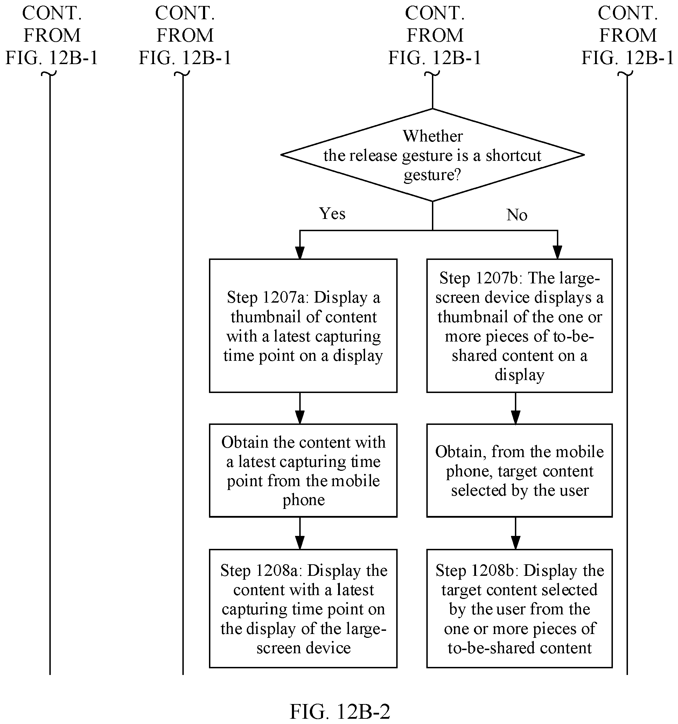

With reference to the foregoing embodiments and corresponding accompanying drawings, an embodiment of this application provides a cross-device content sharing method. The method may be implemented in a mobile phone and a large-screen device that have the hardware structure shown in FIG. 3. As shown in FIG. 12A, the method may include the following steps.

Step 1201: Establish a communication connection between the mobile phone and the large-screen device.

The communication connection may be a wired connection or a wireless connection. This is not limited in this embodiment of this application. The following uses the wireless connection as an example to describe a case in which a communication connection is established between the mobile phone and the large-screen device in this embodiment of this application.

For example, the mobile phone and the large-screen device establish a Bluetooth connection. A user enables a Bluetooth function of the mobile phone and a Bluetooth function of the large-screen device. For example, the user taps a Bluetooth control on the mobile phone shown in FIG. 9A, to enable the Bluetooth function of the mobile phone. For example, the user taps a Bluetooth control on the large-screen device, to enable the Bluetooth function of the large-screen device. After the Bluetooth function of the mobile phone is enabled, the mobile phone broadcasts basic information (for example, a device name) of the mobile phone. After the Bluetooth function of the large-screen device is enabled, the large-screen device broadcasts basic information (for example, a device name) of the large-screen device. In this way, within a specified range, the mobile phone can detect the basic information of the large-screen device, and the large-screen device can also detect the basic information of the mobile phone. For example, after the mobile phone detects the basic information of the large-screen device, the user taps the basic information of the large-screen device. In response to a tap operation performed by the user, the mobile phone sends a connection request to the large-screen device, to request to establish the Bluetooth connection between the mobile phone and the large-screen device. The large-screen device determines to be connected to the mobile phone (performs authentication/authorization), and sends other information such as a media access control (Media Access Control, MAC) address of the large-screen device. The mobile phone obtains the MAC address of the large-screen device, and assigns a new IP address to the large-screen device for Wi-Fi networking. Networking is completed, the mobile phone and large-screen device are in a same local area network and learn of an IP address and a connection port number of each other, and a socket communication condition is met. It should be noted that there are many limitations in a Bluetooth protocol. For example, data transmission is slow, a small amount of data is carried in a single time of communication, multi-device (at least two devices) networking cannot be implemented, and a connection is unstable. Therefore, after obtaining the MAC address of the large-screen device, the mobile phone may perform networking by using a Wi-Fi network, so that multi-device interconnection is supported, data transmission efficiency is much higher, and a connection is stable.

For example, a communication connection is established between the large-screen device and the mobile phone by using the Wi-Fi network. When the mobile phone and the large-screen device access a same Wi-Fi network, and the user taps a sharing function on the mobile phone, the mobile phone may find other information such as the MAC address of the large-screen device. Then, the user taps information about the large-screen device on the mobile phone, to trigger establishment of a communication connection between the mobile phone and the large-screen device.

Step 1202a: The mobile phone enables a gesture monitoring function of the mobile phone.

In an example, when a communication connection is established between the mobile phone and the large-screen device, the mobile phone automatically enables the gesture monitoring function of the mobile phone. For example, a serving-end service scheduling module of the mobile phone registers gesture monitoring with a WMS (Window Manager Service) of the mobile phone, to enable the gesture monitoring function of the mobile phone.

Step 1202b: The large-screen device enables a gesture monitoring function of the large-screen device.

The large-screen device automatically enables the gesture monitoring function of the large-screen device. For example, a client-end service scheduling module of the large-screen device registers gesture monitoring with a WMS of the large-screen device, to enable the gesture monitoring function of the large-screen device.

A sequence of performing step 1202a and step 1202b is not limited.

For a manner in which the mobile phone and the large-screen device enable respective gesture monitoring functions, refer to descriptions in the foregoing embodiments. Details are not described herein again. Certainly, step 1202a and step 1202b may alternatively be performed before step 1201. To be specific, the user enables respective gesture monitoring functions of the mobile phone and the large-screen device, and then establishes a communication connection between the mobile phone and the large-screen device. Alternatively, step 1202a and step 1202b are performed after step 1201. To be specific, the user establishes a communication connection between the mobile phone and the large-screen device, and then the user enables respective gesture monitoring functions of the mobile phone and the large-screen device. Alternatively, step 1202a, step 1202b, and step 1201 are performed simultaneously. For example, in a process of establishing a communication connection between the mobile phone and the large-screen device, the user enables respective gesture monitoring functions of the mobile phone and the large-screen device, or the mobile phone and the large-screen device automatically enable respective gesture monitoring functions. In other words, respective gesture monitoring functions of the mobile phone and the large-screen device are enabled without depending on the communication connection established between the devices.

Step 1203: The user makes a capturing gesture (that is, a second gesture) in a first interface displayed on the mobile phone.

For example, when the user needs to display content in the mobile phone by using the large-screen device, the user may make the capturing gesture on the mobile phone.

It should be noted that, if the mobile phone does not establish a communication connection to the large-screen device before the user makes the capturing gesture on the mobile phone, step 1201 may be omitted. In other words, step 1201 is an optional step.

For example, to-be-shared content in this embodiment of this application may include a picture, a video, audio, a document (a PDF document, a word document, a PPT document, a TXT document, or the like), a compressed package, an application, or an application window.

For example, the picture may be captured by the user by using a camera of the mobile phone, downloaded by using a network or an application, obtained by using a screenshot, copied from another device, obtained by using the mobile phone from an external storage device connected to the mobile phone, or obtained in another manner. This is not limited in this embodiment of this application.

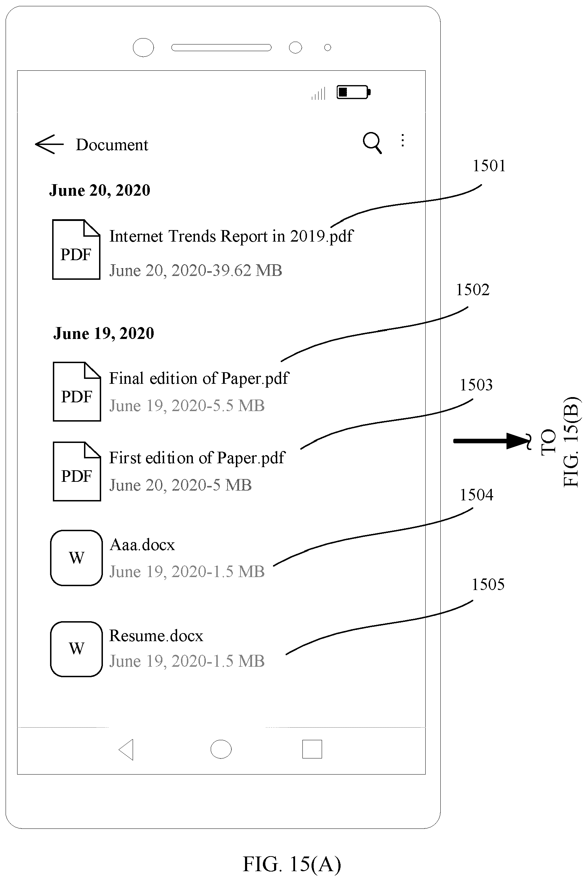

For example, the video may be classified into an online video and a local video. The local video may be a video captured by the user by using a camera of the mobile phone, a video downloaded by using a network or an app, a video stored in a video call process, a video copied from another device, a video obtained in another manner, or a video obtained from an external storage device connected to the mobile phone. The online video may be a video currently browsed by the user by using a web page or a video currently browsed by the user by using a video app shown in FIG. 15(A).

For example, the audio may also include online audio or local audio. The local audio may be audio recorded by the user by using a recording function of the mobile phone, audio downloaded by using a network or an app, audio stored in a video call process, audio copied from another device, or audio obtained in another manner. This is not limited in this embodiment of this application.

For example, the document may be a document created by the user on the mobile phone, a document downloaded by the user from a web page, a document copied from another place, or a document sent by another device to the mobile phone in a manner such as Bluetooth or "One hop". This is not limited in this embodiment of this application. The application may be an application installed on the mobile phone or an installation package of an application that is not installed. For example, the application may be a WeChat application shown in FIG. 7D(a) and FIG. 7D(b). The application window may be a dialog window of WeChat.

Step 1204a: The mobile phone detects the capturing gesture made by the user on the mobile phone.

For example, a touch sensor 380C of the mobile phone may detect the capturing gesture made by the user on the mobile phone.

Step 1204b: In response to the capturing gesture, the mobile phone uses, as to-be-shared content, first content selected by using the capturing gesture.

For example, in response to the capturing gesture detected by the touch sensor 380C, a processor 310 of the mobile phone uses, as to-be-shared content, the first content selected by using the capturing gesture.

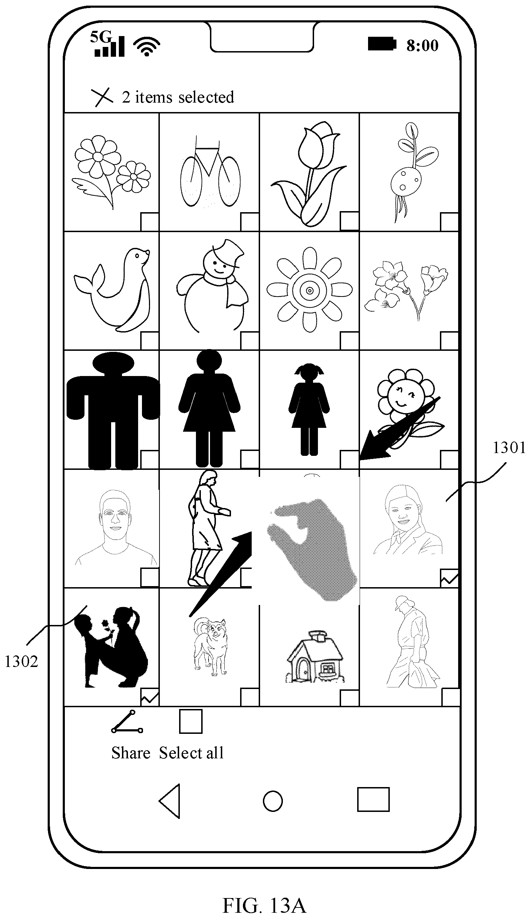

For example, in FIG. 13A, when the user needs to display an image in the mobile phone by using the large-screen device, the user taps a Gallery app running on the mobile phone, and then the mobile phone displays an interface (that is, the first interface) in FIG. 13A. When the user browses an image in Gallery of the mobile phone by using the mobile phone, the user may make a multi-finger pinch gesture on the mobile phone, to select a picture 1301 and a picture 1302 as to-be-shared content.

In this embodiment of this application, the user may capture one piece of content at one time by using the capturing gesture, and select a plurality of pieces of content on the mobile phone by making the capturing gesture for a plurality of times. For example, the user captures the picture 1301 by making the capturing gesture for one time, and the user captures the picture 1302 on the mobile phone by making the capturing gesture again. Alternatively, in this embodiment of this application, the user may capture a plurality of pieces of content at one time by using the capturing gesture, as shown in FIG. 13A.

For example, the to-be-shared content is a text. A document (that is, the first interface) is displayed on the mobile phone. If the user wants to display some texts in the document on the large-screen device, the user may make the capturing gesture on the mobile phone, to select a text in the document as to-be-shared content. For example, the text is "The weather is good today, and it is a busy day. I hope everything goes well today.". In response to the capturing gesture made by the user on the mobile phone, the mobile phone caches the text: "The weather is good today, and it is a busy day. I hope everything goes well today.".

For example, the text may be a text selected, by using the capturing gesture, by the user from a web page that is being browsed, or the text may be a text currently entered by the user on the mobile phone. For example, as shown in FIG. 7D(a) and FIG. 7D(b), the user may use, as to-be-shared content, a text entered when the user chats with a friend by using the WeChat app. For example, if the user wants to share a text "When are we going to see a movie tomorrow", the user may use the capturing gesture on the mobile phone to capture "When are we going to see a movie tomorrow" as to-be-shared content.

It should be noted that the text captured by the user on the mobile phone may be stored by using a database SQLite provided by Android.

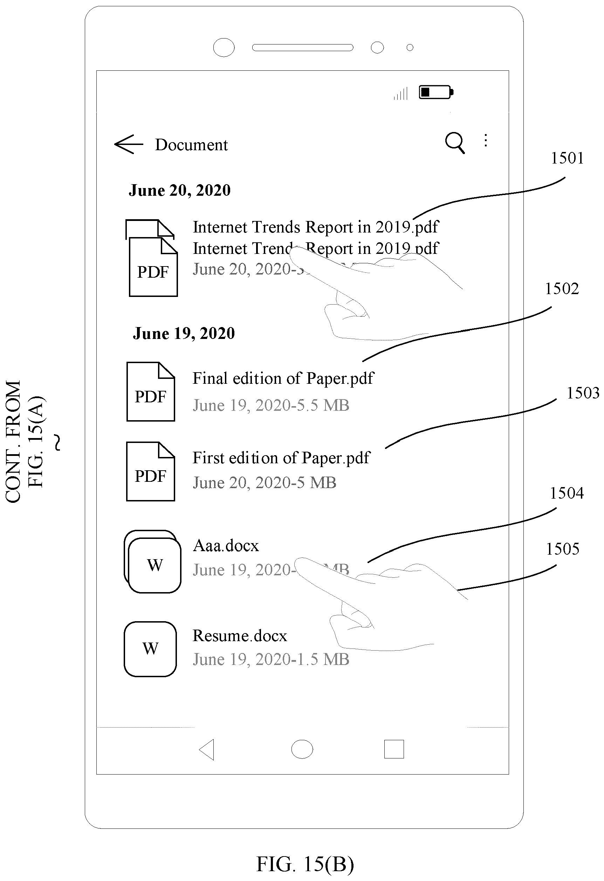

For example, the to-be-shared content is a document (for example, a PDF document, a Word document, or a PPT document). The user taps a file management icon on the mobile phone, or controls, by using a voice instruction, the mobile phone to open a file management icon on the mobile phone. The mobile phone opens a file management app in response to a tap operation performed by the user or the voice instruction. As shown in FIG. 15(A), a plurality of different documents are displayed on the mobile phone. For example, before a conference starts, if the user wants to present, on the large-screen device, a PDF document 1501 and a Word document 1504 on the mobile phone to another participant in the conference, As shown in FIG. 15(B), the user may make the capturing gesture on the mobile phone. In response to the capturing gesture of the user, the mobile phone determines the PDF document 1501 and the Word document 1504 as to-be-shared content.

Optionally, in response to the capturing gesture made by the user on the mobile phone, the mobile phone caches a name of the PDF document 1501 and a name of the Word document 1504.

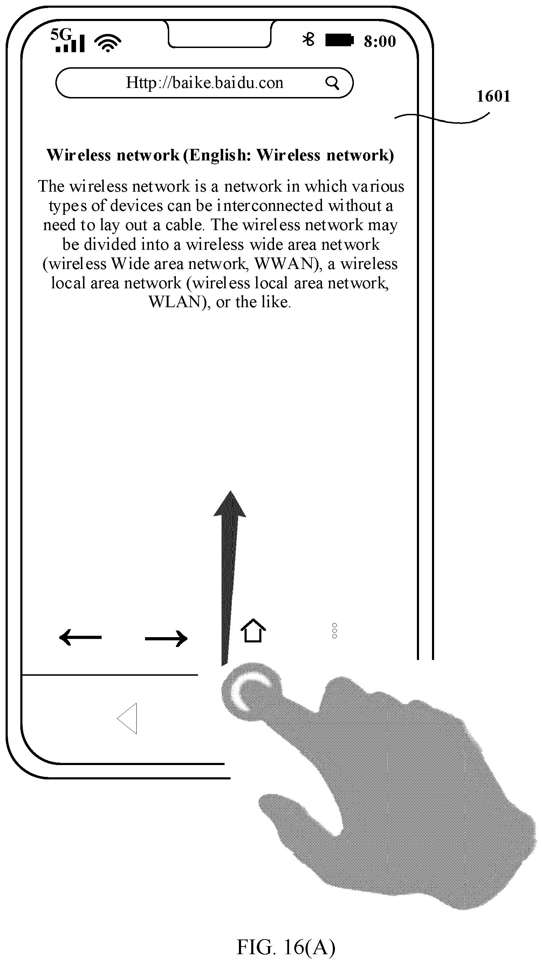

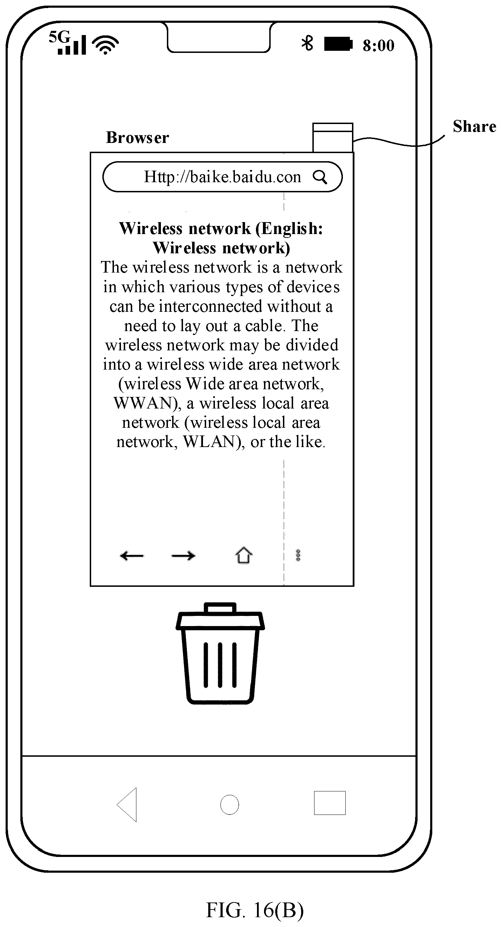

For example, the to-be-shared content is a web page. As shown in FIG. 16(A), the user browses a web page 1601 (that is, the first interface) by using a browser app on the mobile phone. If the user wants to present, on the large-screen device, content of the web page 1601 to another participant in a conference, as shown in FIG. 16(A), the user may make the capturing gesture on the mobile phone. As shown in FIG. 16(B), after the mobile phone drags the web page 1601 and the user taps a "share" control, the mobile phone determines the web page 1601 as to-be-shared content in response to a tap operation performed by the user.

Optionally, in response to the capturing gesture made by the user on the mobile phone, the mobile phone caches a web page address (for example, a URL address) of the web page 1601.

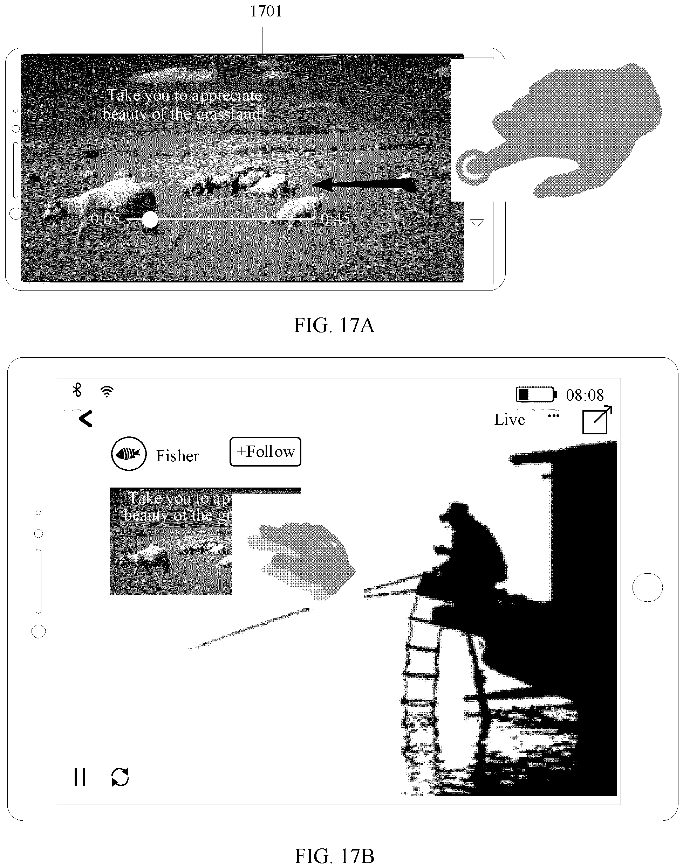

For example, the to-be-shared content is an online video or an online audio file. As shown in FIG. 17A, the user browses an online video 1701 (that is, the first interface) by using the video app on the mobile phone. If the user wants to watch the online video 1701 with a family member or a friend, the user may make the capturing gesture on the mobile phone. In response to the capturing gesture, the mobile phone determines that the online video 1701 is to-be-shared content.

Optionally, in response to the capturing gesture made by the user on the mobile phone, the mobile phone caches an address of the online video 1701. The address of the online video 1701 is used to obtain the online video 1701.

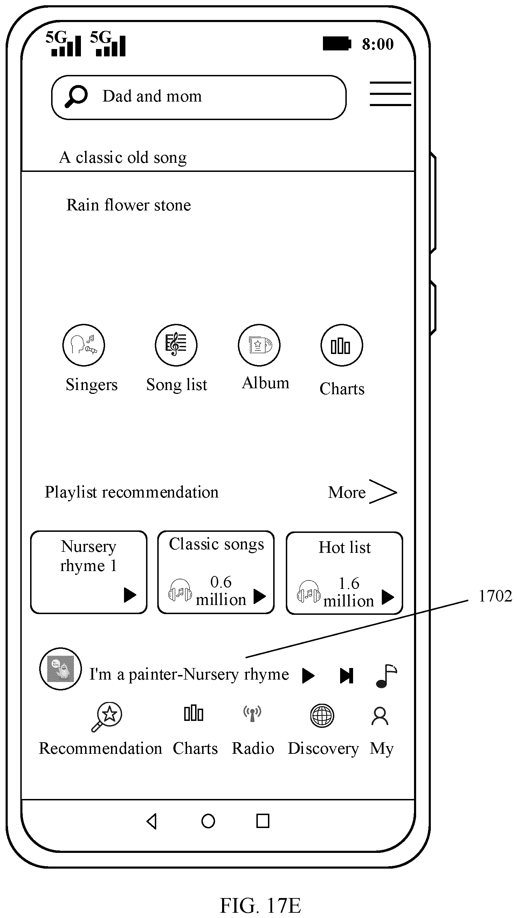

As shown in FIG. 17E, the user listens to online music 1702 by using an audio app on the mobile phone, and the user may make the capturing gesture on the mobile phone. In response to the capturing gesture, the mobile phone determines that the online audio 1702 is to-be-shared content.

In an embodiment of this application, the mobile phone may cache information about the to-be-shared content. For example, the mobile phone has cache space dedicated to caching the to-be-shared content. The to-be-shared content is cached, to subsequently share the to-be-shared content for a plurality of times.

The information about the to-be-shared content may be a name, an address, or a storage location of the to-be-shared content.

For example, when the to-be-shared content is a file such as a picture, a text, a local video, local music, or a document, the mobile phone caches data such as the name of the to-be-shared content. For example, when the to-be-shared content is content such as an online video, an online audio, or a web page, the mobile phone caches data such as a website address of the to-be-shared content. For example, if the to-be-shared content is an application window of a running app, the mobile phone caches an app name and a window screenshot.

In another embodiment of this application, if the content selected by the user on the mobile phone by using the capturing gesture is content stored in storage space of the mobile phone, the mobile phone may mark a state of the content as a first state, to indicate that the content is to-be-shared content that needs to be shared with another device. Compared with a solution in which the mobile phone caches the to-be-shared content, in this solution, occupation of the storage space of the mobile phone may be reduced.

The information about the to-be-shared content is cached, or the state of the content captured by the user on the mobile phone is marked as the first state, so that when the user needs to share the content with another electronic device, the user can share the content in a cache or the content in the first state with the another electronic device.

In another embodiment of this application, after the user selects content on the mobile phone by using the capturing gesture, the mobile phone may prompt the user with information indicating whether to share the content. In response to an operation that is entered by the user and that indicates to share the content, the user determines that the content is to-be-shared content. For example, as shown in FIG. 16(B), the user displays prompt information on the mobile phone. For example, if the user selects a sharing control, the mobile phone determines that the web page 1601 is to-be-shared content.

Because the user may select the to-be-shared content on the mobile phone at different moments, the mobile phone may cache or mark, in a time sequence, the to-be-shared content captured by the user at different moments. Then, the mobile phone may generate a data sending queue based on a capturing time point of the to-be-shared content. The data sending queue is used to identify a capturing time point of each piece of to-be-shared content, and does not include the captured content. The actual captured content is stored in the storage space of the mobile phone.

In addition, the user may capture a plurality of pieces of to-be-shared content at a same moment. In this case, the plurality of pieces of to-be-shared content may have a same capturing time point in the data sending queue.

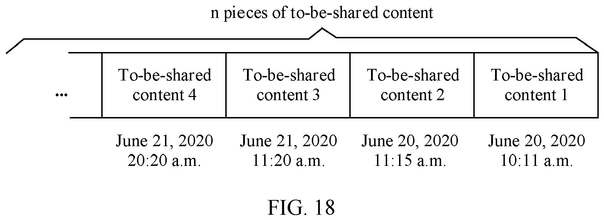

As shown in FIG. 18, the data sending queue includes n pieces of to-be-shared content, and each piece of to-be-shared content corresponds to one time point. The n pieces of to-be-shared content may be content captured by the user at different time points by using the capturing gesture.

In an embodiment of this application, the mobile phone may permanently store the to-be-shared content in a database (or the cache space). Regardless of a time period that passes subsequently, when the to-be-shared content needs to be subsequently shared with the large-screen device in a cross-device manner, the mobile phone reads the to-be-shared content from the database. Permanent storage means that data is stored by using a specific technology (for example, a database technology) and can be extracted and used again in the future. For example, that the to-be-shared content is stored in a permanent medium (for example, a disk) by using the database technology is an example of permanent storage.

In an embodiment of this application, the to-be-shared content has a life cycle. In other words, the information about the to-be-shared content may be released by the mobile phone from the cache space after a period of time. The life cycle of the to-be-shared content may be duration in which the information about the to-be-shared content is cached in the cache space, or duration in which the state of the to-be-shared content is the first state.

The life cycle of the to-be-shared content may be set by the user. In this case, the user may set different life cycles for different to-be-shared content, or the life cycle of the to-be-shared content may be uniformly set by using the mobile phone. To be specific, the mobile phone sets, to 10 minutes, a life cycle of to-be-shared content captured by the user at a moment 1, and also sets, to 10 minutes, a life cycle of to-be-shared content captured at a moment 2. For example, the life cycle is 10 minutes. In this case, when 10 minutes expire, the mobile phone may automatically release the information about the to-be-shared content from the cache space. In other words, the mobile phone deletes the information about the to-be-shared content from the cache space.

In an embodiment of this application, after the life cycle of the to-be-shared content expires, the mobile phone deletes the information about the to-be-shared content or marks the state of the to-be-shared content as a canceled state, because if the life cycle expires, it indicates that the user temporarily does not want to share the to-be-shared content with another device.

In still another embodiment of this application, before the life cycle of the to-be-shared content ends, the mobile phone may further prompt the user with information indicating that the life cycle of the to-be-shared content is to expire and information indicating whether to delete the information about the to-be-shared content from the cache space or mark the state of the to-be-shared content as the canceled state. When the user agrees, the mobile phone deletes the information about the to-be-shared content or marks the state of the to-be-shared content as the canceled state.

In still another embodiment of this application, before the life cycle of the to-be-shared content expires, the mobile phone may further prompt the user with information indicating whether to prolong the life cycle of the to-be-shared content. If the user agrees to prolong the life cycle of the to-be-shared content, the mobile phone prolongs the life cycle of the to-be-shared content again based on an indication of the user. If the user does not agree to prolong the life cycle or the user does not give an indication, the mobile phone determines that the life cycle of the to-be-shared content ends.

In the solution of this embodiment of this application, the life cycle is set for the to-be-shared content. After the life cycle of the to-be-shared content expires, the mobile phone may clear, automatically or with authorization of the user, information about to-be-shared content that is stored for a long period of time. In this way, a case in which excessive information about the to-be-shared content occupies the storage space of the mobile phone can be avoided.

In still another embodiment of this application, to help the mobile phone manage one or more pieces of shared content, the user may set a same life cycle for different to-be-shared content, or may set different life cycles for different to-be-shared content. By way of example rather than limitation, the user may set that a life cycle of to-be-shared content that needs to be shared with different devices for a plurality of times is longer than a life cycle of to-be-shared content with a smaller sharing frequency. For example, if the user wants to share to-be-shared content A with five different large-screen devices, and share to-be-shared content with one large-screen device, the user may set that a life cycle of the to-be-shared content A is greater than a life cycle of the to-be-shared content B.

Based on this, the mobile phone may monitor an actual life cycle of each piece of to-be-shared content cached in the data sending queue. In a specific implementation of this embodiment, when the mobile phone detects that an actual life cycle of specific to-be-shared content in the data sending queue reaches a preset life cycle corresponding to the to-be-shared content, the mobile phone may delete the to-be-shared content from the data sending queue. In another specific implementation of this embodiment, the mobile phone may further perform a deletion operation on the to-be-shared content in the data sending queue under an indication of the user.

In an embodiment of this application, after the user selects the to-be-shared content on the mobile phone by using the capturing gesture, the mobile phone may further indicate the user to set the life cycle of the to-be-shared content.

For example, with reference to FIG. 15(A) and FIG. 15(B), after the user selects the PDF document 1501 and the Word document 1504 as to-be-shared content on the mobile phone, the mobile phone displays a prompt interface, to indicate the user to set a life cycle of one or more pieces of to-be-shared content. For example, the user may separately set the life cycle of the one or more pieces of to-be-shared content. Certainly, the user may also uniformly set a life cycle of one or more pieces of currently captured to-be-shared content. For example, in response to an operation entered by the user, the user sets that a life cycle of the PDF document 1501 and the Word document 1504 that are currently captured is 10 minutes. In this case, the mobile phone caches the name of the PDF document 1501 and the name of the Word document 1504 within 10 minutes from a current time point, and after 10 minutes from the current time point, the mobile phone cancels the name of the PDF document 1501 and the name of the Word document 1504 that are cached.

In an embodiment of this application, before the life cycle of the PDF document 1501 and the Word document 1504 expires, the mobile phone may further prompt the user with duration of a remaining life cycle of the PDF document 1501 and the Word document 1504.

Alternatively, the user may set a deadline date or a deadline time point of the life cycle. For example, the user may set a deadline date June 1, 2020 of the life cycle of the Word document 1504. When the deadline date June 1, 2020 arrives, the mobile phone deletes the name of the Word document 1504 from the cache space.

In an embodiment of this application, the mobile phone in this embodiment of this application may set a label of one or more pieces of to-be-shared content. For example, when the to-be-shared content is a picture (which may be a screenshot or a picture pre-stored in the mobile phone), the label of the to-be-shared content is a picture (for example, pic). When the to-be-shared content is a text, the label of the to-be-shared content is a text (for example, txt). When the to-be-shared content is a document, the label of the to-be-shared content is a file. When the to-be-shared content is an app, the label of the to-be-shared content is an app. The label of the to-be-shared content mainly records a content type and key information (for example, information such as an icon, a name, a text, and a thumbnail, or may be an application interface screenshot or source device information). Content to be released/delivered can be quickly pre-identified when the user makes a cross-device gesture. In this embodiment of this application, if the user captures a picture on the mobile phone by using the capturing gesture, the mobile phone further needs to cache a screenshot picture selected by using the capturing gesture.

It should be noted that, if the to-be-shared content is a screenshot picture, the screenshot picture is named after a device name plus a screenshot plus a timestamp, for example, "phonel1_screenshot_201910291528000.jpg", and stored. Another file is stored by using a device name plus a file name, for example, "phone1_myPhoto.jpg" or "phone1_myDoc.docx".

When the to-be-shared content is a text, the mobile phone stores the to-be-shared content by using the database SQLite provided by Android. When the large-screen device requests a data label preview, the preview is displayed in a form of a device name plus txt plus a few preview text. For example, the text is "The weather is good today, and it is a busy day. I hope everything goes well today." Displayed preview information is "phone1_txt_The weather is ... everything goes well today."

In an embodiment of this application, after the mobile phone obtains the to-be-shared content, if no communication connection is established between the mobile phone and the large-screen device, the user may first establish a communication connection between the mobile phone and the large-screen device.

In an embodiment of this application, after the mobile phone obtains the one or more pieces of to-be-shared content, if a communication connection is established between the mobile phone and the large-screen device, as shown in FIG. 12A, the method provided in this embodiment of this application further includes the following step.

Step 1205a: The mobile phone sends the one or more pieces of to-be-shared content to the large-screen device. Correspondingly, the large-screen device receives the one or more pieces of to-be-shared content from the mobile phone. In this way, a process in which the large-screen device requests the to-be-shared content from the mobile phone may be omitted.

Step 1208 may be performed by using a wireless communication module 360 of the mobile phone.

In an embodiment of this application, that the mobile phone sends the one or more pieces of to-be-shared content to the large-screen device may be implemented in the following manner: The mobile phone sends, to the large-screen device, a virtual screen on which the one or more pieces of to-be-shared content are drawn, so that the large-screen device receives, from the mobile phone, the virtual screen on which the one or more pieces of to-be-shared content are drawn. For an implementation of this step, refer to the following description in FIG. 26A. Details are not described herein again.

The following describes an implementation of step 1205 from a perspective that the mobile phone actively or passively sends the one or more pieces of to-be-shared content to the large-screen device.

Example 1: The mobile phone actively sends the one or more pieces of to-be-shared content to the large-screen device.

In an embodiment of this application, step 1205 may be implemented in the following manner: The mobile phone actively sends the one or more pieces of to-be-shared content to the large-screen device. In this way, a user operation is simplified, and a process in which the large-screen device requests content is omitted.

Example 2: The mobile phone passively sends the one or more pieces of to-be-shared content to the large-screen device.

Example 2-1: In another embodiment of this application, step 1205 may be implemented in the following manner: The mobile phone may send the one or more pieces of to-be-shared content to the large-screen device based on triggering of the user. For example, the user gives a voice instruction or taps a sharing control on the mobile phone, to trigger the mobile phone to send the one or more pieces of to-be-shared content to the large-screen device.

Example 2-2: In another embodiment of this application, before step 1205, the method provided in this embodiment of this application may further include: The large-screen device sends a request to the mobile phone. The request is used to request the to-be-shared content in the large-screen device. The mobile phone sends the one or more pieces of to-be-shared content to the large-screen device in response to the request. In this case, the large-screen device may not know specific to-be-shared content in the mobile phone. Therefore, after receiving the request, the mobile phone may send all content in the to-be-shared content to the large-screen device.

For example, if the to-be-shared content is a local video, a picture, a document, local audio, or an application window, the mobile phone actively sends the to-be-shared content to the large-screen device. If the to-be-shared content is an online video, online audio, or a web page, the mobile phone may send an address of the to-be-shared content to the large-screen device.

In an embodiment of this application, the large-screen device may not store the received to-be-shared content. Therefore, the large-screen device may not have a storage state. In this case, content on the mobile phone can be cast to the large-screen device for display, and further, storage space of the large-screen device may not be occupied.

In an embodiment of this application, after receiving the to-be-shared content, the large-screen device may further prompt the user with information indicating that a file from the mobile phone is received. For example, a manner in which the large-screen device prompts the user with information indicating that the to-be-shared content is successfully received may be one or more of a text prompt, a voice prompt, and a vibration prompt.

In an embodiment of this application, the large-screen device may alternatively store the received to-be-shared content. In this way, it is convenient for the user to browse the to-be-shared content on the large-screen device subsequently.

In an embodiment of this application, the large-screen device may further prompt the user with information indicating whether to store, in the large-screen device, the to-be-shared content received by the large-screen device. If the user agrees to store the to-be-shared content, the large-screen device stores the to-be-shared content. If the user does not agree to store the to-be-shared content, the large-screen device does not store the to-be-shared content. In this way, the user can determine, based on a requirement, whether to store the to-be-shared content.

After the large-screen device receives the to-be-shared content, the user may make a release gesture on the large-screen device immediately or after a period of time, to trigger the large-screen device to display, on a display, a thumbnail of target content in the one or more pieces of to-be-shared content.

In an embodiment of this application, the large-screen device may temporarily store the one or more pieces of to-be-shared content sent by the mobile phone to the large-screen device. For example, the large-screen device stores the one or more pieces of to-be-shared content within specific duration starting from a time point at which the one or more pieces of to-be-shared content are received. After the specific time period ends, the large-screen device automatically deletes the one or more pieces of to-be-shared content. In this way, the to-be-shared content can be prevented from occupying memory of the large-screen device. In an optional implementation, before the specific time period ends, the large-screen device may remind the user that the one or more pieces of to-be-shared content are to be deleted after the specified duration, and ask whether to delete the one or more pieces of to-be-shared content. If the user indicates not to delete the one or more pieces of to-be-shared content, the large-screen device formally stores the one or more pieces of to-be-shared content. If the user indicates to delete the one or more pieces of to-be-shared content, the large-screen device deletes the one or more pieces of to-be-shared content immediately or after the specified duration.

In an embodiment of this application, a storage location at which the large-screen device temporarily stores the one or more pieces of to-be-shared content is different from a storage location at which the large-screen device formally stores the one or more pieces of to-be-shared content.

The target content may be content with a latest capturing time point in the to-be-shared content. Alternatively, the target content may be all or some of the one or more pieces of content.

For example, at a time point that is 10 minutes before the conference starts, the user captures, on the mobile phone by using the capturing gesture, the PDF document 1501 and the Word document 1504 shown in FIG. 15(A) and FIG. 15(B). However, the release gesture is made on the large-screen device 10 minutes later, that is, when the conference starts. This is not limited in this embodiment of this application.

Step 1206: The user makes the release gesture on the large-screen device.

In an embodiment of this application, the release gesture may be classified into a shortcut gesture and a selection gesture. The shortcut gesture and the selection gesture are different release gestures. For example, the shortcut gesture may be a mid-air gesture in FIG. 8, and the selection gesture may be a palm press gesture in FIG. 8. Alternatively, the selection gesture may be a mid-air gesture in FIG. 8, and the shortcut gesture may be a palm press gesture in FIG. 8.

In an example, the shortcut gesture is used to trigger the large-screen device to display content that is in the to-be-shared content and that corresponds to a capturing time point whose interval from a current time point is less than a preset time threshold. For example, the shortcut gesture is used to trigger the large-screen device to display content with a latest capturing time point in the to-be-shared content. For example, the to-be-shared content includes content 1 and content 2, and a capturing time point of the content 1 is earlier than a capturing time point of the content 2. If the user triggers the shortcut gesture, the large-screen device displays the content 2.

In another example, the shortcut gesture is used to trigger the large-screen device to display content that is in the to-be-shared content and that corresponds to a capturing time point whose interval from a current time point is greater than or equal to a preset time threshold. For example, the shortcut gesture is used to trigger the large-screen device to display content with an earliest capturing time point in the to-be-shared content. For example, if the user triggers the shortcut gesture, the large-screen device displays the content 1.

The selection gesture is used to trigger the large-screen device to display content that needs to be displayed by the user.

Step 1207a: If the large-screen device determines that the release gesture made by the user is the shortcut gesture, the large-screen device displays, on the display based on a capturing time point of each piece of to-be-shared content, a thumbnail of the content with a latest capturing time point. In other words, the content with a latest capturing time point is the target content that needs to be displayed by the large-screen device.

Step 1208a: The large-screen device displays the content with a latest capturing time point.

In a possible embodiment of this application, step 1208a may be implemented in the following manner: When the large-screen device determines that the shortcut gesture acting on the content with a latest capturing time point is released, the large-screen device displays the content with a latest capturing time point immediately or after a preset time period (for example, 10 seconds).

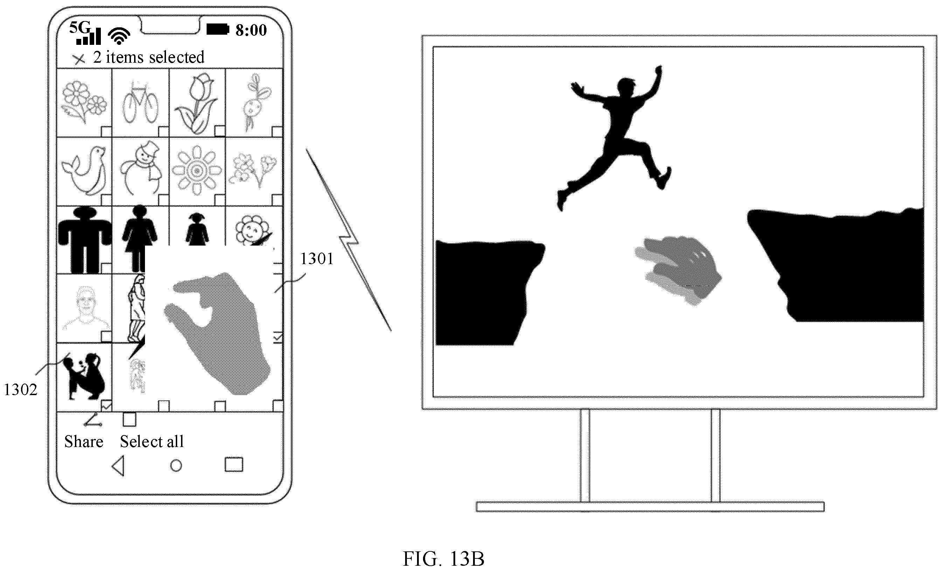

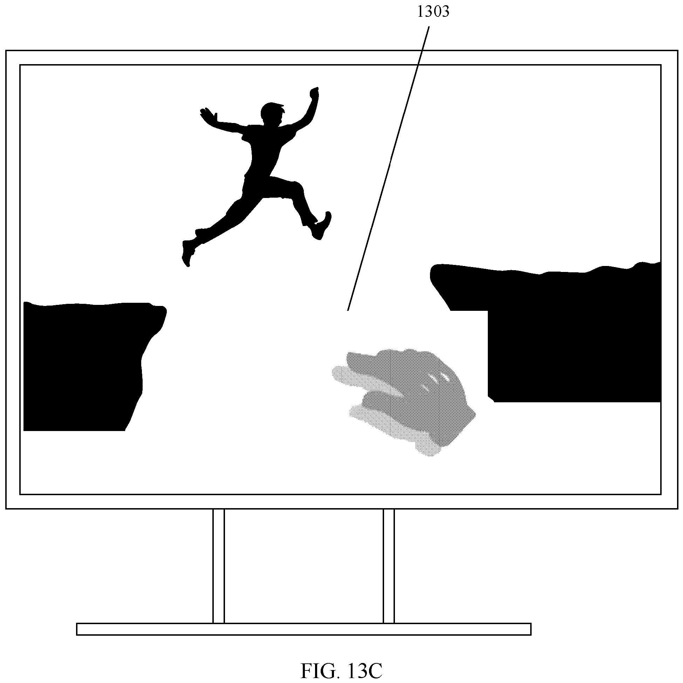

For example, with reference to FIG. 13A, the shortcut gesture is a mid-air gesture. As shown in FIG. 13B, the user makes the mid-air gesture on the large-screen device. As shown in FIG. 13C, the large-screen device displays a thumbnail of the picture 1302 on the display. A caching time point of the picture 1302 is later than that of the picture 1301, or space occupied by the picture 1302 is less than space occupied by the picture 1301.

If the user simultaneously captures two or more pieces of content as to-be-shared content when making the capturing gesture on the mobile phone, it may be considered that the two or more pieces of content have a same capturing time point. If the capturing time point of the two or more pieces of content is latest in the capturing time point of the to-be-shared content, the large-screen device may first display, on the display, a picture occupying small space. For example, a picture a and a picture b have a same capturing time point, but space occupied by the picture a is less than space occupied by the picture b. In this case, the large-screen device may first display a thumbnail of the picture a, and then the user may trigger, by using a switching gesture, the large-screen device to display a thumbnail of the picture b on the display.

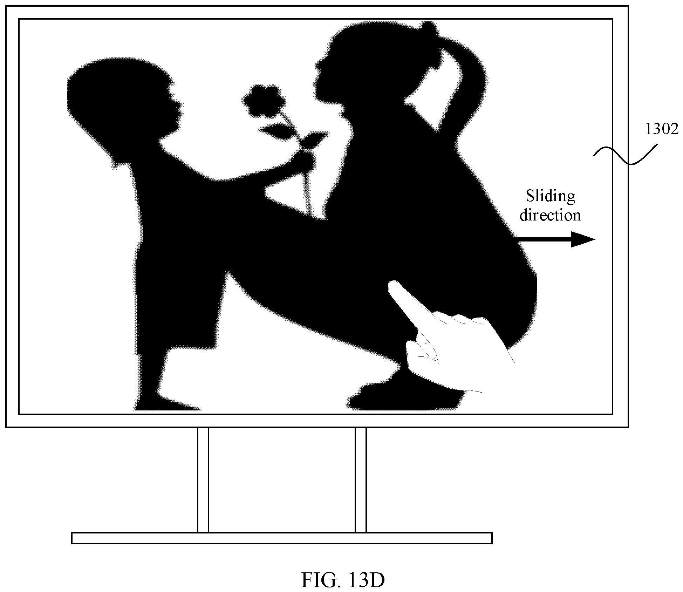

For example, after the large-screen device displays the thumbnail of the picture 1302 on the display, if the large-screen device detects that the mid-air gesture is released (for example, a distance between a hand and the large-screen device is greater than a preset value), the large-screen device immediately displays the picture 1302 on the display of the large-screen device. Alternatively, as shown in FIG. 13D, after a preset time period after the mid-air gesture is released, the large-screen device displays the picture 1302 in full screen. In this way, it is convenient for the user to determine whether content that needs to be displayed is content required by the user. If the content that needs to be displayed is not the content required by the user, the user may trigger another operation within the preset time period, to trigger the large-screen device to cancel displaying the thumbnail of the picture 1302 on the display.

In a possible embodiment of this application, after the large-screen device determines that a shortcut gesture acting on the content with a latest capturing time point is released, if an operation that the user indicates to open the content with a latest capturing time point is detected, the large-screen device immediately displays the content with a latest capturing time point.

For example, after the large-screen device displays the thumbnail of the picture 1302 on the display, if the large-screen device detects that the mid-air gesture is released, the large-screen device still displays the thumbnail of the picture 1302. Subsequently, when the user needs to display the picture 1302, the user triggers an opening instruction (for example, the user taps the thumbnail of the picture 1302). In response to the opening instruction, as shown in FIG. 13D, the large-screen device displays the picture 1302 again.

In an embodiment of this application, if the large-screen device receives a plurality of pieces of to-be-shared content, although the shortcut gesture triggers the large-screen device to display a thumbnail of to-be-shared content with a latest capturing time point in the plurality of pieces of to-be-shared content, after the large-screen device displays the thumbnail of the content with a latest capturing time point, the large-screen device may further switch, in response to the switching gesture entered by the user, the thumbnail displayed on the large-screen device. For example, the large-screen device starts to display a thumbnail of the content a. If the user indicates to switch to a next picture, the large-screen device displays a thumbnail of the content b.

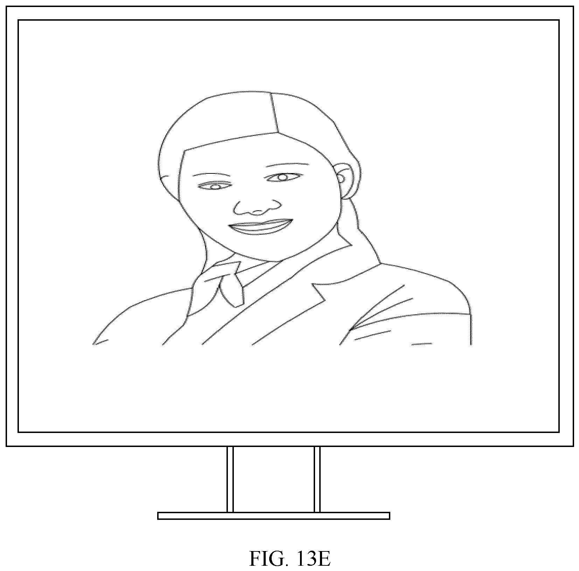

For example, the one or more pieces of to-be-shared content received by the large-screen device are the picture 1302 and the picture 1301. As shown in FIG. 13D, if the large-screen device detects a rightward sliding gesture of the user, as shown in FIG. 13E, the large-screen device displays the picture 1301 on the display of the large-screen device. It may be understood that, in an interface shown in FIG. 13E, if the large-screen device detects a leftward sliding gesture of the user, the large-screen device displays an interface shown in FIG. 13D, that is, displays the picture 1302.

Step 1207b: If the large-screen device determines that the release gesture made by the user is the selection gesture, the large-screen device displays, on the display, a thumbnail of the one or more pieces of to-be-shared content.

Step 1208b: The large-screen device displays, on the display, the target content selected by the user from the one or more pieces of to-be-shared content.

Alternatively, step 1207b may be replaced with: If the large-screen device detects that the selection gesture is released, the large-screen device displays, on the display, the content with a latest capturing time point or the content with an earliest capturing time point in the one or more pieces of to-be-shared content. For example, the large-screen device displays a thumbnail of a picture 1 and a thumbnail of a picture 2 on the display. After the release gesture is released, if a capturing time point of the picture 1 is earlier than a capturing time point of the picture 2, the large-screen device displays the picture 1. If the one or more pieces of to-be-shared content include different types of content, the large-screen device may preferentially display content with a higher priority based on priorities of the different types. For example, the plurality of pieces of to-be-shared content include a picture, a video, and a document. If the document has a highest priority, the large-screen device may first display the document.

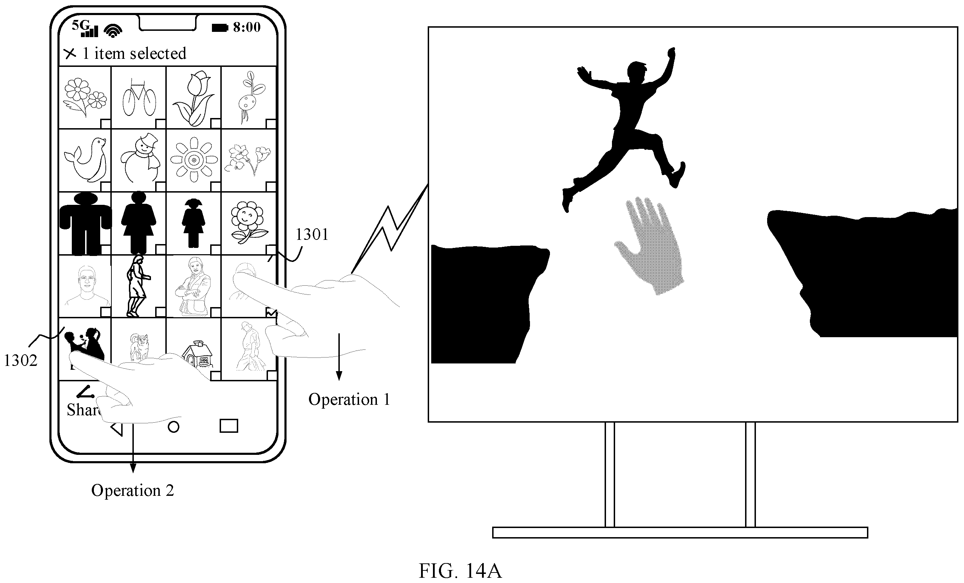

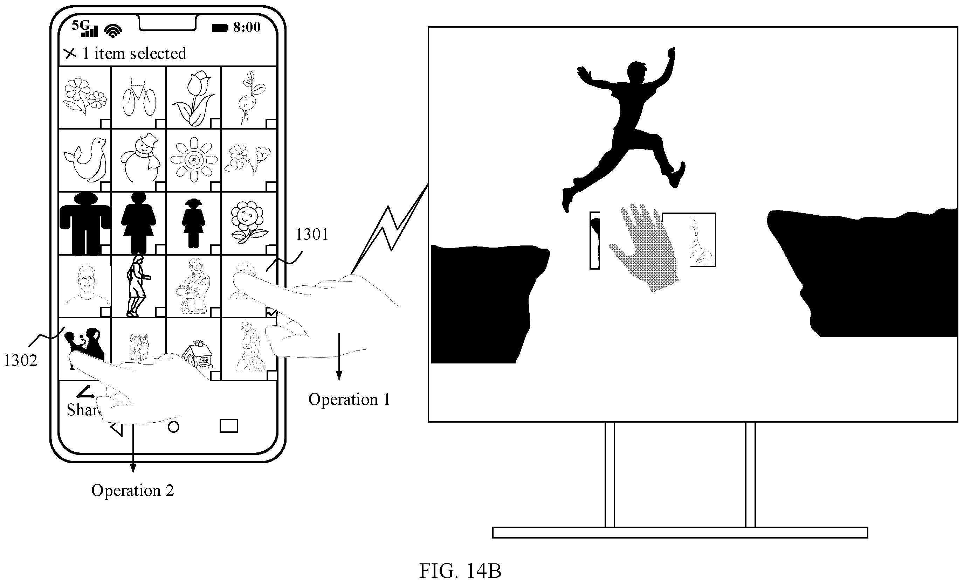

For example, with reference to FIG. 13A, the selection gesture is a palm press gesture As shown in FIG. 14A, the user makes the palm press gesture on the large-screen device. As shown in FIG. 14B, the large-screen device displays the thumbnail of the picture 1301 and the thumbnail of the picture 1302 on the display. After the palm press gesture leaves the display, if the user detects an operation that the user indicates to open the picture 1302, the large-screen device determines that the target content is the picture 1302. In response to the operation indicating to open the picture 1302, as shown in FIG. 13D, the large-screen device displays the picture 1302 on the display of the large-screen device. Similarly, as shown in FIG. 13D, the user may perform an operation on the large-screen device, to switch the picture displayed on the large-screen device. If the user detects an operation that the user indicates to open the picture 1301, as shown in FIG. 13E, the large-screen device displays the picture 1301 on the display of the large-screen device.

If the large-screen device is a computer, the operation indicating to open the picture 1302 or the picture 1301 may be a mouse single-click operation, a mouse double-click operation, or the like that is entered by the user on the computer by using a mouse, or the like.

If the large-screen device is a computer or a TV that supports gesture recognition or has a touch function, the operation indicating to open the picture 1302 or the picture 1301 may alternatively be a tap operation, a touch and hold operation, or the like that is entered by the user on the computer or the TV

If the large-screen device is a computer or a TV that supports voice recognition and control functions, the operation indicating to open the picture 1302 or the picture 1301 may be a voice instruction that the user indicates, by using a voice, to open the picture 1302 or the picture 1301.

FIG. 12B-1 and FIG. 12B-2 provide another cross-device content sharing method according to this application. A difference between the method and the embodiment shown in FIG. 12A lies in that step 1205a is replaced with step 1205b. Step 1205b: A source electronic device provides a thumbnail of one or more pieces of to-be-shared content for a large-screen device.

After receiving the thumbnail of the one or more pieces of to-be-shared content, the large-screen device may temporarily not display the thumbnail of the one or more pieces of to-be-shared content. Then, if the large-screen device detects that a release gesture of a user is a shortcut gesture, the large-screen device performs step 1207a to step 1208a. If the large-screen device detects that the release gesture is a selection gesture, the large-screen device performs step 1207b to step 1208b.

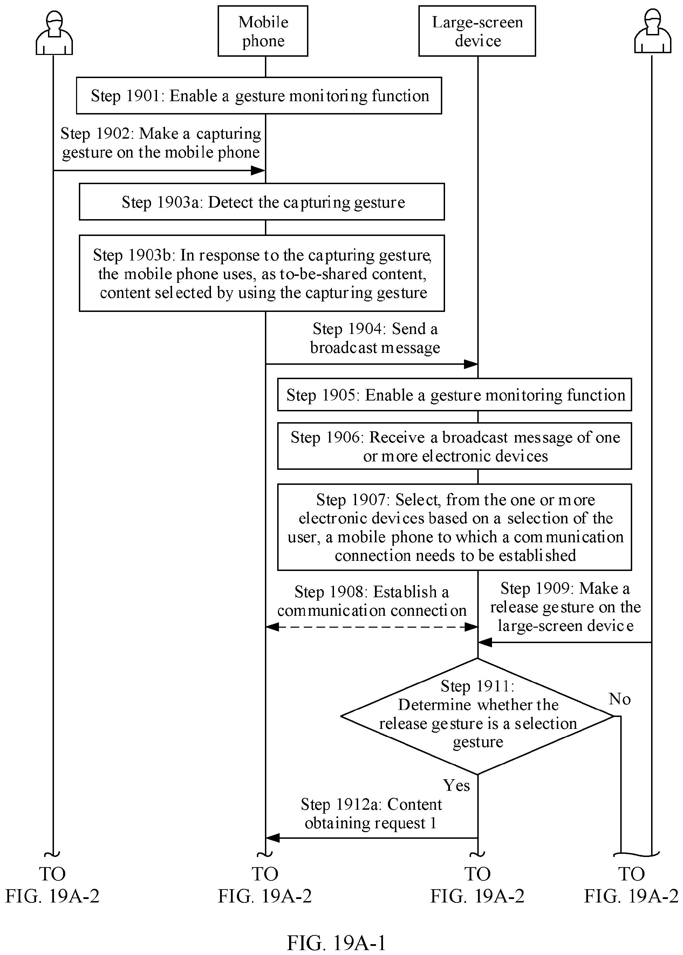

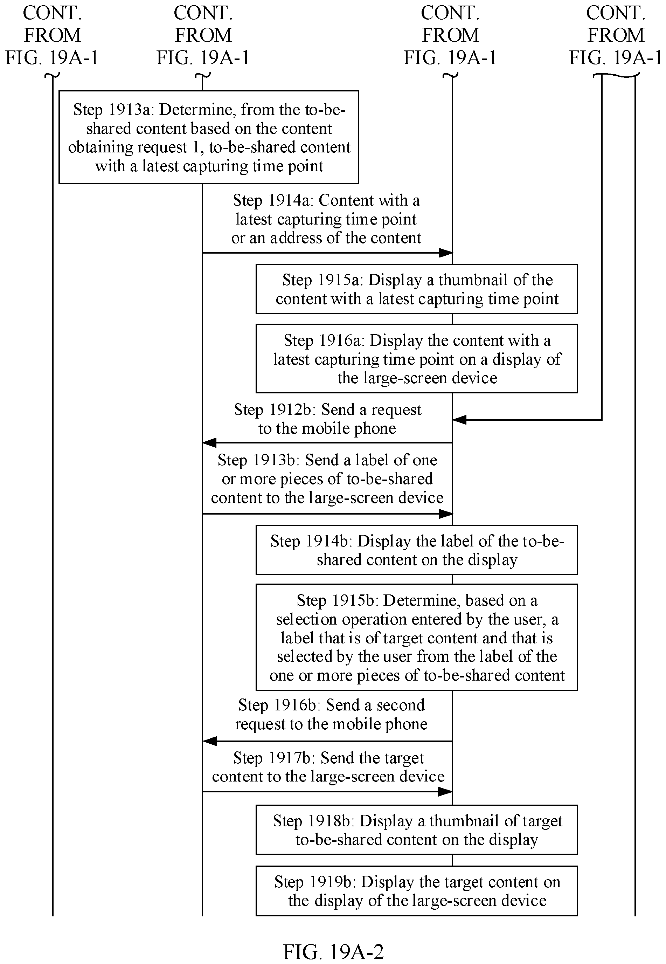

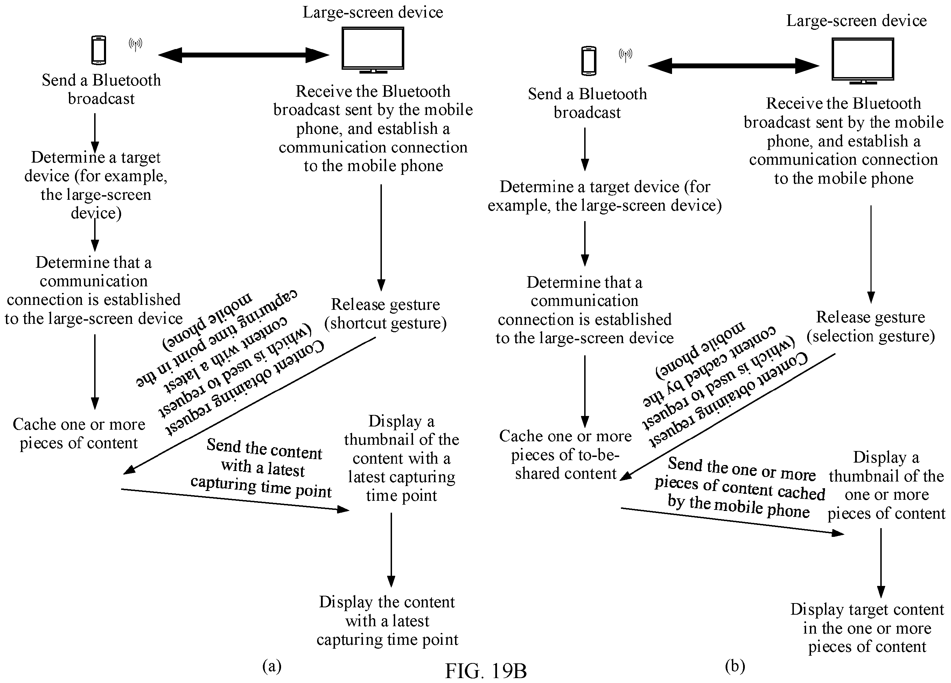

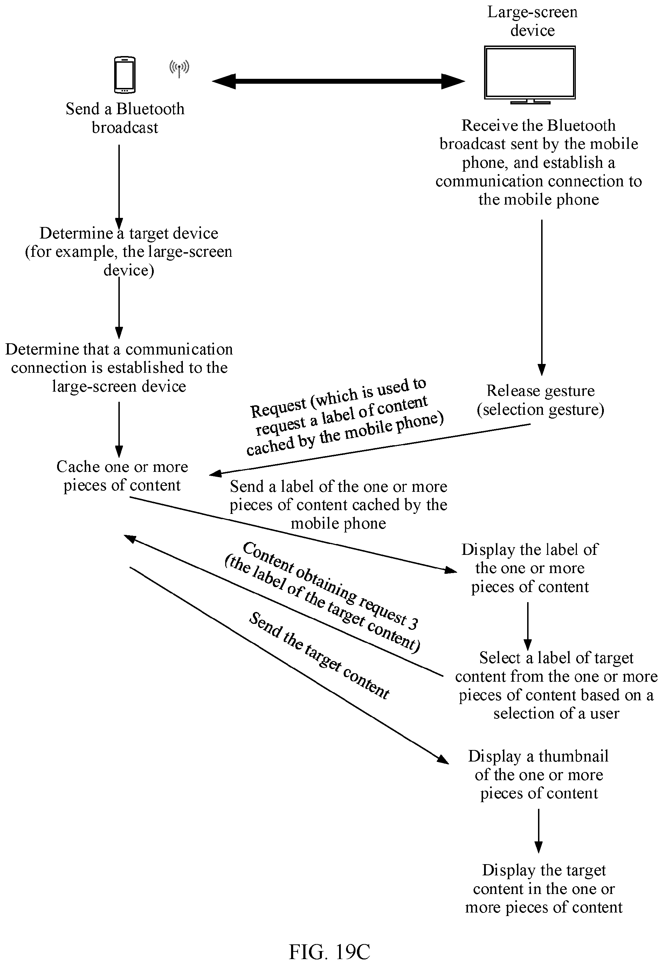

In another embodiment of this application, FIG. 19A-1 and FIG. 19A-2, (a) in FIG. 19B, and (b) in FIG. 19B provide another cross-device content sharing method. A difference between the method and the embodiments described in FIG. 12A and FIG. 12B-1 and FIG. 12B-2 lies in that no communication connection is established between a mobile phone and a large-screen device after the mobile phone obtains to-be-shared content. As shown in FIG. 19C, the method includes the following steps.

Steps 1901 to 1903b are the same as steps 1202a to 1204b. Details are not described herein again.

Step 1904: The mobile phone sends a broadcast message, where the broadcast message is used to indicate that the to-be-shared content exists in the mobile phone.

In an embodiment of this application, after the mobile phone selects one or more pieces of to-be-shared content, the mobile phone has not established a communication connection to the large-screen device, and the mobile phone may send the broadcast message (for example, a Bluetooth broadcast message). The Bluetooth broadcast message includes a first field. The first field is used to indicate that the to-be-shared content exists in the mobile phone. After the mobile phone sends the broadcast message, the large-screen device may receive the Bluetooth broadcast message. The large-screen device selects the mobile phone from received Bluetooth broadcast messages of a plurality of different electronic devices based on a selection of a user.

For example, as shown in FIG. 20, after receiving the Bluetooth broadcast messages of the plurality of different electronic devices, the large-screen device displays information about the plurality of different electronic devices in a Bluetooth interface of the large-screen device. The user may determine, in the interface shown in FIG. 20, a specific electronic device in which the to-be-shared content exists and a specific electronic device in which no to-be-shared content exists. The user may tap an icon of the electronic device (for example, a mobile phone 1) in which to-be-shared content exists, and the large-screen device may determine to establish a communication connection to the mobile phone 1.

Step 1905: The large-screen device enables a gesture monitoring function of the large-screen device.

For a specific implementation process of step 1905, refer to the descriptions in the foregoing embodiments. Details are not described herein again.

Step 1906: The large-screen device receives broadcast messages of one or more electronic devices.

Step 1907: The large-screen device selects, from the one or more electronic devices based on a selection of the user, a mobile phone to which a communication connection needs to be established.

For example, when the user needs to display, by using the large-screen device, the to-be-shared content determined by the user on the mobile phone, the user may enable a sharing function control of the large-screen device. For example, a Bluetooth connection is established between the mobile phone and the large-screen device. As shown in FIG. 20, device information of a device 1, a device 2, and the mobile phone is displayed on the mobile phone. In addition, the large-screen device may further display a mark, to identify an electronic device in which to-be-shared content exists, so that the user determines a specific electronic device in which to-be-shared content exists. For example, if the user selects the mobile phone, the user taps an icon of the mobile phone shown in FIG. 20, to trigger establishment of a communication connection between the large-screen device and the mobile phone.

Step 1908 is the same as the description in step 1201. Details are not described herein again.

After the mobile phone establishes a communication connection to the large-screen device, the mobile phone may send the to-be-shared content to the large-screen device actively or based on a request of the large-screen device.

For example, before a conference, the user obtains five target files on the mobile phone in advance by using a capturing gesture. After the conference starts, the user enters a conference room. After the mobile phone is connected to the large-screen device, file delivery is made in response to a release gesture made by the user on the large-screen device.

In still another embodiment of this application, if the large-screen device does not receive the to-be-shared content from the mobile phone before the user makes the release gesture on the large-screen device, the large-screen device may obtain the to-be-shared content or an address of the to-be-shared content from the mobile phone in a manner shown in FIG. 19A-1 and FIG. 19A-2, (a) in FIG. 19B, and (b) in FIG. 19B.

Step 1909 is the same as step 1206. Details are not described herein again.

It may be understood that, in the embodiment shown in FIG. 19A-1 and FIG. 19A-2, (a) in FIG. 19B, and (b) in FIG. 19B, it only needs to be ensured that a gesture monitoring function of the large-screen device is enabled before step 1909, step 1205 may alternatively be performed before or after step 1908. This is not limited in this embodiment of this application.

Step 1911: Determine whether the release gesture is a shortcut gesture or a selection gesture. If the release gesture is a shortcut gesture, steps 1912a to 1916a are performed.

It may be understood that, if only one release gesture triggers content display in the large-screen device, step 1911 may be omitted.

Step 1912a: If the large-screen device determines that the release gesture made by the user is a shortcut gesture, the large-screen device sends a content obtaining request 1 (corresponding to a fourth request) to the mobile phone in response to the shortcut gesture. The content obtaining request 1 is used to request latest to-be-shared content determined by the mobile phone. Correspondingly, the mobile phone receives the content obtaining request 1.

Step 1913a: The mobile phone determines, from the to-be-shared content based on the content obtaining request 1, to-be-shared content with a latest capturing time point.

Step 1914a: The mobile phone sends the content with a latest capturing time point to the large-screen device. Correspondingly, the large-screen device receives the content with a latest capturing time point from the mobile phone.

Step 1915a: After receiving the content with a latest capturing time point, the large-screen device displays a thumbnail of the content with a latest capturing time point.

It should be noted that, if the large-screen device receives an address of the content with a latest capturing time point, before the large-screen device displays the thumbnail of the content with a latest capturing time point, the large-screen device may further obtain the content based on the address of the content.

Step 1916a is the same as step 1208a. Details are not described herein again.

With reference to FIG. 19A-1 and FIG. 19A-2 and FIG. 19C, when the release gesture is a selection gesture, the large-screen device performs step 1912b to step 1919b.

Step 1912b: In response to the selection gesture, the large-screen device sends a content obtaining request 2 to the mobile phone, and the mobile phone receives the content obtaining request 2 from the large-screen device. The content obtaining request 2 is used to request a label of the to-be-shared content in the mobile phone.

Step 1913b: The mobile phone sends a label of the one or more pieces of to-be-shared content to the large-screen device in response to the request. Correspondingly, the large-screen device receives the label of the one or more pieces of to-be-shared content from the mobile phone.

Step 1914b: The large-screen device displays the label of the one or more pieces of to-be-shared content on a display.

Step 1915b: The large-screen device determines, based on a third operation entered by the user, a label that is of target content and that is selected by the user from the label of the one or more pieces of to-be-shared content.

Step 1916b: The large-screen device sends a sixth request to the mobile phone, and correspondingly, the mobile phone receives the sixth request from the large-screen device. The sixth request is used to request the target content. For example, the sixth request carries the label of the target content.

Step 1917b: The mobile phone sends the target content to the large-screen device in response to the sixth request.

Step 1918b: After the large-screen device receives the target content, the large-screen device displays a thumbnail of the target content on the display of the large-screen device.

Step 1919b: The large-screen device displays the target content on the display of the large-screen device.

For a specific implementation of step 1919b, refer to the description in step 1208a. A difference lies in that the content with a latest capturing time point is replaced with the target content.

For example, the selection gesture is a palm press gesture. After the mobile phone receives the sixth request, the label of the one or more pieces of to-be-shared content that is sent to the large-screen device includes pic: 1, file: 2, and a video address (video address) 1. The large-screen device displays pic: 1, file: 2, and the video address 1 in a display interface. For example, a label selected by the user in the display interface of the large-screen device is the video address 1. Therefore, a second request sent by the large-screen device to the mobile phone carries the video address 1, to request a video address. After the mobile phone receives the second request that carries the video address 1, the mobile phone may send the video address to the large-screen device. After receiving the video address, the large-screen device obtains an online video a based on the video address. Then, the large-screen device displays a thumbnail of the online video a. When the palm press gesture leaves the display, the large-screen device automatically displays the online video a (in other words, starts to play the online video a). Alternatively, after a preset time period for which the palm press gesture leaves, the large-screen device automatically displays the online video a (in other words, starts to play the online video a). Alternatively, after the palm press gesture leaves, the large-screen device plays the online video a in response to an operation that the user indicates to open the online video a.

In this embodiment of this application, when sending an address of the online video a to the large-screen device, the mobile phone may further send information such as a playing progress of the online video a on the mobile phone to the large-screen device, so that the large-screen device plays the online video a based on the information such as the playing progress.

In this embodiment of this application, when the to-be-shared content is a video or audio, the user may adjust a parameter of the video or audio on the mobile phone, for example, information such as a progress, a volume, and brightness. Then, the mobile phone sends an adjustment parameter to the large-screen device, and the large-screen device may adjust, in response to the adjustment parameter that may be entered by the user on the mobile phone, a video or audio displayed on the large-screen device. For example, if the user adjusts a volume of the video or the audio to 20 on the mobile phone, the large-screen device may also adjust a volume of the video or the audio played on the large-screen device to 20.

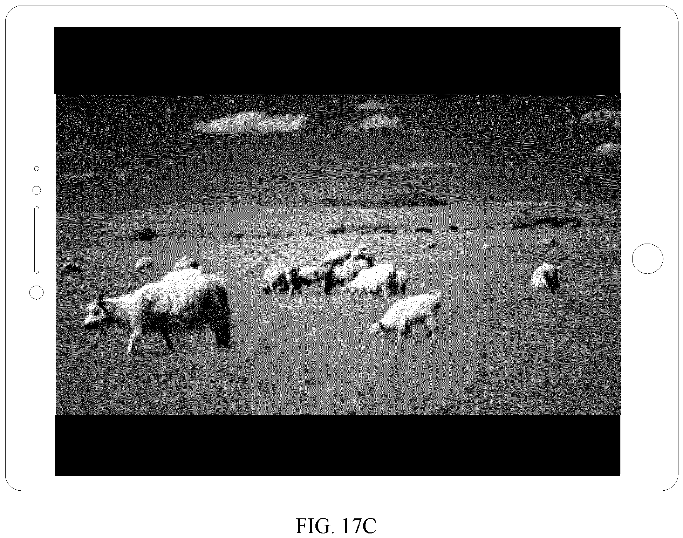

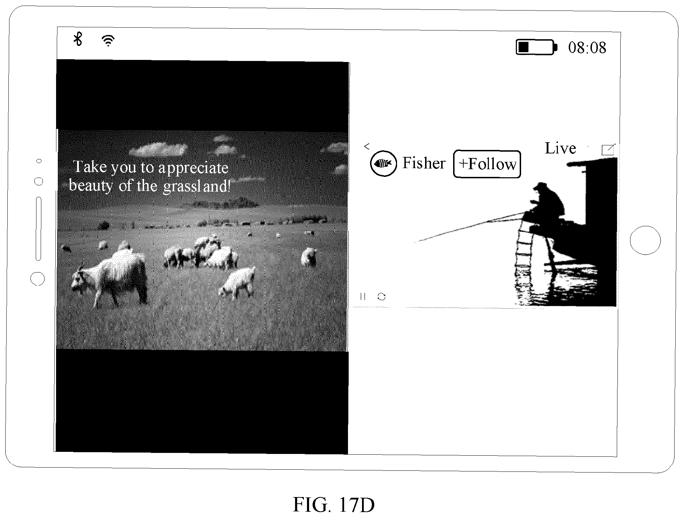

With reference to FIG. 17A, as shown in FIG. 17B, after a communication connection is established between the large-screen device and the mobile phone, the user makes the release gesture on the large-screen device. In this case, after the large-screen device obtains an online video 1701 from the mobile phone in response to the release gesture, the large-screen device displays, on the large-screen device, a thumbnail corresponding to the online video 1701. As shown in FIG. 17C, the large-screen device displays the online video 1701 on the display. Alternatively, as shown in FIG. 17D, the large-screen device may display a display area 1 and a display area 2, display the online video 1701 in the display area 1, and display a live video 1 in the display area 2. The live video 1 is content originally displayed on the large-screen device, to implement display in split screen.

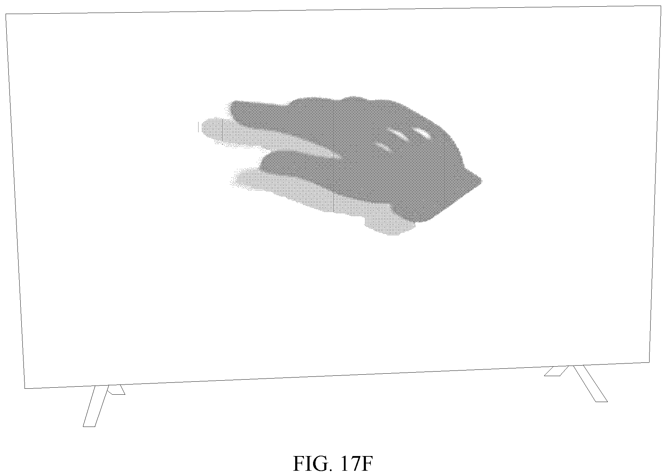

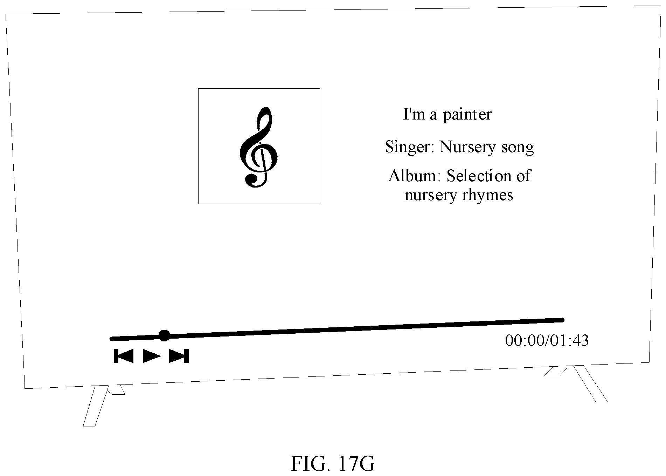

With reference to FIG. 17E, as shown in FIG. 17F, after a communication connection is established between the large-screen device and the mobile phone, the user makes the release gesture on the large-screen device. In this case, after the large-screen device obtains online audio 1702 in response to the release gesture, a thumbnail corresponding to the online audio 1702 is displayed on the large-screen device. Then, as shown in FIG. 17G, the large-screen device displays the online audio 1702 on the display of the large-screen device.

The following uses an example in which the to-be-shared content is a document to describe how the large-screen device displays the document after receiving the document.

In an embodiment of this application, if the to-be-shared content is a document, after receiving the document, the large-screen device displays a home page of the document on the display.

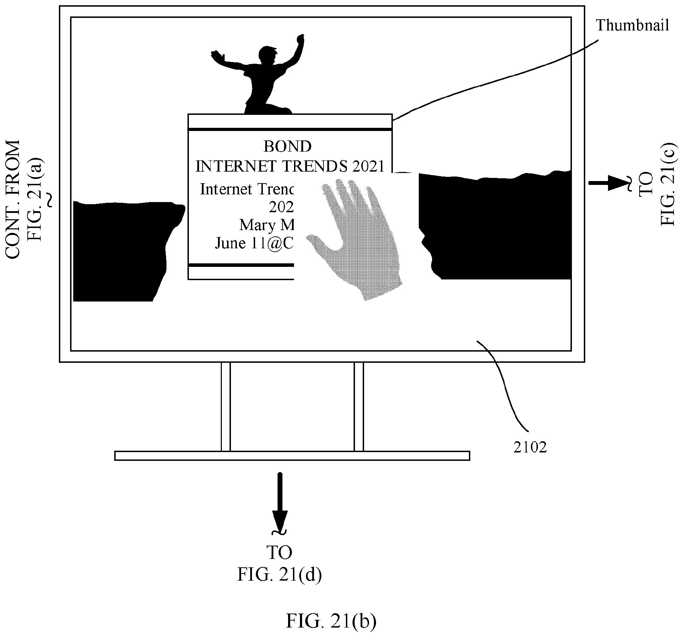

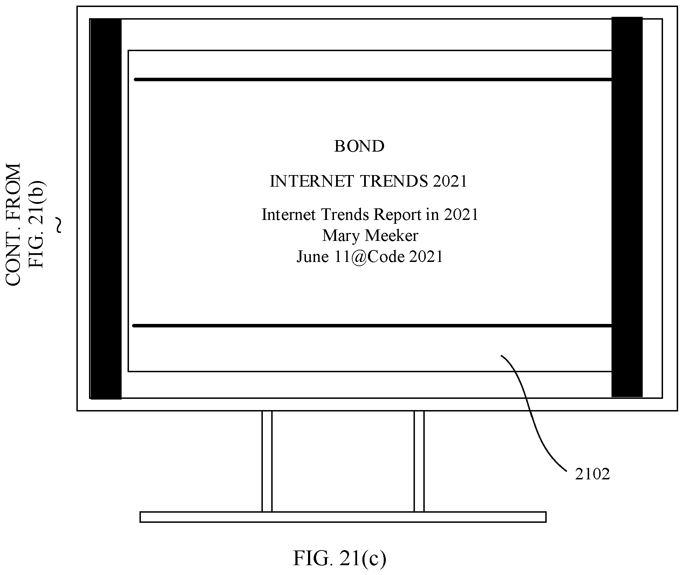

As shown in FIG. 21(a), for example, to-be-shared content captured by the user on the mobile phone by using a touch and hold gesture is a PPT document 2101. If the user makes a mid-air gesture or a palm touch and hold release gesture on the large-screen device, as shown in FIG. 21(b), the large-screen device displays, on the display of the large-screen device, a thumbnail corresponding to the PPT document 2101. After the mid-air gesture or the palm touch and hold release gesture of the user leaves, the large-screen device runs a PDF application to open the PPT document 2101 immediately or after a preset time period (10 seconds or 1 minute later). As shown in FIG. 21(c), an effect diagram that is of a home page and that exists after the PPT document is opened is displayed on the large-screen device.

In an embodiment of this application, if an application used to open the PPT document 2101 does not exist on the large-screen device, the large-screen device may further prompt the user to install an application that can be used to open the PPT document 2101.

In this way, preloading can be implemented when the user captures the PPT document 2101 by using the capturing gesture and releases the PPT document 2101 by using the release gesture, so that the PPT document 2101 changes from the thumbnail to an effect diagram that is of a home page and that exists after the PPT document 2101 is opened, to help the user to predetermine, when the PPT document 2101 is to be released on a computer, whether to-be-displayed content is correct.

In addition, it should be noted that, when displaying a second interface 2102 (for example, a picture, a video, or a news window), the large-screen device may display the thumbnail of the PPT document 2101 in the second interface 2102 in response to a mid-air gesture or a palm hold and hold release gesture triggered by the user in the second interface 2102. In other words, the thumbnail of the PPT document 2101 is displayed in the second interface 2102. After the mid-air gesture or the palm hold and hold release gesture of the user leaves the thumbnail of the PPT document 2101, the large-screen device runs an application to open the PPT document 2101 immediately or after a preset time period (10 seconds or 1 minute later). The PPT document 2101 covers the second interface 2102. In this way, user experience can be improved. In addition, when displaying the second interface 2102 (for example, a picture, a video, or a news window), the large-screen device may respond to a mid-air gesture or a palm touch and hold release gesture triggered by the user in the second interface 2102. In this case, in response to the mid-air gesture or the palm touch and hold release gesture, the computer closes a currently displayed picture or application window, or scales down the currently displayed picture or application window on the computer to a minimum window, to display the thumbnail of the PPT document 2101 on a home screen of the computer. In this way, the thumbnail of the PPT document 2101 may be prevented from blocking the currently displayed picture or application window.

For example, after the mid-air gesture or the palm touch and hold release gesture of the user leaves, the large-screen device runs an application of a PPT document, to open the PPT document 2101 immediately or after a preset time period (10 seconds or 1 minute later). In another embodiment of this application, as shown in FIG. 21(b), after the large-screen device displays the thumbnail corresponding to the PPT document 2101 in the display interface of the large-screen device, if the computer detects an operation that the user indicates to open or run the thumbnail of the PPT document 2101 corresponding to the PDF document 1, the computer responds to the operation that the user indicates to open the thumbnail of the PPT document 2101, and as shown in FIG. 21(c), displays, on the computer, the effect diagram that is of the home page and that exists after the PPT document 2101 is opened.

For example, in this embodiment of this application, when the to-be-shared content is a document, the thumbnail of the to-be-shared content may be a thumbnail including content of a home page of the document.

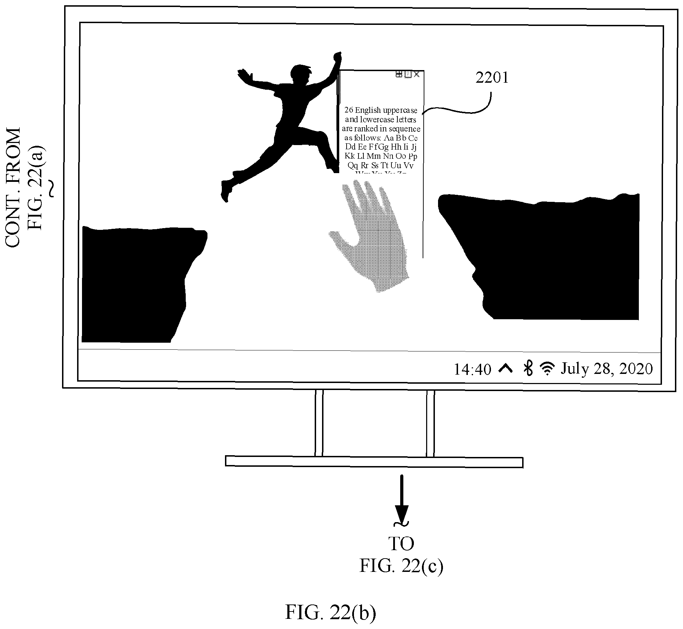

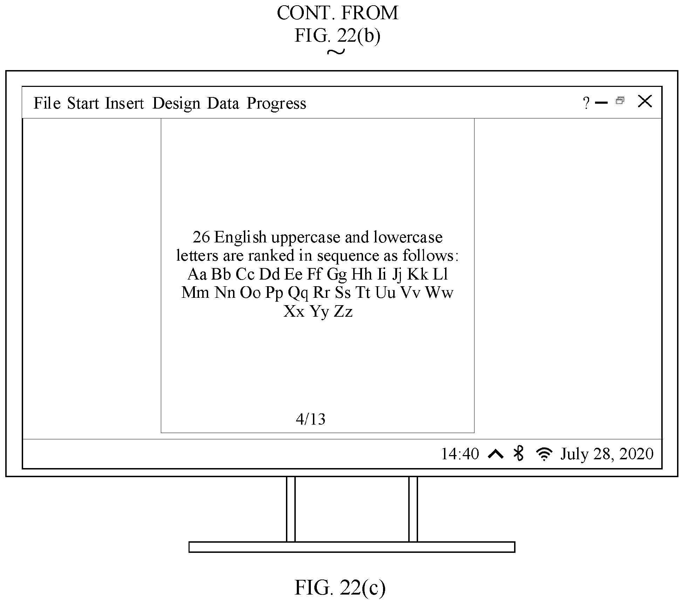

In another embodiment of this application, if the to-be-shared content is a document, after receiving the document, the large-screen device displays a target page of the document on the display. For example, as shown in FIG. 22(a), the mobile phone currently displays a fourth page of the Word document 2201. In this case, the user makes, on the mobile phone, a capturing gesture of capturing the Word document 2201, to capture the Word document 2201. Subsequently, the user makes the release gesture on the large-screen device, and the large-screen device requests the Word document 2201 from the mobile phone based on the release gesture. As shown in FIG. 22(b), after receiving the Word document 2201, the large-screen device first displays the thumbnail of the Word document 2201. As shown in FIG. 22(c), the large-screen device further displays the fourth page of the Word document 2201. In this way, the user continues to browse the Word document 2201 on the large-screen device based on a browsing progress of the Word document 2201 on the mobile phone. It should be noted that, after receiving the Word document 2201, the large-screen device runs software on the mobile phone, for example, an office application or a WPS application, to open the Word document 2201. This is not limited in this embodiment of this application.

For example, in this embodiment of this application, when the to-be-shared content is a document, the thumbnail of the to-be-shared content may be a thumbnail including content of a target page of the document. The content of the target page is content that is of the document and that is displayed on the mobile phone.

The foregoing mainly describes a process in which the large-screen device displays the to-be-shared content on the display of the large-screen device in full screen after obtaining the to-be-shared content. In an actual process, the large-screen device may alternatively display the to-be-shared content in split screen. Split screen means that a plurality of display areas are displayed on the large-screen device, and the to-be-shared content is displayed in one of the plurality of display areas. The other display areas may be used to display other content of the large-screen device. This is not limited in this embodiment of this application.

In an embodiment of this application, that the large-screen device displays the target content on the display includes: In response to a first operation performed by the user, the large-screen device controls the thumbnail to move to a first-side screen edge of the display. The first operation is a release gesture or a first movement gesture entered by the user. The large-screen device displays a first display area and a second display area on the display when the thumbnail moves to a specified location on the first-side screen edge. The target content corresponding to the thumbnail is displayed in the second display area.

The display in this embodiment of this application includes four side edges. For example, as shown in FIG. 23A, the display includes a left-side screen edge, a right-side screen edge, an upper-side screen edge (as shown in (a) in FIG. 23A), and a lower-side screen edge. For example, the first-side screen edge may be the right-side screen edge shown in (c) in FIG. 23A.

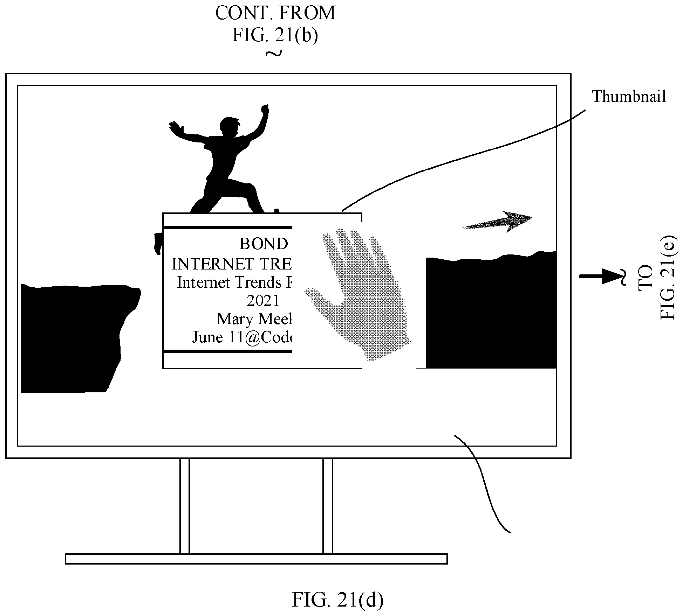

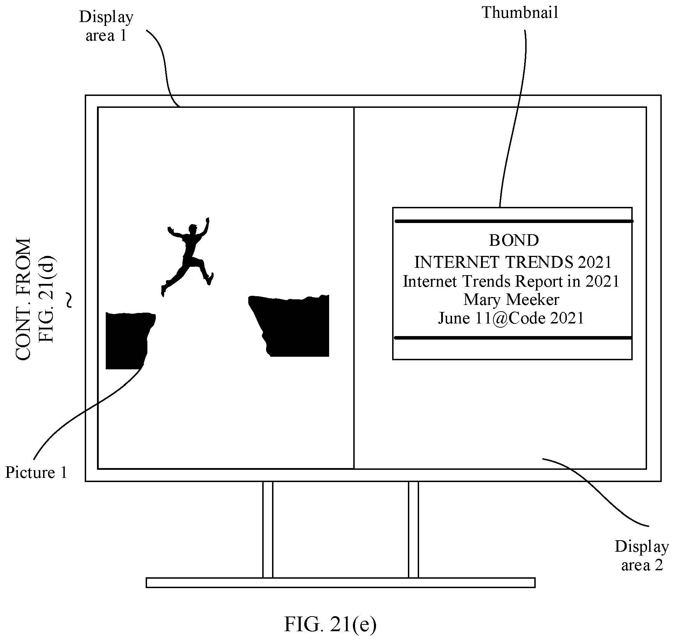

For example, the first display area is a display area 1, the second display area is a display area 2, and the first operation is a release gesture. With reference to FIG. 21(a) and FIG. 21(b), after the thumbnail of the PPT document 2101 is displayed on the large-screen device, if the release gesture of the user still stays on the display of the large-screen device, as shown in FIG. 21(d), the user may drag, by using the release gesture, the thumbnail of the PPT document 2101 to move from a current location to the right to a screen edge of the display. When the thumbnail moves to a specified location on the screen edge of the display, as shown in FIG. 21(e), the display area 1 and the display area 2 are displayed on the display of the large-screen device. The PPT document 2101 is displayed in the display area 2. The large-screen device may display, in the display area 1, content originally displayed on the large-screen device, for example, a picture 1.

Certainly, after the to-be-release gesture leaves the display of the large-screen device, if the large-screen device detects that the user drags, by using the gesture operation 1, the thumbnail of the PPT document 2101 to move from the current location to the right to the screen edge of the display, a process shown in FIG. 21(e) may also be performed. This is not limited in this embodiment of this application.

In an embodiment of this application, after the large-screen device displays the thumbnail of the to-be-shared content on the display, in response to a second operation performed by the user, the large-screen device controls the thumbnail to move to a second-side screen edge of the display on the display. The second operation is a release gesture or a second movement gesture entered by the user. For example, the user drags, by using the second operation, the thumbnail on the display to move to the second-side screen edge of the display. When the thumbnail moves to a specified location on the second-side screen edge, the large-screen device moves the target content to a playing queue card.

For example, if the large-screen device detects that the user drags, by using a touch operation, the thumbnail of the to-be-shared content to move from a current location to the left to the screen edge of the display, when the thumbnail of the to-be-shared content moves to a specified location on a left-side edge of the display, the large-screen device adds the to-be-shared content to the playing queue card, to wait for display. The playing queue card includes the thumbnail of the one or more pieces of to-be-shared content.

It may be understood that the user may slide the playing queue card upward and downward, to switch content in the playing queue card displayed on the display. For example, as shown in FIG. 23A, the second-side screen edge may be a left-side screen edge shown in (b) in FIG. 23A.

The to-be-shared content is added to the playing queue card, and target to-be-shared content that needs to be displayed on the large-screen device may be first selected in batches. In addition, the user may further adjust a display sequence of the to-be-shared content in the playing queue card, and then the large-screen device displays the to-be-shared content one by one.

For example, with reference to FIG. 21(a) and FIG. 21(b), after the thumbnail of the PPT document 1901 is displayed on the large-screen device, if the release gesture of the user still stays on the display of the large-screen device, as shown in FIG. 23B(a), the user may drag, by using the release gesture, the thumbnail of the PPT document 2101 from a current location to the left to the screen edge of the display. When the release gesture is used to drag the thumbnail of the PPT document 2101 to move to the specified location on the left-side screen edge of the display, the large-screen device displays an interface shown in FIG. 23B(b).

In a possible implementation, when the user subsequently wants to display one or more pieces of to-be-shared content in the playing queue card, the user may tap the one or more pieces of to-be-shared content. For example, as shown in FIG. 23B(b), the user taps a thumbnail of a picture 2103. In response to a tap operation performed by the user, as shown in FIG. 23B(c), the large-screen device displays a picture 2103 on the display of the large-screen device in full screen. Certainly, if the user taps the thumbnail of the PPT document 2101, the large-screen device displays an interface shown in FIG. 21(c).

In an embodiment of this application, the user may trigger the large-screen device to play the target to-be-shared content in the playing queue card. For example, the user sends a voice control instruction "Please play a PPT document 2101 in a playing queue card". After receiving the voice control instruction, the large-screen device displays an interface shown in FIG. 21(c).

In an embodiment of this application, to prevent the playing queue card displayed on an edge of the display from affecting the user in browsing other content displayed on the large-screen device, the user may trigger a hiding operation on the large-screen device. In response to the hiding operation, the large-screen device hides the playing queue card. In other words, the playing queue card is not displayed on the display. When the user wants to browse content in the playing queue card, the user may trigger a display operation, and the large-screen device redisplays the playing queue card in response to the display operation. For example, the hiding operation may be that the user makes a gesture of dragging the playing queue card to slide to a left edge of the screen. For example, the display operation may be a rightward slide gesture made by the user on the left edge of the screen.

In an embodiment of this application, the user may trigger the large-screen device to sequentially play the to-be-shared content in the playing queue card. For example, the user sends a voice control instruction "Please play to-be-shared content in a playing queue card". After receiving the voice control instruction, the large-screen device sequentially plays the to-be-shared content in the playing queue card based on a time point at which the to-be-shared content enters the playing queue card.

In an embodiment of this application, the user may close the playing queue card displayed on the large-screen device. For example, the playing queue card further includes a close control. When the user taps the close control, in response to a tap operation performed by the user, the large-screen device closes the playing queue card displayed on the display. Alternatively, the user sends a voice control instruction "Please close a playing queue card", and the large-screen device closes the playing queue card displayed on the display.

It should be noted that, different from hiding the playing queue card, closing the playing queue card means that the playing queue card is not displayed subsequently, and hiding the playing queue card means that the playing queue card is not displayed temporarily.

In an embodiment of this application, after the large-screen device displays the thumbnail of the to-be-shared content on the display, in response to a third operation performed by the user, the large-screen device controls the thumbnail to move to the third-side screen edge (a lower-side screen edge shown in (d) in FIG. 23A) of the display on the display. The large-screen device cancels displaying the thumbnail on the display. The third operation may be a release gesture, or may be a gesture triggered by the user to drag the thumbnail.

For example, as shown in FIG. 23A, if the large-screen device detects that the user drags, by using the touch operation, the thumbnail of the to-be-shared content to move from a current location upward or downward to the screen edge of the display, when the thumbnail of the to-be-shared content moves to a specified location on the left-side edge of the display, the large-screen device cancels displaying the thumbnail of the to-be-shared content on the display (which may also be understood as that the large-screen device deletes the thumbnail of the to-be-shared content on the display). Alternatively, when the thumbnail of the to-be-shared content moves to the specified location on the left-side edge of the display, the large-screen device prompts whether to cancel displaying the thumbnail of the to-be-shared content on the display. If the user agrees to cancel displaying the thumbnail of the to-be-shared content on the display, the large-screen device cancels displaying the thumbnail of the to-be-shared content on the display. Alternatively, when the thumbnail of the to-be-shared content moves to the specified location on the left-side edge of the display, a deletion control is displayed on the large-screen device, and the user may tap the deletion control, to trigger the large-screen device to delete the thumbnail of the to-be-shared content on the display.

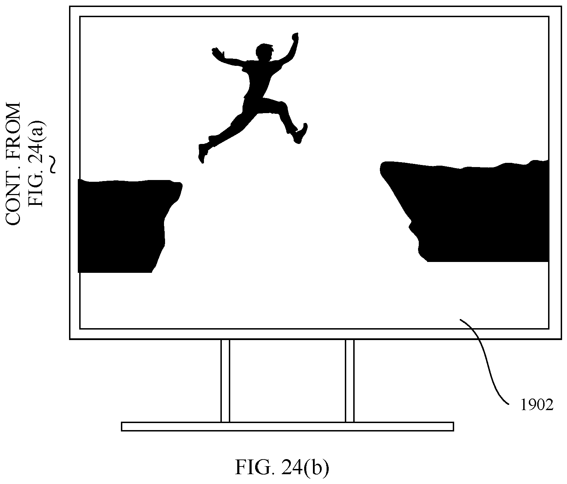

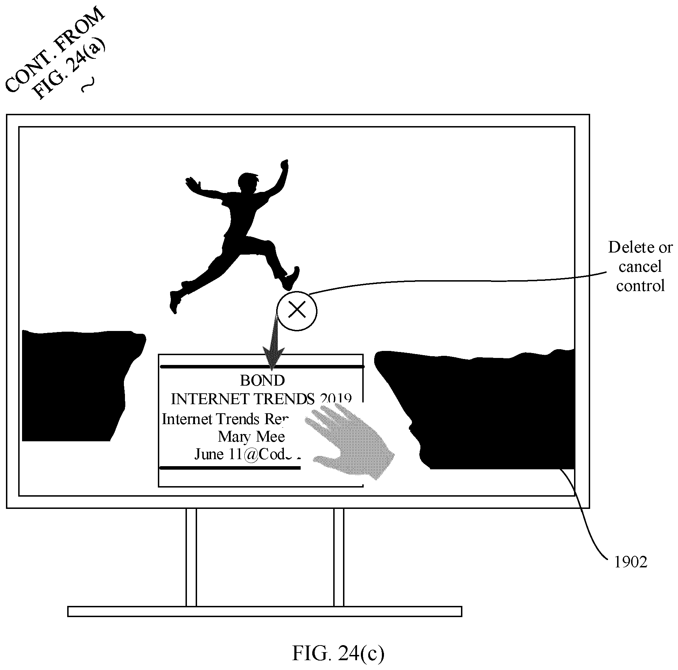

For example, with reference to FIG. 21(a) and FIG. 21(b), after the thumbnail of the PPT document 2101 is displayed on the large-screen device, if the release gesture of the user still stays on the display of the large-screen device, as shown in FIG. 24(a), the user may continue to drag, by using the release gesture, the thumbnail of the PPT document 2101 to move to a lower-side screen edge. When the thumbnail moves to the specified location on the lower-side screen edge, as shown in FIG. 24(b), the large-screen device does not display a thumbnail of a PPT document 1901 on the display. Alternatively, as shown in FIG. 24(c), when the thumbnail of the PPT document 2101 moves to the specified location on the lower-side screen edge, the large-screen device displays a delete or cancel control on the display. In this case, the user may tap the delete or cancel control, to trigger the large-screen device to cancel displaying the thumbnail of the PPT document 2101 on the display.

It may be understood that, in FIG. 21(a) to FIG. 21(e) to FIG. 24(a) to FIG. 24(c), for example, the release gesture does not leave the display and the thumbnail of the to-be-shared content continues to be dragged to move on the display. In an actual scenario, the to-be-shared content is a PPT document 2101. After the thumbnail of the PPT document 2101 is displayed on the display of the large-screen device, if the large-screen device does not immediately display the PPT document 2101 after the release gesture leaves the display, the user may further drag, by using a manner other than the release gesture, the thumbnail of the PPT document 2101 to move on the display. For example, the user controls, by using a voice, the thumbnail of the PPT document 1901 to move, or the user drags, by using a gesture other than the release gesture, the thumbnail of the PPT document 2101 to move on the display. This is not limited in this embodiment of this application.

It should be noted that, if the to-be-shared content is a picture, a local video or local audio in the mobile phone, a document, or the like, that the large-screen device cancels displaying the thumbnail of the to-be-shared content on the display does not indicate to delete received to-be-shared content from the large-screen device, and the to-be-shared content may still be stored in storage space of the large-screen device. If the to-be-shared content is an online video, a web page, or online audio, that the large-screen device cancels displaying the thumbnail of the to-be-shared content on the display may be understood as that the large-screen device cancels playing the online video, the web page, or the online audio.

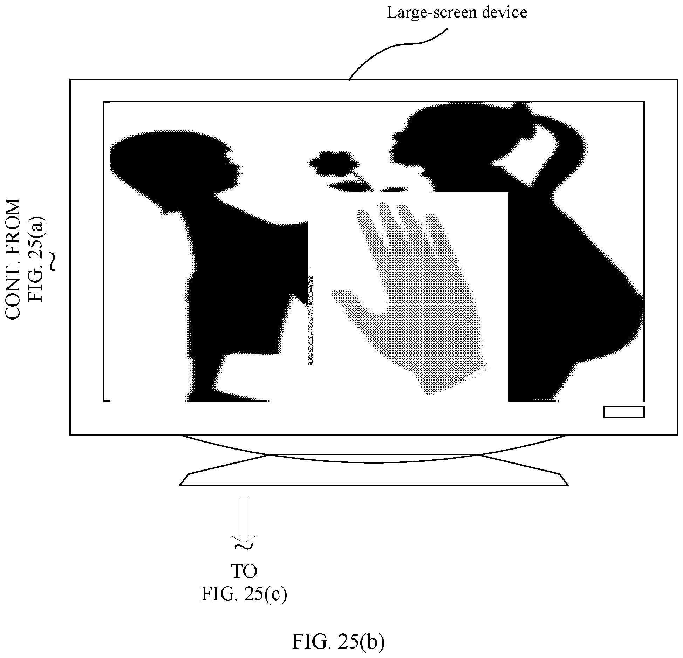

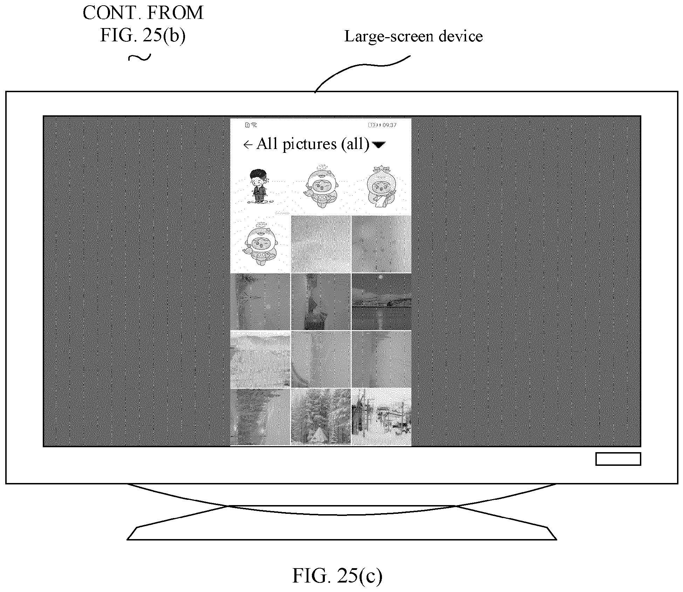

For example, FIG. 25(a) to FIG. 25(c) are a schematic diagram of an implementation process of a content release gesture according to an embodiment of this application. As shown in FIG. 25(a), when to-be-shared content is a screenshot picture that is of a display interface 2501 and that is captured by a user on a mobile phone by using a capturing gesture, the mobile phone caches a screenshot picture 2502 of the display interface 2501. As shown in FIG. 25(b), when detecting a release gesture (for example, a palm press operation) made by the user, the large-screen device displays a thumbnail of the screenshot picture 2502 on a display of the large-screen device. As shown in FIG. 25(c), when the user completes a content release operation (for example, the palm press operation leaves the display of the large-screen device), the large-screen device invokes Gallery software to display the screenshot picture 2502 on the display in full screen.

In this embodiment of this application, when displaying the to-be-shared content, the large-screen device may display the to-be-shared content by using a default application that matches a type of the to-be-shared content.

For example, when the to-be-shared content is a video a (that is, an online video) watched by the user on the mobile phone by using an iQIYI app, and the large-screen device receives a website address of the video a sent by the mobile phone, the large-screen device may display the video a by using an iQIYI app installed on the large-screen device. In this case, if the iQIYI app is not installed on a target electronic device, after obtaining the video a based on the website address of the video a, the large-screen device may display the video a by using a default video app application (for example, a video playing application provided by a system).

In an embodiment of this application, when a communication connection is established between the large-screen device and the mobile phone, the mobile phone may not send the to-be-shared content to the large-screen device. After the large-screen device detects the release gesture entered by the user, the large-screen device may access the to-be-shared content in the mobile phone. Then, the large-screen device displays a thumbnail of the to-be-shared content.

For example, the thumbnail of the to-be-shared content is displayed in an area in which the release gesture acts on the display. For example, if the release gesture acts in an area a, the thumbnail of the to-be-shared content is displayed in the area a.

In an embodiment of this application, after the user triggers the release gesture, in response to the release gesture, an area in which the thumbnail of the to-be-shared content is displayed may be different from an area in which the release gesture acts on the display. For example, if the release gesture acts in the area a, the thumbnail of the to-be-shared content is displayed in an area b. In an embodiment of this application, regardless of an area in which the release gesture acts, the large-screen device may display, in a fixed area on the display, content obtained by the user each time by using the release gesture.

In an embodiment of this application, in the foregoing embodiment, a user who makes the release gesture and a user who makes the capturing gesture may be a same user or may be different users. This is not limited in this embodiment of this application. For example, a user A selects a picture 1 and a picture 2 as to-be-shared content on the mobile phone by using the capturing gesture. However, a user B triggers, by using the release gesture on the large-screen device, the large-screen device to display a thumbnail of the picture 1 and/or a thumbnail of the picture 2 in a display interface of the large-screen device.

In addition, in this embodiment of this application, the following case is supported: Based on biometric feature information (a fingerprint, palmprint recognition, or a face), to-be-shared content displayed by different users on the large-screen device is only content captured by the users on the mobile phone by using the capturing gesture. For example, to-be-shared content to be displayed on the large-screen device may be from a plurality of mobile phones (in a many-to-many networking scenario). Any piece of to-be-shared content has a mapping relationship with a mobile phone (an IP of the device in networking) corresponding to the to-be-shared content. When the user displays target content on the large-screen device by using the release gesture, biometric feature information of the user is sent to a source device of a target file for authentication. After authentication succeeds, the source device transfers the shared content to the large-screen device for display.

In an embodiment of this application, if the user obtains an application window on the mobile phone by using the capturing gesture, the large-screen device displays a thumbnail of the application window in response to a release gesture made by the user on the large-screen device. Then, the large-screen device displays the application window.

For example, with reference to FIG. 7E(a) and FIG. 7E(b), an application is WeChat. If to-be-shared content captured by the user on the mobile phone is a window of WeChat, as shown in FIG. 7E(a), in response to a release gesture made by the user on the large-screen device, as shown in FIG. 7E(b), the large-screen device displays a thumbnail of the window of WeChat on the display. Subsequently, if a release gesture acting on the thumbnail is released, the large-screen device displays the window of WeChat on the display immediately or after a preset time period. In this way, the user may continue to send a message to a friend in the window of WeChat displayed on the large-screen device.

It should be noted that in this embodiment of this application, in addition to being used by the user to select content such as a text, a picture, and a file as to-be-shared content on the mobile phone by using the capturing gesture, the capturing gesture may further support to capture a window of an application (for example, as shown in FIG. 7E(a) and FIG. 7E(b)), a video (for example, as shown in FIG. 17A), an audio (for example, as shown in FIG. 17E), and the like on the mobile phone. In a scenario of capturing and releasing a window and a video, a reversed control operation is supported on the mobile phone.

Detailed steps are shown in FIG. 26A.

Step 2601: A user captures a window or an interface of an application on a mobile phone by using a capturing gesture.

Step 2602: Detect a capturing gesture made by the user on the mobile phone.

It should be noted that a gesture monitoring service of the mobile phone monitors the capturing gesture, and the mobile phone displays prompt information to enable the user to select captured content, for example, a window, screenshot, or video element.

Step 2603: Determine, in response to the capturing gesture, that the window or the interface of the application is captured on the mobile phone by using the capturing gesture.

Step 2604: The mobile phone extracts current window or video information (a window name, a view name, a size, and the like), and caches the current window or video information.

Step 2605: The user makes a release gesture on the large-screen device.

Step 2606: The large-screen device monitors the release gesture, and displays a label of the window or a label of a video on the large-screen device, so that the user selects captured content that needs to be released.

For example, the large-screen device monitors the release gesture by using a gesture monitoring function.

Step 2607: The user selects the label of the window or the label of the video, and the large-screen device sends a request to the mobile phone, where the request includes the label of the window or the label of the video.

Step 2608: The mobile phone receives the request, creates a virtual screen, and draws the window or the video on the virtual screen.

Step 2609: The mobile phone casts the virtual screen to the large-screen device, to display, on the large-screen device in real time, content selected by the user on the mobile phone by using the capturing gesture. The user may perform an operation (for example, dragging a video progress and scaling up/down) on the window or video on the virtual screen. Reversed control is supported. To be specific, the large-screen device is used to control the mobile phone.

It may be understood that the solution described in step 8 and step 9 is a manner in which the mobile phone provides the large-screen device with the to-be-shared content selected by the user.

In the foregoing solution, a window or a video on the mobile phone may be cast to a large-screen device. In a casting process, an interface on the mobile phone may change. For example, if the user taps a button in a source interface to open another application interface, the source interface changes to a newly opened application interface. In this case, the mobile phone may re-draw another application interface on the virtual screen, to keep same content displayed in the casting interface and the source interface.

As shown in FIG. 26B, a cross-device content sharing method provided in this embodiment of this application is further applicable to a multi-device networking scenario. To be specific, when the user makes the capturing gesture on the mobile phone to select the to-be-shared content, the mobile phone does not establish a communication connection to the large-screen device. First, the user makes the capturing gesture on the mobile phone to select a text, a picture, a file, or the like. In this case, the mobile phone caches information about the to-be-shared content captured by the user, for example, a file name, a text label, and a default file name of the picture. Alternatively, the mobile phone marks a state of the captured to-be-shared content as a first state. In this case, the mobile phone may send a broadcast message, to mark that to-be-shared content exists in the mobile phone. As shown in FIG. 26B, the user finds, on the large-screen device by using a gesture release operation, a device in which to-be-shared content exists, so that the user selects a connection.

For example, as shown in FIG. 26B, the multi-device networking scenario includes a mobile phone 1 to a mobile phone 3, a large-screen device 1, and a large-screen device 2. The user separately makes the capturing gesture on the mobile phone 1 and a mobile phone 2. The mobile phone 1 determines, in response to the capturing gesture of the user, that to-be-shared content selected by the user on the mobile phone is content 1. The mobile phone 2 determines, in response to the capturing gesture of the user, that to-be-shared content selected by the user on the mobile phone is content 2. In this case, the mobile phone 1 and the mobile phone 2 each may send a broadcast message. For example, a broadcast message of the mobile phone 1 includes a field 1 and device information of the mobile phone 1. The field 1 is used to indicate that to-be-shared content exists in the mobile phone 1. A broadcast message of the mobile phone 2 includes device information of the mobile phone 2 and a field 2. The field 2 is used to indicate that to-be-shared content exists in the mobile phone 2. Because the user does not make the capturing gesture on the mobile phone 3, when the mobile phone 3 is in a standby state or Bluetooth of the mobile phone 3 is enabled, a Bluetooth broadcast message sent by the mobile phone 3 includes device information of the mobile phone 3. Alternatively, the Bluetooth broadcast message sent by the mobile phone 3 includes device information of the mobile phone 3 and a field 3. Although the field 3 may be used to indicate whether to-be-shared content exists in the mobile phone 3, the field 3 included in the Bluetooth broadcast message sent by the mobile phone 3 is disabled. If the field 3 is enabled, it indicates that to-be-shared content exists in the mobile phone 3. If the field 3 is disabled, it indicates that to-be-shared content does not exist in the mobile phone 3. In this case, triggered by the release gesture made by the user, the large-screen device 1 finds whether a mobile phone in which to-be-shared content exists in a Bluetooth coverage area of the large-screen device 1. For example, the large-screen device 1 finds the broadcast message of the mobile phone 1, the broadcast message of the mobile phone 2, and the broadcast message of the mobile phone 3. Then, the large-screen device 1 displays the received broadcast message of the mobile phone 1, the received broadcast message of the mobile phone 2, and the received broadcast message of the mobile phone 3 on a display of the large-screen device 1. The user finds, based on the broadcast message of the mobile phone 1 and the broadcast message of the mobile phone 2 that are displayed on the large-screen device 1, that to-be-shared content exists in each of the mobile phone 1 and the mobile phone 2, but the user wants to display to-be-shared content of the mobile phone 1 on the large-screen device 1. In this case, the user taps an icon of the mobile phone 1 on the display of the large-screen device, to trigger the large-screen device 1 to establish a communication connection to the mobile phone 1. Similarly, the user performs the foregoing steps to trigger establishment of a communication connection between the large-screen device 2 and the mobile phone 2. After a communication connection is established between the large-screen device 1 and the mobile phone 1, for a process in which the large-screen device 1 displays, on the display, to-be-shared content captured by the user on the mobile phone 1, and the large-screen device 2 displays, on the display, to-be-shared content captured by the user on the mobile phone 2, refer to the embodiments described in FIG. 12A to FIG. 25(a) to FIG. 25(c). Details are not described herein again.

In a multi-device networking scenario, a many-to-many scenario is used as an example in FIG. 26B. To be specific, a plurality of mobile phones and a plurality of large-screen devices are networked to capture and release data, which is similar to a data sharing behavior. To-be-shared content captured by the user on a mobile phone can be shared with different large-screen devices for a plurality of times, to display the to-be-shared content on the different large-screen devices. Alternatively, to-be-shared content captured by the user on a mobile phone can be shared with a same large-screen device for a plurality of times. Certainly, the user may also capture content on different mobile phones by using the capturing gesture, and then to-be-shared content captured on the different mobile phones may be shared with a same large-screen device, or may be shared with different large-screen devices. This is not limited in this embodiment of this application.

In an embodiment of this application, in a scenario in which a plurality of devices are networked through Wi-Fi, a communication connection between the large-screen device and the mobile phone may be pre-established. To be specific, before the user makes a capturing gesture, the user triggers establishment of the communication connection between the mobile phone and the large-screen device, to implement multi-device networking. Alternatively, in the multi-device networking scenario, the communication connection between the large-screen device and the mobile phone may be a communication connection that is between each mobile phone and the large-screen device and that is established only after the user captures the to-be-shared content on the plurality of different mobile phones, to implement networking. In this embodiment of this application, once the large-screen device or the mobile phone accesses a same network, to-be-shared content captured in the network is visible to all devices in the network, regardless of whether the large-screen device or the mobile phone accesses the network in advance or accesses the network after the to-be-shared content is captured. In other words, the to-be-shared content is visible to all devices, and the user may make the release gesture on any device in the network, to display the to-be-shared content on the device.

A shortcut mode is not supported for a first release before the large-screen device accesses the network (that is, a latest captured file is released). The shortcut mode is supported for a release operation after the large-screen device accesses the network. One mobile phone may simultaneously establish a communication connection to a plurality of large-screen devices, and one large-screen device may also simultaneously establish a communication connection to a plurality of mobile phones.

It may be understood that, to implement the foregoing functions, the electronic device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments of this application, the electronic device may be divided into functional modules based on the foregoing method examples. For example, each functional module corresponding to each function may be obtained through division, or two or more functions may be integrated into one processing module. The integrated module may be implemented in a form of hardware. It should be noted that, in embodiments of this application, division into the modules is an example and is merely logical function division, and may be other division in an actual implementation.

When each functional module is obtained through division for each corresponding function, FIG. 27 is a schematic diagram of a possible composition of an electronic device 2700 in the foregoing embodiments. As shown in FIG. 27, the electronic device 2700 may include a sending unit 2701, a receiving unit 2702, an establishment unit 2703, a processing unit 2704, a detection unit 2705, and the like.

The detection unit 2705 may be configured to support the electronic device 2700 to perform a detection action performed by a mobile phone in the foregoing embodiments. For example, the detection unit 2705 detects whether the user makes a capturing gesture on the mobile phone.

The sending unit 2701 may be configured to support the electronic device 2700 to perform a sending action performed by the mobile phone in the foregoing embodiments, for example, a sending action performed by the mobile phone in step 1205a or step 1205b, step 1904, step 1914a, step 1913b, and step 1917b, or another process used for the technology described in this specification.

The receiving unit 2702 may be configured to support the electronic device 2700 to perform a receiving action performed by the mobile phone in the foregoing embodiments, for example, a receiving action performed by the mobile phone in step 1912a, step 1912b, and step 1916b, and/or another process used for the technology described in this specification.

The establishment unit 2703 may be configured to support the electronic device 2700 to perform a step that is of establishing a communication connection between the mobile phone and a large-screen device and that is performed by the mobile phone in the foregoing embodiments, for example, step 1908 or step 1201, and/or another process used for the technology described in this specification.

The processing unit 2704 may be configured to support the electronic device 2700 to perform a processing action performed by the mobile phone in the foregoing embodiments, for example, step 1202 and step 1204, or step 1901, step 1903, and step 1913a.

Certainly, the electronic device 2700 may further include a display unit that may be configured to display one or more pieces of content that are determined by the user by using the capturing gesture, and/or another process used for the technology described in this specification.

When each functional module is obtained through division for each corresponding function, FIG. 28 is a schematic diagram of a possible composition of an electronic device 2800 in the foregoing embodiments. As shown in FIG. 28, the electronic device 2800 may include a sending unit 2801, a receiving unit 2802, an establishment unit 2803, a processing unit 2804, a detection unit 2805, a display unit 2806, and the like.

The establishment unit 2803 may be configured to support the electronic device 2700 to perform a step that is of establishing a communication connection between a mobile phone and a large-screen device and that is performed by the large-screen device in the foregoing embodiments, for example, step 1908 or step 1201, and/or another process used for the technology described in this specification.

The detection unit 2805 may be configured to support the electronic device 2800 to perform an action that is performed by the large-screen device to detect a user gesture in the foregoing embodiment. For example, the detection unit 2805 detects a release gesture entered by the user.

The sending unit 2801 may be configured to support the electronic device 2800 to perform a sending action performed by the large-screen device in the foregoing embodiments, for example, a sending action performed by the large-screen device in step 1912a, step 1912b, and step 1916b.

The processing unit 2804 may be configured to support the electronic device 2800 to perform a processing action performed by the large-screen device in the foregoing embodiments, for example, step 1202b, or step 1909, step 1905, and step 1907.

The display unit 2806 may be configured to support the electronic device 2800 to perform a display action performed by the large-screen device in the foregoing embodiments, for example, step 1207a, step 1208a, step 1207b, and step 1208b, or step 1915a, step 1916a, step 1914b, step 1915b, step 1918b, and step 1919b.

The receiving unit 2802 may be configured to support the electronic device 2800 to perform a receiving action performed by the large-screen device in the foregoing embodiments, for example, a receiving action performed by the large-screen device in step 1904, step 1906, step 1914a, step 1913b, step 1917b, or step 1205.

It should be noted that all related content of the steps in the foregoing method embodiments may be cited in function description of corresponding functional modules. Details are not described herein again.

The electronic device provided in this embodiment of this application is configured to perform the foregoing cross-device content method, and therefore, can achieve a same effect as the foregoing implementation method.

When an integrated unit is used, the electronic device may include a processing module, a storage module, and a communication module. The processing module may be configured to control and manage an action of the electronic device. For example, the processing module may be configured to support the electronic device to perform steps performed by the establishment unit 2703, the processing unit 2704, and the detection unit 2705.

The communication module is configured to support the electronic device to communicate with another device. For example, the communication module may be configured to support the electronic device to perform steps performed by the sending unit 2701 and the receiving unit 2702.

The storage module may be configured to support the electronic device to store content captured by a user by using a capturing gesture and store program code, data, and the like.

When an integrated unit is used, the electronic device may include a processing module, a storage module, a display module, and a communication module. The processing module may be configured to control and manage an action of the electronic device. For example, the processing module may be configured to support the electronic device to perform steps performed by the establishment unit 2803, the processing unit 2804, and the detection unit 2805.

The communication module is configured to support the electronic device to communicate with another device. For example, the communication module may be configured to support the electronic device to perform steps performed by the sending unit 2801 and the receiving unit 2802.

The display module may be configured to display content of the electronic device, for example, may be configured to support the electronic device to perform steps performed by the display unit 2806.

The processing module may be a processor or a controller. The processing module may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, or a Wi-Fi chip, that interacts with another electronic device.

In an embodiment, when the processing module is a processor and the storage module is a memory, the electronic device in this embodiment of this application may be an electronic device having the structure shown in FIG. 3. Specifically, the internal memory 321 shown in FIG. 3 may store computer program instructions. When the instructions are executed by the processor 310, the electronic device may be enabled to perform the following operations: detecting a first gesture when a gesture monitoring function of a first electronic device is enabled; in response to the first gesture, displaying, on displays 1 to N, a thumbnail of target content selected by a user on a second electronic device; and displaying the target content on the displays 1 to N.

In an embodiment, when the processing module is a processor and the storage module is a memory, the electronic device in this embodiment of this application may be an electronic device having the structure shown in FIG. 3. Specifically, the internal memory 321 shown in FIG. 3 may store computer program instructions. When the instructions are executed by the processor 310, the electronic device may be enabled to perform the following operations: when a gesture monitoring function is enabled, detecting a second gesture entered by the user in a first interface of the electronic device; in response to the second gesture, determining content selected by using the second gesture; and when there is a communication connection between the electronic device and a first electronic device, providing the first electronic device with target content in to-be-shared content by using a wireless communication module 360, where the to-be-shared content includes at least the content.

An embodiment of this application further provides a computer-readable storage medium. The computer-readable storage medium stores computer instructions. When the computer instructions are run on an electronic device, the electronic device is enabled to perform the foregoing related method steps to implement a picture grouping method in the foregoing embodiments.

An embodiment of this application further provides a computer program product. When the computer program product is run on a computer, the computer is enabled to perform the foregoing related steps, to implement the cross-device content method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, so that the chip performs the cross-device content method in the foregoing method embodiments.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A cross-device content sharing method, applied to a first electronic device with a gesture recognition capability, wherein the method comprises:
detecting a first gesture of a user on the first electronic device when a gesture monitoring function of the first electronic device is enabled;
displaying a thumbnail of target content on a display in response to the first gesture, wherein the target content is content in a second electronic device; and
displaying, on the display, the target content received by the first electronic device from the second electronic device.

2. The method according to claim 1, wherein before the displaying, on the display, the target content received by the first electronic device from the second electronic device, the method further comprises:
detecting a first operation triggered by the user for the thumbnail, wherein the first operation is used to indicate to open the target content corresponding to the thumbnail;
sending a first request to the second electronic device, wherein the first request is used to request the target content; and
receiving the target content from the second electronic device.

3. The method according to claim 1 or 2, wherein before the displaying a thumbnail of target content on a display, the method further comprises:
obtaining the thumbnail of the target content from the second electronic device in response to the first gesture, wherein
the first gesture is a first preset gesture, and the target content is content with a latest capturing time point in the second electronic device; or
the first gesture is a second preset gesture, and the target content is all or some of one or more pieces of content in the second electronic device.

4. The method according to claim 1, wherein before the detecting a first gesture of a user on the first electronic device, the method further comprises:
receiving a label of one or more pieces of content from the second electronic device, wherein the one or more pieces of content comprise the target content; and
correspondingly, after the first gesture is detected, the method further comprises:
obtaining the target content from the second electronic device based on the label of the one or more pieces of content.

5. The method according to claim 4, wherein the obtaining the target content from the second electronic device based on the label of the one or more pieces of content comprises:
sending a second request to the second electronic device if the first gesture is a first preset gesture, wherein the second request comprises a label of the target content, and the target content is content with a latest capturing time point in the one or more pieces of content; and
receiving the target content from the second electronic device.

6. The method according to claim 4, wherein the obtaining the target content from the second electronic device based on the label of the one or more pieces of content comprises:
displaying the label of the one or more pieces of content on the display if the first gesture is a second preset gesture;
detecting a second operation entered by the user, wherein the second operation is used to indicate content selected by the user from the one or more pieces of content;
sending a third request to the second electronic device, wherein the third request comprises a label of the target content, and the target content is content selected by the user from the one or more pieces of content; and
receiving the target content from the second electronic device.

7. The method according to claim 1, wherein before the displaying a thumbnail of target content on a display, the method further comprises:
sending a fourth request to the second electronic device in response to the first gesture, wherein when the first gesture is a first preset gesture, the fourth request is used to request content with a latest capturing time point in the second electronic device, and when the second gesture is a second preset gesture, the fourth request is used to request content captured by the second electronic device; and
receiving the target content from the second electronic device, wherein the target content is the content with a latest capturing time point in the second electronic device, or the target content is one or more pieces of content from the second electronic device.

8. The method according to claim 1, wherein before the displaying a thumbnail of target content on a display, the method further comprises:
receiving one or more pieces of content from the second electronic device, wherein the one or more pieces of content comprise the target content, wherein
the first gesture is a first preset gesture, and content with a latest capturing time point in the one or more pieces of content is used as the target content; and
the first gesture is a second preset gesture, and all or some of the one or more pieces of content are used as the target content.

9. The method according to claim 1, wherein before the displaying a thumbnail of target content on a display, the method further comprises:
sending a fifth request to the second electronic device when the second gesture is a second preset gesture, wherein the fifth request is used to request a label of content captured by the second electronic device;
receiving a label of one or more pieces of content from the second electronic device;
displaying the label of the one or more pieces of content on the display;
receiving a third operation entered by the user, wherein the third operation is used to indicate content selected by the user from the one or more pieces of content;
sending a sixth request to the second electronic device, wherein the sixth request comprises a label of the target content, and the target content is the content selected by the user from the one or more pieces of content; and
receiving the target content from the second electronic device.

10. The method according to any one of claims 1 to 9, wherein the displaying, on the display, the target content received by the first electronic device from the second electronic device comprises:
in response to a fourth operation performed by the user, controlling the thumbnail to move to a first-side screen edge of the display on the display, wherein the fourth operation is the first gesture or a first movement gesture entered by the user;
displaying a first display area and a second display area on the display when the thumbnail moves to a specified location on the first-side screen edge; and
displaying the target content in the second display area.

11. The method according to any one of claims 1 to 10, wherein after the displaying a thumbnail of target content on a display, the method further comprises:
in response to a fifth operation performed by the user, controlling the thumbnail to move to a second-side screen edge of the display on the display, wherein the fifth operation is the first gesture or a second movement gesture entered by the user; and
adding the thumbnail to a playing queue card of the second electronic device when the thumbnail moves to a specified location on the second-side screen edge.

12. The method according to any one of claims 1 to 11, wherein after the displaying a thumbnail of target content on a display, the method further comprises:
in response to a sixth operation performed by the user, controlling the thumbnail to move to a third-side screen edge of the display on the display; and
when the thumbnail moves to a specified location on the third-side screen edge, canceling displaying the thumbnail on the display.

13. The method according to any one of claims 1 to 12, wherein the displaying, on the display, the target content obtained by the first electronic device from the second electronic device comprises:
receiving a virtual screen from the second electronic device, wherein the target content is drawn on the virtual screen; and
displaying the virtual screen on the display.

14. The method according to any one of claims 1 to 13, wherein before the first electronic device establishes a communication connection to the second electronic device, the method further comprises:
receiving a broadcast message from one or more electronic devices, wherein a broadcast message of at least one of the one or more electronic devices comprises a first field, and the first field is used to indicate that to-be-shared content exists in the electronic device; and
determining the second electronic device from the at least one electronic device in response to a seventh operation performed by the user.

15. The method according to any one of claims 1 to 14, wherein
a moment at which the gesture monitoring function of the first electronic device is enabled is earlier than or equal to a moment at which the first electronic device establishes a communication connection to the second electronic device; or
the first electronic device enables the gesture monitoring function of the first electronic device based on a notification message from the second electronic device, wherein the notification message is used to indicate to enable the gesture monitoring function of the first electronic device.

16. A cross-device content sharing method, applied to a second electronic device, wherein the second electronic device has a gesture recognition capability, and the method comprises:
displaying, by the second electronic device, a first interface;
detecting a second gesture of a user in the first interface when a gesture monitoring function of the second electronic device is enabled;
determining, in response to the second gesture, first content selected in the first interface by using the second gesture; and
providing target content in one or more pieces of content to a first electronic device that is communicatively connected to the second electronic device, wherein
the one or more pieces of content comprise at least the first content.

17. The method according to claim 16, wherein before the providing target content in one or more pieces of content to a first electronic device that is communicatively connected to the second electronic device, the method further comprises:
caching information about the one or more pieces of content, wherein the information about the one or more pieces of content is used to identify the one or more pieces of content; and
marking a state of the one or more pieces of content as a first state, wherein the first state is used to indicate that the content is to-be-shared content.

18. The method according to claim 16 or 17, wherein after the determining, in response to the second gesture, first content selected by using the second gesture, if no communication connection is established between the first electronic device and the second electronic device, the method further comprises:
sending a broadcast message, wherein the broadcast message comprises a first field, and the first field is used to indicate that to-be-shared content exists in the second electronic device.

19. The method according to any one of claims 16 to 18, wherein before the providing target content in one or more pieces of content to a first electronic device that is communicatively connected to the second electronic device, the method further comprises:
receiving a first request sent by the second electronic device, wherein the first request is used to request the target content.

20. The method according to any one of claims 16 to 18, wherein before the providing target content in one or more pieces of content to a first electronic device that is communicatively connected to the second electronic device, the method further comprises:
providing a thumbnail of the target content to the first electronic device, wherein the target content is all or some of the one or more pieces of content, or the target content is content with a latest capturing time point in the one or more pieces of content.

21. The method according to any one of claims 16 to 20, wherein before the providing target content in one or more pieces of content to a first electronic device that is communicatively connected to the second electronic device, the method further comprises:
sending a label of the one or more pieces of content to the first electronic device;
receiving a second request or a third request from the first electronic device, wherein the second request comprises a label of the target content, and the target content is the content with a latest capturing time point in the one or more pieces of content; and the third request comprises the label of the target content, and the target content is all or some of the one or more pieces of content; and
correspondingly, the target content is the content with a latest capturing time point in the one or more pieces of content.

22. The method according to any one of claims 16 to 18, wherein before the providing target content in one or more pieces of content to a first electronic device that is communicatively connected to the second electronic device, the method further comprises:
receiving a fourth request from the first electronic device, wherein the fourth request is used to request content with a latest capturing time point in the second electronic device, or the fourth request is used to request content captured by the second electronic device.

23. The method according to any one of claims 16 to 22, wherein before the providing target content in one or more pieces of content to a first electronic device that is communicatively connected to the second electronic device, the method further comprises:
receiving a fifth request from the first electronic device, wherein the fifth request is used to request a label of the content captured by the second electronic device;
sending the label of the one or more pieces of content to the first electronic device; and
receiving a sixth request from the first electronic device, wherein the sixth request comprises the label of the target content.

24. The method according to any one of claims 16 to 23, wherein there are a plurality of first electronic devices, the second electronic device and the plurality of first electronic devices belong to a same group, and the one or more pieces of content are visible to an electronic device in the group.

25. The method according to any one of claims 16 to 24, wherein the method further comprises:
determining a life cycle of the one or more pieces of content; and
when a life cycle of any one piece of content in the one or more pieces of content expires, deleting an identifier of the any one piece of content from a data sending queue corresponding to the any one piece of content.

26. The method according to any one of claims 16 to 25, wherein the providing target content in one or more pieces of content to a first electronic device that is communicatively connected to the second electronic device comprises:
providing a virtual screen to the first electronic device, wherein the target content is drawn on the virtual screen.

27. The method according to any one of claims 16 to 26, wherein when the gesture monitoring function is enabled, before the detecting the second gesture entered by the user in the first interface of the second electronic device, the method further comprises:
establishing a communication connection to the second electronic device, and enabling a gesture monitoring function of the first electronic device; or
before the providing target content in one or more pieces of content to a first electronic device that is communicatively connected to the second electronic device, the method further comprises:
sending a notification message to the first electronic device, wherein the notification message is used to indicate the first electronic device to enable a gesture monitoring function of the first electronic device; or
after the determining, in response to the second gesture, first content selected by using the second gesture, the method further comprises:
establishing a communication connection to the first electronic device.

28. An electronic device, wherein the electronic device has a gesture recognition capability, the electronic device comprises at least one processor and a display, and when the at least one processor executes computer program instructions stored in at least one memory, the electronic device is enabled to perform the method according to any one of claims 1 to 15, or the electronic device is enabled to perform the method according to any one of claims 16 to 27.

29. A computer-readable storage medium, comprising computer instructions, wherein when the computer instructions are run on an electronic device, the electronic device performs the method according to any one of claims 1 to 15 or the method according to any one of claims 16 to 27.

30. A computer program product, wherein when the computer program product is run on a computer, the computer performs the method according to any one of claims 1 to 15 or the method according to any one of claims 16 to 27.

31. A system, comprising a source electronic device and one or more target electronic devices, wherein the source electronic device is configured to perform the method according to any one of claims 1 to 15; and
the target electronic device is configured to perform the method according to any one of claims 16 to 27.
